# EUROPEAN PATENT APPLICATION

(11) **EP 4 841 989 A1**
(43) Date of publication of application: **18.11.2026**
(21) Application number: 25739109.4
(22) Date of filing: 09.01.2025
(51) Int. Cl.: H04N 19/91, H04N 19/94, G06N 3/0495, G06N 3/084, G06N 3/0464, G06N 3/0475, G06N 3/0985

(54) **IMAGE ENCODING/DECODING METHOD AND DEVICE, AND RECORDING MEDIUM**

(30) Priority: 09.01.2024 KR 20240003869
(71) Applicant: Electronics and Telecommunications Research Institute, Daejeon 34129 (KR); UNIVERSITY-INDUSTRY COOPERATION GROUP OF KYUNG HEE UNIVERSITY, Yongin-si, Gyeonggi-do 17104 (KR)
(72) Inventor: KIM, Dong Hyun, Daejeon 34053 (KR); KIM, Jong Ho, Daejeon 34070 (KR); LIM, Sung Chang, Daejeon 34189 (KR); LIM, Woong, Daejeon 34083 (KR); CHOI, Jin Soo, Daejeon 34067 (KR); KANG, Jung Won, Daejeon 34076 (KR); KIM, Hui Yong, Daejeon 34090 (KR); PARK, Su Yong, Goyang-si, Gyeonggi-do 10382 (KR); KIM, Yeong Woong, Suwon-si, Gyeonggi-do 19705 (KR); CHOI, Seung Mi, Suwon-si, Gyeonggi-do 16695 (KR); CHO, Hyun Dong, Bucheon-si, Gyeonggi-do 14538 (KR)
(74) Representative: Betten & Resch
(86) International application number: PCT/KR2025/000555
(87) International publication number: WO 2025/150949

(57) **Abstract**

An image decoding method is disclosed. The method comprises: decoding position information from a bitstream to identify a partial region to be decoded first within a data block that includes data for a target block and a remaining region excluding the partial region; reconstructing the partial region identified by the position information; reconstructing the remaining region using the reconstructed partial region; and generating a reconstructed block for the data block using the reconstructed partial region and the reconstructed remaining region.

## Description

### [Technical Field]

The present disclosure relates to a method, an apparatus and a recording medium for encoding/decoding an image. In one aspect, the present disclosure relates to a method in which a portion of information of a target block to be encoded is first encoded/decoded and the remaining information of the target block is then encoded/decoded based on the portion of information.

### [Background]

Through the continuous development of information and communication industry, services providing videos through broadcasting, the Internet, etc. have globally expanded.

Users demand videos having higher resolution and higher image quality. In order to satisfy the users' demands, image encoding/decoding technology suitable for such videos is required. Image encoding technology may generate compressed video by compressing video indicating images to have a smaller amount of data. Image decoding technology may generate reconstructed images using the compressed video.

In relation to image encoding/decoding technology, there are various techniques such as a partitioning technique, a prediction technique, a transform technique, a quantization technique, a filtering technique, and an entropy encoding/decoding technique. By introducing, modifying, enhancing, and combining such various techniques, video and images may be more effectively compressed, transmitted, and stored.

### [Summary of Invention]

### [Technical Problem]

The present disclosure provides a method for improving encoding efficiency, in which a portion of information of a target block to be encoded is first encoded/decoded and the remaining information of the target block is then encoded/decoded based on the portion of information.

### [Technical Solution]

One aspect of the present disclosure provides an image decoding method. The method comprises decoding position information from a bitstream to identify a partial region to be decoded first within a data block that includes data for a target block and a remaining region excluding the partial region; reconstructing the partial region identified by the position information; reconstructing the remaining region using the reconstructed partial region; and generating a reconstructed block for the data block using the reconstructed partial region and the reconstructed remaining region.

Another aspect of the present disclosure provides an image encoding method. The method comprises determining a partial region to be encoded first within a data block that includes data for a target block and a remaining region excluding the partial region; encoding position information indicating positions of the partial region and the remaining region; encoding the partial region to generate encoded data for the partial region; and reconstructing the partial region and encoding the remaining region using the reconstructed partial region.

Another aspect of the present disclosure provides a method for transmitting a bitstream encoded by the image encoding method.

Another aspect of the present disclosure provides a computer-readable recording medium storing a bitstream encoded by the image encoding method.

### [Brief Description of Drawings]

FIG. 1 illustrates a system for video coding according to an embodiment;
FIG. 2 illustrates an image partitioning structure according to an embodiment;
FIG. 3 illustrates the structure of intra-prediction according to an embodiment;
FIG. 4 illustrates the structure of inter-prediction for explaining an inter-prediction process according to an embodiment;
FIG. 5 illustrates the order of addition of spatial candidates to a candidate list according to an embodiment;
FIG. 6 illustrates a plurality of in-loop filters according to an example; and
FIG. 7 illustrates the structure of entropy encoding and entropy decoding according to an example.
FIG. 8 illustrates a still image encoding apparatus and decoding apparatus implemented based on a neural network.
FIG. 9 illustrates one example of a latent representation transformation neural network.
FIG. 10 illustrates one example of a latent representation reconstruction neural network.
FIG. 11 illustrates a encoding/decoding structure based on a neural network that employs a hidden vector probability model dependent on the input image.
FIGS. 12 and 13 illustrate a hyper-prior information transformation neural network and a hyper-prior information reconstruction neural network according to one embodiment of the present disclosure, respectively.
FIG. 14 illustrates a video encoding apparatus based on a neural network that uses a method for reducing temporal redundancy in the image space.
FIG. 15 is a block diagram of an encoding apparatus for encoding a target block in the image space according to one embodiment of the present disclosure.
FIG. 16 illustrates an example in which a target block is divided at predetermined intervals and four partial pieces of information are selected.
FIG. 17 illustrates a method of expressing a binary mask.
FIG. 18 illustrates predefined patterns of a binary mask.
FIG. 19 illustrates a process of generating a binary mask based on a transformer neural network.
FIG. 20 illustrates a process of classifying selected partial information and unselected remaining information for a target block.
FIG. 21 illustrates a partial information prediction unit according to one embodiment of the present disclosure.
FIG. 22 illustrates the operation of a masked autoencoder according to one embodiment of the present disclosure.
FIG. 23 illustrates a remaining information prediction unit according to one embodiment of the present disclosure.
FIG. 24 illustrates a method of generating positions of input information for a masked autoencoder within the remaining information prediction unit according to one embodiment of the present disclosure.
FIG. 25 illustrates a decoding apparatus for decoding a target block in the image space according to one embodiment of the present disclosure.
FIG. 26 illustrates an encoding apparatus for encoding a target block in the latent representation space according to one embodiment of the present disclosure.
FIG. 27 illustrates a hyper-prior information extraction and encoding unit according to one embodiment of the present disclosure.
FIG. 28 illustrates a hyper-prior information reconstruction neural network.
FIG. 29 illustrates a partial information encoding unit according to one embodiment of the present disclosure.
FIG. 30 illustrates a remaining information encoding unit according to one embodiment of the present disclosure.
FIG. 31 illustrates a decoding apparatus for decoding a target block in the latent representation space according to one embodiment of the present disclosure.
FIG. 32 illustrates a partial information decoding unit according to one embodiment of the present disclosure.
FIG. 33 illustrates a remaining information decoding unit according to one embodiment of the present disclosure.
FIG. 34 is a flowchart illustrating an image encoding method performed by the encoding apparatus according to one embodiment of the present disclosure.
FIG. 35 is a flowchart illustrating an image decoding method performed by the decoding apparatus according to one embodiment of the present disclosure.

### [Detailed Description]

Various changes may be applied to the present disclosure. Also, the present disclosure may have various embodiments. Specific embodiments will be described with reference to drawings and detailed descriptions.

Specific embodiments are not intended to limit the present disclosure to particular modes of practice, and it should be appreciated that all changes, equivalents, and substitutes that do not depart from the spirit or technical scope of the present disclosure are encompassed, as embodiments, in the present disclosure.

These embodiments are described so that those skilled in the art to which the present disclosure pertains can easily practice the embodiments. It should be noted that the various embodiments are different from each other, but are not necessarily mutually exclusive from each other. For example, shapes, structures, and characteristics described in relation to an embodiment may be applied to or implemented in other embodiments without departing from the spirit and scope of the present disclosure. Further, it should be understood that the locations or arrangement of individual components in an embodiment can be changed without departing from the spirit and scope of the present disclosure. Therefore, the accompanying detailed description is not intended to restrict the scope of the disclosure, and the scope of the exemplary embodiments is limited only by the accompanying claims, along with equivalents thereof, as long as they are appropriately described.

Detailed description of embodiments, which will be described later, may be made with reference to the drawings of the embodiments. Description made in the drawings or description shown in the drawings may be regarded as a part of the detailed description of the disclosure. In the drawings, similar reference numerals may be used to designate the same or similar functions in various aspects. The dependency relationship between components may not be limited to those shown in the drawings.

In embodiments, A singular expression may include a plural expression unless a description to the contrary is specifically pointed out in context, and may be limited to a plural expression. In other words, in embodiments, expression such as "at least one" and "one or more" may be replaced with the term "a plurality of". Terms such as '/', 'and/or', ' at least one among (of) ~', and 'one or more among (of)' described in relation to a plurality of items may refer to 1) one of a plurality of items, 2) some of the plurality of items, 3) a combination of some of the plurality of items, or 4) a combination of the plurality of items. Further, a plural expression may be replaced with a singular expression. Here, a plural number may represent an integer of 1, 2, 3, 4, or 5 or more.

In embodiments, terms related to numbers such as 'first' and 'second' may be used to explain various components. These terms are merely used to distinguish one component from another component, and are not intended to limit the components. For instance, a first component may be referred to as a second component without departing from the scope of the present disclosure. Similarly, the second component may also be referred to as the first component.

The fact that the first component transmits (or provides) information to the second component may mean that the first component directly transmits the information to the second component, or may also mean that the first component transmits information to the second component through a third component. Here, the information received (or acquired) by the second component may be information transmitted by the first component, or information generated by applying specific processing to the information transmitted by the first component.

The components in the embodiments may be independently illustrated to indicate different characteristic functions, and this illustration does not mean that each component corresponds to separated hardware or one software element. That is, the components in the embodiments may be divided and enumerated for convenience of description. The two or more components described in an embodiment may be regarded as one component. Furthermore, one component described in an embodiment may be divided into a plurality of components which divide and separately perform functions of the components. Embodiments into which these components are integrated and embodiments in which these components are separated may be included in the scope of the present disclosure without departing from the essentials of the present disclosure.

The terms used in embodiments are merely used to describe specific embodiments, and are not intended to limit the present disclosure. In embodiments, terms such as "include" or "have" are intended to indicate that features, numbers, steps, operations, components, parts, or combinations thereof described in embodiments are present. A possibility that other features, numbers, steps, operations, components, parts, or combinations thereof, which are not explicitly described in embodiments, will be present or added is not excluded by those terms. That is, description that a component "includes" a specific component in an embodiment does not exclude additional components other than the specific component, and means that the additional components may be included in the scope of the embodiment of the present disclosure or in the scope of the technical spirit of present disclosure.

Some of the components in the embodiments may be selective components other than the essential components of the present disclosure for performing essential functions. Such selective components may be used to improve performance. The embodiments may be implemented as a structure including only essential components required to implement the essentials of the embodiments, other than selective components. Such a structure is included in the scope of the embodiments.

Hereinafter, embodiments of the present disclosure are described in detail with reference to the accompanying drawings so that those having ordinary knowledge in the technical field to which the present disclosure pertains can easily practice the present disclosure. In the description of the present disclosure, detailed descriptions of known functions and configurations which are deemed to make the gist of the present disclosure obscure will be omitted. In the following description of the present disclosure, the same reference numerals are used to designate the same or similar components throughout the drawings and repeated descriptions of the same components will be omitted.

### Replacement between terms in embodiments

In the following description, terms enumerated in one line may be used to have the same meaning in embodiments, and may be used interchangeably with each other in embodiments.
- 'one or more' and 'at least one'
- 'two or more', 'a plurality of', 'multiple' , and 'multiple' (in embodiments, 'one or more' or 'at least one' may be further limited to 'two or more', 'a plurality of', or 'multiple')
- 'information' and 'signal'
- 'value', 'predefined value', 'specific value', 'threshold', 'threshold value', 'baseline value', and 'reference value'
- 'statistical value' and 'statistics value'
- 'indicator', 'index', 'index', 'flag', and 'information'
- 'encoder' and 'encoding apparatus'
- 'decoder' and 'decoding apparatus'
- 'entropy encoding', 'encoding' and 'encoding'
- 'entropy decoding', 'decoding' and 'decoding'
- 'coding' and 'encoding and/or decoding'
- 'video', 'moving picture', 'image', 'picture', 'picture', 'frame', and 'screen'
- 'reference picture' and 'reference image'
- 'Reference Picture List (RPL) and 'reference image list'
- 'original', 'input', and 'source'
- 'block', 'unit', and 'signal'
- 'square' and 'square shape'
- 'pixel', 'pixel', 'sample', and 'pel'
- 'region', 'area', 'part', and 'segment'
- 'partition', 'split', and 'divide'
- 'quad' and 'quaternary'
- 'luma component', 'luma', 'luminance component', 'luminance', and 'Y'
- 'chroma component', 'chroma', 'chrominance', 'chrominance component', 'Cb and Cr', 'Cb or Cr', 'Cb', 'Cr', 'U and V', 'U or V', 'U', or 'V'
- 'target', 'current' (e.g., a target block and a current block, or a target image and a current image)
- 'neighbor', 'neighboring', 'adjacent', 'neighbor/neighboring' (e.g., a neighbor block, an adjacent block, and a neighbor/neighboring block)
- 'collocated' and 'COL'
- 'reconstruction', 'reconstruction', and 'decoding'
- 'reconstructed', 'reconstructed', and 'decoded'
- 'difference', 'difference', 'difference', 'error', 'residual', and 'residual'
- Largest Coding Unit (LCU) and Coding Tree Unit (CTU)
- 'inter' and 'inter'
- 'inter prediction' 'inter prediction', and 'motion compensation'
- 'inter mode', 'inter prediction mode', 'inter mode', and 'inter prediction mode'
- 'motion vector', 'prediction motion vector', and 'Advanced Motion Vector Prediction (AMVP)'
- 'list' and 'candidate list'
- 'spatial candidate' and 'spatial merge candidate'
- 'temporal candidate' and 'temporal merge candidate'
- 'prediction motion vector candidate' and 'motion vector predictor'
- 'prediction method' and 'prediction mode'
- 'intra' and 'intra'
- 'intra prediction' and 'intra prediction'
- 'intra mode' and 'intra prediction mode'
   - 'dequantization' and 'scaling'
   - 'quantization matrix' and 'scaling list'
   - 'quantization matrix coefficient' and 'matrix coefficient'
   - 'transform coefficient level', 'quantized level', 'quantized coefficient', 'quantized transform coefficient', and 'quantized transform coefficient level'
   - 'dequantized coefficient' and 'dequantized transform coefficient'
   - 'scanning type' and 'scanning direction'
   - 'directional mode', 'angle mode', 'angular mode', and 'intra prediction mode'
   - '(mode) number of intra prediction mode', '(mode) index of intra prediction mode', '(mode) value of intra prediction mode', '(mode) angle of intra prediction mode', '(mode) direction of intra prediction mode', '(mode) number of intra prediction direction', '(mode) index of intra prediction direction', '(mode) value of intra prediction direction', and '(mode) angle of intra prediction direction'
   - 'merge mode' and 'motion merge mode'
   - 'Geometric Partitioning Mode (GPM)' and 'triangle partitioning mode'

In addition to the above-exemplified terms, the terms having the same meaning based on an ordinary knowledge in the art may be used interchangeably with each other in embodiments.

### Information and range of information values described in embodiments

In embodiments, information may include a constant, a flag, an index, a variable, a coding parameter, an element, a syntax element, motion information, an attribute, an entity, an object, data, etc. In other words, the term 'information' may be used interchangeably with 'data', 'flag', 'index', 'variable', 'element', 'syntax element', 'motion information', 'attribute', or 'entity'.

The information may have one of a plurality of values. The term 'n-th value' may refer to an n-th value among a plurality of values.

For example, a first value may represent '0' or logical false. A second value may represent '1' or (logical) true. Alternatively, a first value may represent '1' or (logical) true. A second value may represent '0' or (logical) false.

The flag may be information having any one value of '0' and '1'. In embodiments, the values of the flag, that is, '0' and '1' may be replaced with '1' and '0', respectively. For example, information indicating whether specific processing is performed or information indicating whether specific processing is applied may be regarded as the flag.

When a variable such as i or j is used to indicate a row, a column or an index, the variable may be an integer that is equal to or greater than 0 and less than or equal to n - 1. Alternatively, the variable may be an integer that is equal to or greater than 1 and less than or equal to n. Here, n may be the number of rows, the number of columns or the number of entities indicated by the index.

### Concept related to coding

Hereinafter, the concept related to coding will be described. The following descriptions may be applied to embodiments.

**Predefined value**: A predefined value may refer to a value used in common by an encoding apparatus and a decoding apparatus. For example, the predefined value may be limited to and construed as a fixed value. Alternatively, the predefined value may be a value shared between the encoding apparatus and the decoding apparatus through signaling. Alternatively, the predefined value may be a value derived by the encoding apparatus and the decoding apparatus through the same procedure so that the encoding apparatus and the decoding apparatus have a common value. Alternatively, the predefined value may be a common value which the encoding apparatus and the decoding apparatus have. Description of the predefined value may also be applied to predefined information. In the above descriptions, 'value' may be replaced with 'information'.
- The value derived through the same procedure in the encoding apparatus and the decoding apparatus may include a value derived through the same procedure with respect to the same value and/or the same information in the encoding apparatus and the decoding apparatus.
- The value derived through the same procedure in the encoding apparatus and the decoding apparatus may include a value derived using the same conditional statement with respect to the same value and/or the same information in the encoding apparatus and the decoding apparatus.
- The description for the predefined value may also be applied to the predefined information. In the above descriptions, the term "value" may be replaced with the term "information."

**Availability:** The fact that specific modes are available for a specific target may mean that a mode selected from among the specific modes is used for the specific target. Other modes belonging to the category of the specific modes may be unavailable modes. The unavailable modes may not be used for the specific target. Description of the specific mode may also be applied to other specific information. In the above descriptions, 'mode' may be replaced with 'information'.

**Adjacency**: The term 'direction' and the term 'second entity' for a 'first entity' may refer to the 'direction' of the first entity and the 'second entity' adjacent to the corner/surface of the first entity. For example, the term 'left-above block' for a 'target block' may be a block adjacent to the top-left of the target block. Here, the 'first entity' may be a target unit, a target block, or a target sample. The term 'direction' may refer to one of the directions corresponding to left-above, above, right-above, left, right, left-below, below, and right-below. The term 'second entity' may be a unit, a block, or a sample. Here, with respect to the directions corresponding to left-above, right-above, left-below, and right-below, the corner of the first entity and the corner of the second entity may be diagonally adjacent to each other. With respect to the directions corresponding to above, left, right, and below, one surface of the first entity and one surface of the second entity may come into contact with each other.
- For example, a block adjacent to the top-left of the target block may be a block adjacent to the top of a block adjacent to the left of the target block. - A block adjacent to the top-right of the target block may be a block adjacent to the right of a block adjacent to the top of the target block. - A block adjacent to the bottom-left of the target block may be a block adjacent to the bottom of a block adjacent to the left of the target block.

**Coding**: Coding may refer to the encoding and/or decoding of an image.

**Signals**: Signals may refer to information about an image, a unit or a block. A specific signal may refer to a specific image, a specific unit, or a specific block.

**Image**: An image may refer to one of pictures constituting video, and may also refer to video itself. For example, "image encoding and/or decoding" may refer to "video encoding and/or decoding", and may also refer to the "encoding and/or decoding of one of images constituting the video".
- An image may refer to the entirety of one picture, or may refer to a part of a picture, such as a block.

**Target image**: A target image may be an encoding target image that is the target of encoding and/or a decoding target image that is the target of decoding. Further, the target image may be an input image processed by an encoding apparatus or a reconstructed image that is processed by a decoding apparatus. The target image may be an image including a target block.

**Subpicture**: A picture may be partitioned into one or more subpictures.
- A subpicture may be a region having a square shape or a rectangular shape in a picture. Each subpicture may have one or more CTUs.
- One subpicture may include one or more slices and/or one or more tiles. For example, a subpicture may be composed of one or more slice rows and one or more slice columns. Alternatively, each subpicture may be composed of one or more tile rows and one or more tile columns.
- A subpicture may include one or more slices that collectively cover a rectangular region in a picture. Accordingly, the boundary of each subpicture may always be the boundary of a slice. Further, each vertical subpicture boundary may always be a vertical tile boundary.

**Slice**: A slice may include one or more tiles in a picture. A slice may be composed of one or more tile rows and one or more tile columns.

**Tile**: A tile may be a square region or a rectangular region in a picture. A tile may have one or more CTUs. A picture may be partitioned into one or more tile rows and one or more tile columns.

**CTU**: An image may be partitioned into a plurality of Coding Tree Units (CTUs).
- A CTU may include one Y Coding Tree Block (CTB) and at least one of Cb CTB and Cr CTB related to the Y CTB, and may include information about each CTB. The information may include syntax elements.
- Each CTU may be partitioned using one or more partitioning types so as to form a sub-unit such as a Coding Unit (CU), a Prediction Unit (PU), and a Transform Unit (TU). The one or more partitioning types may include Quad Tree (QT) partitioning, Binary Tree (BT) partitioning, and Ternary Tree (TT) partitioning. Further, each CTU may be partitioned using Multi-type Tree (MTT) partitioning that uses a combination of the plurality of partitioning types.

**CTB**: A CTB may refer to one of a Y CTB, a Cb CTB, and a Cr CTB.

**Unit**: A unit may be determined for specific processing in coding. A unit may be information about a specific region in an image. An image may be recursively partitioned into a plurality of portions to perform specific processing of coding. A unit may refer to a region to which the specific processing is applied and information about the region.
- A unit type may refer to specific processing applied to the unit. The specific processing may be applied to the unit depending on the unit type. A 'specific' unit may be the unit for processing named 'specific' in coding. For example, a unit may be at least one of an original unit, a CTU, a coding unit, a prediction unit, a residual unit, a reconstructed residual unit, a transform unit, and a reconstructed unit.
- A unit may include samples having a two-dimensional (2D) form or arrangement. In this regard, the term 'unit' may refer to a 'block'. For example, a block may be at least one of an original block, a CTB, a Coding block (CB), a Prediction Block (PB), a residual block, a reconstructed residual block, a Transform Block (TB), and a reconstructed block. For example, partitioning of a unit may refer to the partitioning of a block corresponding to the unit.
- A unit may include syntax elements. In other words, a block and syntax elements of the block may be collectively referred to as a 'unit'.
- A block may be an M x N array of samples. Here, M and N may refer to positive integer values, and a block may typically refer to a sample array in a 2D form. A current block may refer to an encoding target block that is the target to be encoded in encoding and a decoding target block that is the target to be decoded. Further, the current block may be at least one of a coding block, a prediction block, a residual block, a transform block, and a reconstructed block. A block may have various sizes and shapes. For example, a block shape may include one or more of a tetragon, a rectangle, a square, a rectangle having a horizontal length different from a vertical length (i.e., oblong), a trapezoid, a triangle, a right-angled triangle, and a pentagon. Here, the horizontal length and the vertical length of a rectangle may be different from each other. Further, a block shape may include other geometrical figures that can be represented in two dimensions. For example, a block shape may be a rectangle or a pentagon defined by excluding a right-angled triangular region from a rectangular region. Here, the right-angle vertex of the right-angled triangle may be one of vertexes of a rectangle. Further, a block shape may be a combination of two or more of the above-described shapes. Furthermore, a block shape may be the remaining shape obtained by excluding another shape from the above-described one shape.
- In embodiments, a rectangle may be limited to a non-square rectangle. In embodiments, when the shape of the specific target is described as a rectangular shape, this description may additionally mean that the horizontal length and the vertical length of the specific target are different from each other.
- In embodiments, a block may be limited to at least one of a vertically oriented block and a horizontally oriented block. The vertically oriented block may be a block having a vertical length greater than a horizontal length. The horizontally oriented block may be a block having a horizontal length greater than a vertical length.
- A unit may include a luma component block (i.e., a Y block), and two chroma component blocks (i.e., at least one of a Cb block, a Cr block or a combination thereof) and may include information about each block. The Information may include syntax elements.
- The information about a unit may include the type of unit, the size of the unit, the depth of the unit, the encoding order of the unit, the decoding order of the unit, etc.

**Target unit**: The target unit may be an encoding target unit that is the target to be encoded in encoding and a decoding target unit that is the target to be decoded. A target unit may be a specific region in a target picture to which one or more specific processes of coding are to be applied. A unit of a specific type may be generated by applying specific processing to the target unit. Alternatively, a target unit may refer to a unit having a specific type for specific processing of coding.

**Depth**: One block may be hierarchically partitioned into a plurality of subblocks while having depths depending on a tree structure. The plurality of subblocks generated from the partitioning of the block may be referred to as 'partitions'.
- The depth of a block may represent the level of a node corresponding to each block when blocks constituting an image are represented in a tree structure. Alternatively, the depth of a block may indicate the number of partitioning times applied until the block is determined. The depth of a block may be increased by 1 as the block is further partitioned.
- In a tree structure, it may be considered that a root node has the lowest level and a leaf node has the highest level. The root node may be the topmost node of the tree structure, and may correspond to an initial block that is not partitioned. The level of the root node may be 0 or 1. When the level of the root node is 0, a node having level 1 may refer to a block determined as the initial block is partitioned once. A node having level n may refer to a block determined as the initial block is partitioned n times. The leaf node may be the bottommost node of the tree structure. The leaf node may be a node that cannot be further partitioned. The depth of the leaf node may be a predefined maximum depth. For example, the maximum depth may be a positive integer such as 3. The root node may refer to a CTU. The leaf node may refer to at least one of CU, PU, and TU.
- The depth may have a type depending on the type of partitioning. QT depth may represent the depth in quad-tree partitioning. BT depth may represent the depth in binary-tree partitioning. TT depth may represent the depth in tertiary-tree partitioning.

**Sample**: A sample may be a base unit constituting a block. A sample may be composed of one or more bits. The bit depth may refer to the number of bits constituting the sample. A sample may be represented by values ranging from 0 to 2^{Bd}-1 depending on the bit depth.

**PU**: A PU may denote a base unit for processing related to prediction. For example, processing related to prediction may include inter prediction, intra prediction, Intra Block Copy (IBC) prediction, intra compensation, and motion compensation.
- One PU may be partitioned into a plurality of sub-PUs, each having a size smaller than that of the PU. Each of the plurality of sub-PUs may also be a base unit for processing related to prediction. In other words, a prediction unit partition generated from the partitioning of the prediction unit may also be a prediction unit.

**TU**: A TU may be a base unit for processing related to a residual block. Processing related to the residual block may include at least one of a transform, an inverse transform, quantization, dequantization, transform coefficient encoding, transform coefficient decoding, entropy encoding or entropy decoding, or a combination thereof. - One TU may be partitioned into a plurality of sub-transform units, each having a size smaller than that of the TU. Each of the plurality of sub-TUs may also be a base unit for processing related to a residual block. In other words, a transform unit partition generated from the partitioning of the transform unit may also be a transform unit.
- A transform may include one or more of a primary transform and a secondary transform, and an inverse transform may include one or more of a primary inverse transform and a secondary inverse transform.

**Parameter set**: A parameter set may correspond to header information in the structure of a bitstream.
- A parameter set may include at least one of a Video Parameter Set (VPS), a Sequence Parameter Set (SPS), a Picture Parameter Set (PPS), an Adaptation Parameter Set (APS) or a Decoding Parameter Set (DPS), or a combination thereof.
- Information signaled through the parameter set may be applied to pictures which refer to the parameter set. For example, information in a VPS may be applied to pictures which refer to the VPS. Information in an SPS may be applied to pictures which refer to the SPS. Information in a PPS may be applied to pictures which refer to the PPS. The parameter set may refer to an upper parameter set. For example, the PPS may refer to the SPS. The SPS may refer to the VPS.
- Also, the parameter set may include tile group information, slice header information, and tile header information. The tile group may refer to a group or a slice including a plurality of tiles.

**Most Probable Mode (MPM)**: An MPM may refer to an intra prediction mode having a strong possibility of being used for intra prediction of a target block.
- One or more different MPMs may be determined based on coding parameters related to the target block and the attributes of entities related to the target block.
- The one or more MPMs may be determined based on the intra prediction mode of a reference block. The reference block may include multiple reference blocks. The one or more different MPMs may be determined depending on which intra prediction modes have been used for one or more reference blocks. The reference blocks may include spatial neighbor blocks.

**MPM list**: An MPM list may be a list including one or more MPMs. The number of one or more MPMs in the MPM list may be predefined.

**MPM index**: An MPM index may indicate an MPM that is used for intra prediction of a target block among the one or more MPMs in the MPM list.

**MPM usage indicator**: An MPM usage indicator may indicate whether an MPM list is used for prediction of a target block.

**Prediction mode**: A prediction mode may be information indicating a prediction method for a target block, such as a mode to be used for intra prediction or a mode to be used for inter prediction. The prediction mode may indicate one of modes related to prediction, which will be described in embodiments. Further, a prediction mode may include at least one of an intra-mode, an inter mode, an intra block copy mode, or a combination thereof.

**Reference image list**: A reference image list may be a list including one or more reference images to be used for prediction of a target block.
- A reference image list may include multiple lists. The multiple reference image lists may include list 0 (List 0; L0), list 1 (List 1; L1), etc.
- For inter prediction of the target block, one or more reference image lists may be used. Among the names of information related to inter prediction, portions such as 'L0' and 'L1' may refer to reference image lists related to the information.

**Reference image (reference picture)**: A reference image (picture) may be an image referenced for the prediction of a target block. Alternatively, the reference picture may be an image including a reference block. The reference picture may include an image previous to a target image, the target image, and an image subsequent to the target image.

**Reference image index**: A reference image index may be an index indicating one reference image (picture) that is used for the prediction of the target block among one or more reference images in the reference image list.

**Reference block**: A reference block may be a block referenced for the encoding/decoding of a target block, such as prediction and filtering. For example, the reference block may include a reference sample referenced to derive a prediction sample, and may refer to a block which provides information used to decode the target block.

**Reference sample**: A reference sample may be a sample referenced for the encoding/decoding of a target block, such as prediction and filtering.

**Inter prediction indicator**: An inter prediction indicator may indicate the direction of inter prediction for a target block. Inter prediction may be one of unidirectional prediction and bidirectional prediction. Alternatively, an inter prediction indicator may denote the number of reference images used to generate a prediction block for the target block. Alternatively, an inter prediction indicator may denote the number of prediction blocks used for inter prediction for the target block. A reference direction may refer to an inter prediction indicator. For example, the inter prediction indicator may represent one of a unidirectional indicator and a bidirectional indicator. Alternatively, in an inter mode using only a reference image in reference image list L0, the inter prediction indicator may have '0', which is a first value, in an inter mode using only a reference image in reference image list L1, the inter prediction indicator may have '1', which is a second value, and in an inter mode using at least two of reference images in reference image list L0 and reference images in reference image list L1, the inter prediction indicator may have '2', which is a third value.

**Prediction list utilization flag**: A prediction list utilization flag of a specific reference image list may indicate whether at least one reference image in a specific reference image list is used to generate a prediction block for a target block. For example, the prediction list utilization flag of the specific reference image list equal to '0' may indicate that a prediction block is not generated using a reference image in the specific reference image list. The prediction list utilization flag of the specific reference image list equal to '1' may indicate that a prediction block is generated using a reference image in the specific reference image list.
- An inter prediction indicator may be derived using the prediction list utilization flag. On the other hand, the prediction list utilization flag may be derived using the inter prediction indicator. For example, the inter prediction indicator may be derived using prediction list utilization flags of a plurality of reference image lists. When the inter prediction indicator indicates that specific reference lists among a plurality of reference image lists are used, the prediction list utilization flags of the specific reference lists indicated by the inter prediction indicator, among the prediction list utilization flags of the plurality of reference image lists, may be set to '1', and the prediction list utilization flags of the remaining reference image lists, not indicated by the inter prediction indicator, may be set to '0'.

Reference direction: A reference direction may indicate a reference image list used for prediction of a target block. For example, a reference direction may indicate one or more of reference image list L0 and reference image list L1.
- The reference direction merely indicates a reference image list used for prediction of a target block, and may not represent that the directions of reference images in the reference image list are limited to a forward direction or a backward direction. In other words, each of reference image list L0 and reference image list L1 may include forward images and backward images. Here, the forward direction may indicate the direction from a target image to an image previous to the target image. Forward inter prediction may be inter prediction that uses the previous image of the target image as a reference image. The backward direction may indicate the direction from the target image to an image subsequent to the target image. Backward inter prediction may be inter prediction that uses the subsequent image of the target image as a reference image.
- The reference direction that is unidirectional may mean that one reference image list is used. The reference direction that is bidirectional may mean that two reference image lists are used. For example, the reference direction may indicate one of the usage of only reference image list L0, the usage of only reference image list L1, and the usage of two reference image lists. Further, the reference direction may be indicated by an inter prediction indicator.

**Picture Order Count (POC)**: The POC of images (pictures) may indicate the display order or output order of images (pictures).

**Motion information:** The motion information may be information used to specify a reference block. The motion information may include information used for inter prediction, such as a motion vector (MV), a reference image index, a reference image, an inter prediction indicator, and a prediction list utilization flag. Also, the motion information may include information used in a specific inter prediction mode, such as a MV candidate, a MV candidate index, a merge candidate, and a merge index. In addition, the motion information may include information related to a block vector described below. The information related to the block vector may refer to information including at least one of a block vector, a block vector candidate, and a block vector candidate index.
- For inter prediction for a target block, a plurality of pieces of motion information related to a plurality of reference image lists may be respectively used. The motion information of the specific reference image list may be used for prediction using the specific reference image list. A plurality of (intermediate) prediction blocks may be respectively derived by the plurality of pieces of motion information. A (final) prediction block for the target block may be generated using statistical values of the plurality of (intermediate) prediction blocks.

**MV**: A Motion Vector (MV) may be a two-dimensional (2D) vector used for inter prediction. A MV may refer to an offset between a target block and a reference block. Alternatively, a MV may indicate the difference between the location of the target block and the location of the reference block.
- For example, a MV may be represented in the form of (mvₓ, mv_{y}). mvₓ may indicate a horizontal component, and mv_{y} may indicate a vertical component.
- A zero vector may be (0, 0) MV.

**Block Vector (BV)**: A BV may be a two-dimensional (2D) vector used for intra block copy prediction. A BV may refer to an offset between a target block in a target image and a reference block in the target image. That is, a BV may indicate displacement between the target block and the reference block in the target image.
- For example, similar to a MV, a BV may be represented in the form of (bvₓ, bv_{y}). bvₓ may indicate a horizontal component, and bv_{y} may indicate a vertical component.
- A zero vector may be (0, 0) MV.

**Motion information candidate**: In specific prediction, the motion information of the target block may be selected from among motion information candidates determined by a specific scheme. The motion information candidates may refer to the motion information of a reference block, and may refer to a reference block itself having motion information. Here, the reference block may be a block determined by the specific scheme to select the motion information candidates.

**Candidate list**: A candidate list may be a list including one or more candidates. For example, the candidate list may include a motion information candidate list, a merge candidate list, a MV candidate list, an MPM list, etc. The candidate list may be generated by the encoding apparatus and the decoding apparatus in the same manner. In other words, the candidate list used by the encoding apparatus and the candidate list used by the decoding apparatus may be identical to each other, and the identical candidate list may be shared between the encoding apparatus and the decoding apparatus. The encoding apparatus may select a candidate to be used for processing the target block from among the candidates in the candidate list. An indicator indicating the selected candidate may be signaled from the encoding apparatus to the decoding apparatus. The decoding apparatus may specify a candidate to be used for processing the target block among the candidates in the candidate list by utilizing the indicator. Alternatively, the encoding apparatus and the decoding apparatus may specify a candidate to be used for processing the target block among the candidates in the candidates list based on the same rule.

**Motion information candidate list**: A motion information candidate list may refer to a list constructed using one or more motion information candidates.

**Motion information candidate index**: A motion information candidate index may be an identifier or an indicator indicating a motion information candidate used for prediction of a target block among motion information candidates in the motion information candidate list.
- In a specific inter prediction mode, motion information of an additional reconstructed block may be used to derive the motion information of the target block. The additional block may be a neighbor block. In the specific inter prediction mode, the motion information itself of the target block may not be individually signaled, and additional information used to derive the motion information of the target block based on the motion information of the additional reconstructed block may be signaled. Here, the additional information may include information, such as a motion information candidate index, indicating a block, the motion information of which is used to derive the motion information of the target block, among additional reconstructed blocks.
- For example, the inter prediction mode may include an AMVP mode, a merge mode, a skip mode, etc. The motion information candidate index may be a merge index or an MV candidate index.
- In embodiments, a MV may be part of the motion information. In embodiments, information related to motion information, such as a motion information candidate, a motion information candidate list, and a motion information candidate index, may be replaced with information related to a MV, such as a MV candidate, a MV candidate list, and a MV candidate index, and description of the motion information may also be applied to the MV.

**Merge**: The term 'Merge' may refer to merging of pieces of motion information of a plurality of blocks and may refer to application of motion information of one additional block, together with the motion information, to the target block. In other words, a merge mode may refer to a mode in which the motion information of the target block is derived from the motion information of a neighbor block.

**Merge candidate**: A merge candidate may refer to a specific (reconstructed) block used to merge the target block, and may refer to the motion information of the specific block. Alternatively, a merge candidate may include the motion information of the specific block.
- Merge candidates for the target block may include a spatial merge candidate, a temporal merge candidate, a history-based candidate, an average candidate based on the average of two merge candidates, a zero merge candidate, etc.

**Merge candidate list**: A merge candidate list may be a list constructed using one or more merge candidates.

**Merge index**: A merge index may be an indicator indicating a merge candidate used for prediction of a target block among merge candidates in a merge candidate list. The motion information of a merge candidate indicated by the merge index among merge candidates in the merge candidate list may be used as the motion information of the target block.

**Neighbor block:** A neighbor block may be a block adjacent to a target block. A neighbor block may include a spatial neighbor block and a temporal neighbor block. A neighbor block may refer to a reconstructed neighbor block in a reference image. The neighboring block is not necessarily required to be adjacent to the target block.

**Spatial neighbor block**: A spatial neighbor block may be a block spatially adjacent to a target block.
- The target block and the spatial neighbor block may be included in a target image.
- A spatial neighbor block may include a block, at least a part of the boundary of which comes into contact with at least a part of the boundary of the target block. Alternatively, a spatial neighbor block may include a block to which a distance from the target block is less than or equal to a specific value.
- A spatial neighbor block may include a block diagonally adjacent to the vertex of the target block.
- A spatial neighbor block may include a left-above block adjacent to the top-left of the target block, an above block adjacent to the top of the target block, a right-above block adjacent to the top-right of the target block, a left block adjacent to the left of the target block, a right block adjacent to the right of the target block, a left-below block adjacent to the bottom-left of the target block, a below block adjacent to the bottom of the target block, and a right-below block adjacent to the bottom-right of the target block.

**Temporal neighbor block**: A temporal neighbor block may be a block temporally adjacent to the target block.
- A temporal neighbor block may include a collocated block (COL block). A COL block may be a block in a reconstructed image stored in a reference image (picture) buffer. A collocated image (collocated picture: COL picture) may refer to a picture including a COL block. A COL picture may be an image included in the reference image list.
- A COL block may be determined based on the location of the target block in the target image. The fact that two blocks are 'temporally adjacent to each other' may mean that the locations of the two blocks satisfy a specific condition.
- The location of the COL block in the COL picture may be identical to that of the target block in the target image. Alternatively, the location of the COL block in the COL picture may correspond to that of the target block in the target image. Here, the locations of blocks corresponding to each other may mean that the regions of the blocks are identical to each other, may mean that the region of one block is included in the region of an additional block, and may mean that one block occupies a specific location of the additional block.
- For example, the location of the COL block in the COL picture may be identical to that of the target block in the target image. Alternatively, the COL block may be a block including a COL sample in a COL picture. The COL sample may be a sample having coordinates identical to those of a specific sample in the target block.
- A temporal neighbor block may be a block temporally adjacent to the spatial neighbor block of the target block.

**Neighbor sample:** The neighbor sample may refer to a sample within a neighboring block. The neighbor sample may include a predicted sample, a reconstructed sample, a residual sample, and a decoded sample.

S**earch range:** A search range may refer to a 2D range in which a search for a MV is conducted during inter prediction. For example, when an optimal MV is to be derived to process a target block, an optimal MV may be selected from among MVs indicating the inside of the search range.

**Transform coefficient**: A transform coefficient may be a coefficient generated by performing a transform on a residual block. Alternatively, a transform coefficient may be a coefficient value generated by performing dequantization on a quantized level.

**Quantized level**: A quantized level may be an integer quantity used as input for dequantization.

**Quantization**: Quantization may be a process of generating a quantized level for a transform coefficient. The quantized level may be generated by applying quantization to the transform coefficient. A transform may also be regarded as a part of quantization.

**Dequantization**: Dequantization may be a process of multiplying a factor by a quantized level. A (reconstructed) transform coefficient may be generated by applying dequantization to a quantized level.

**Quantization Parameter (QP)**: A QP may refer to a factor used when a quantized level for a transform coefficient is generated. Further, a QP may refer to a factor used when a (reconstructed) transform coefficient for a quantized level in dequantization is generated. Alternatively, a QP may be a value mapped to a quantization step size.

**Delta QP**: A delta QP may be a difference between a QP predicted through specific processing and the QP of a target block. In other words, the QP of the target block may be the sum of the predicted QP and the delta QP.

**Quantization matrix**: A quantization matrix may be a matrix used in quantization or dequantization so as to improve the subjective quality or objective quality of an image.

**Quantization matrix coefficient**: A quantization matrix coefficient may be each element in a quantization matrix.

**Scan**: Scan may refer to a method of arranging values in a block or a matrix. The values may be coefficients. For example, a scan may refer to the arrangement of values, arranged in a 2D form, in a 1D form, and refer to the rearrangement of values, arranged in a 1D form, in a 2D form. An inverse scan may refer to arrangement (or rearrangement) opposite to the arrangement performed in a scan.

**Non-zero transform coefficient**: A non-zero transform coefficient may refer to a transform coefficient having a non-zero value, or a quantized level having a non-zero value.

**Bitstream**: A bitstream may refer to a stream/sequence of bits including encoded information generated by encoding an image. A bitstream may include information depending on a specific syntax element. For example, the information may include syntax elements. The encoding apparatus may generate a bitstream including pieces of information depending on the specific syntax element. The decoding apparatus may acquire the pieces of information from the bitstream depending on the specific syntax element.

**Signaling**: Signaling of information may refer to the transmission of information from the encoding apparatus to the decoding apparatus through a bitstream. For example, the information may include syntax elements. Alternatively, signaling may refer to a process in which the encoding apparatus includes information in a bitstream. The information signaled by the encoding apparatus may be used by the decoding apparatus. In signaling, the bitstream may be transmitted over a network, and may be included in a storage/recording medium. In embodiments, description indicating that information is signaled may include 1) the determination and generation of information by the encoding apparatus to signal the information, 2) the generation of encoded information by the encoding apparatus by performing encoding on the information, 3) the transmission of (encoded) information from the encoding apparatus to the decoding apparatus through a bitstream, 4) the acquirement of the information by the decoding apparatus by performing decoding on the encoded information, and 5) the determination and generation of information by the decoding apparatus through the signaling of the information.
- The encoding apparatus may generate encoded information by performing encoding on the information. The encoded information may be signaled through the bitstream. The decoding apparatus may acquire the information by performing decoding on the encoded information.
- Signaling of information for specific targets may mean that pieces of information are respectively used for the specific targets, and processes indicated by the pieces of information are respectively applied to the specific targets. For example, signaling of information at a specific unit level may mean that the corresponding information is used/processed for each specific unit.
- Signaled information may include one or more pieces of sub-information. Signaling of specific information may mean that each of one or more pieces of sub-information included in the specific information is signaled.

**Selective signaling**: - Signaling of information may be selectively performed. Selective signaling of the information may refer to a process in which the encoding apparatus selectively includes information in a bitstream (depending on a specific condition). Selective signaling of the information may refer to a process in which the decoding apparatus selectively acquires information from the bitstream (depending on a specific condition).

**Skipping of signaling**: - Signaling of information may be skipped. Skipping of information signaling may refer to a process in which the encoding apparatus does not include information in a bitstream (depending on a specific condition). Skipping of information signaling may refer to a process in which the decoding apparatus does not acquire information from a bitstream (depending on a specific condition). The decoding apparatus may derive the information, signaling of which is skipped, by utilizing other pieces of information in embodiments.

**Symbol**: A symbol may refer to at least one piece of information of a target unit, such as the syntax element, the coding parameter, the quantized level, and the transform coefficient of a target unit or a target block. Also, a symbol may refer to the target of entropy encoding or the result of entropy decoding.

**Entropy encoding**: Entropy encoding may be a technique of allocating fewer bits to a more frequently occurring symbol and allocate more bits to a less frequently occurring symbol. As symbols are represented by means of this allocation, the size of a bitstream indicating the symbols may be reduced.
- Entropy encoding may be implemented using any of methods such as Variable Length Coding (VLC) and Context-Adaptive Binary Arithmetic Coding (CABAC). For example, entropy encoding may be performed using a variable length table in variable length coding (VLC). For example, in CABAC, a binarization method for symbols and a probability model for symbols/bins may be derived to perform entropy encoding, and arithmetic encoding using context may be performed.

**Entropy decoding**: In entropy decoding, processes performed in entropy encoding may be reversely performed. Symbols may be generated through entropy decoding performed on a bitstream.

**Parsing**: Parsing may refer to the determination of the value of a syntax element by performing entropy decoding on the encoded information of the bitstream. Alternatively, parsing may refer to entropy decoding itself.

**Statistical value**: The values of pieces of information related to specific entity (entities) described in embodiments may be used as the input of a specific operation. The statistical value may be a value derived by a specific operation on values related to such specific entity (entities). For example, the statistical value of pieces of specific information may indicate one or more of values generated by the average, the weighted average (or weighted mean), the weighted sum, the minimum value, the maximum value, the mode value, the median value, the interpolated value, the sum of product, and the product of sum of the values of the pieces of specific information. Furthermore, information in an embodiment, which has a specific value determined by an operation (computation), such as a constant, a variable, and a coding parameter, may have specific statistical values according to the embodiment.

### Coding parameters

In embodiments, coding parameters may be information required for coding. The coding parameters may include information signaled from the encoding apparatus to the decoding apparatus, may include information calculated/derived during the processing of coding described in embodiments, and may include information used to process coding described in embodiments.

In embodiments, the coding parameters may include one or more of a size of the CTU, size of the unit, form of the unit, shape of the unit, depth of the unit, minimum unit size, maximum unit size, maximum unit depth, minimum unit depth, partition information of the unit, Quad-Tree (QT) partition information, Binary Tree (BT) partition information, partitioning direction of BT partition, partitioning form of BT partition, Ternary Tree (TT) partition information, partitioning direction of TT partition, partitioning form of TT partition, Multi Type Tree (MTT) partition information, combination of MTT partitions, partitioning direction of MTT partition, partitioning form of MTT partition, prediction mode, intra prediction mode, luma intra prediction mode, chroma intra prediction mode, intra-partition information, inter-partition information, coding block partition information, prediction block partition information, transform block partition information, reference sample line index, reference sample filtering method, reference sample filter tap, reference sample filter coefficients, prediction block filtering method, prediction block filter tap, prediction block filter coefficients, prediction block boundary filtering method, prediction block boundary filter tap, prediction block boundary filter coefficients, inter prediction mode, motion information, Motion Vector (MV), Motion Vector Difference (MVD), MVD resolution, MV magnitude, MV representation accuracy, reference image list, reference image, reference image index, inter prediction direction, inter prediction indicator, prediction list utilization flag, Picture Order Count (POC), MV candidate, MV candidate index, MV candidate list, Advanced Motion Vector Prediction (AMVP) mode usage information, merge candidate, merge index, merge candidate list, merge mode usage information, correction information for motion information, skip mode usage information, intra-block copy mode usage information, Block Vector (BV), Block Vector Difference (BVD), BVD resolution, BV magnitude, BV representation accuracy, BV candidate, BV candidate index, BV candidate list, filter tap of interpolation filter, filter coefficients of interpolation filter, transform type, transform size, transform selection information, primary transform usage information, secondary transform usage information, primary transform selection information, secondary transform selection information, residual block presence information, coded block pattern, coded block flag, Quantization Parameter (QP), delta QP, quantization matrix, deblocking filter usage information, coefficients of a deblocking filter, filter tap of the deblocking filter, deblocking filter strength, deblocking filter shape/form, adaptive sample offset usage information, adaptive sample offset value, adaptive sample offset category, adaptive sample offset type, adaptive loop filter usage information, coefficients of the adaptive loop filter, filter tap of the adaptive loop filter, adaptive loop filter shape/form, binarization/debinarization method, context model, context model decision method, context model update method, regular mode usage information, bypass mode usage information, significant coefficient flag, last significant coefficient flag, coefficient group unit coding flag, last significant coefficient location, flag indicating whether a coefficient value is greater than 1, flag indicating whether the coefficient value is greater than 2, flag indicating whether the coefficient value is greater than 3, remaining coefficient value information, sign information, context bin, bypass bin, reconstructed sample, reconstructed luma sample, reconstructed chroma sample, residual sample, residual luma sample, residual chroma sample, transform coefficient, luma transform coefficient, chroma transform coefficient, transform coefficient level, luma transform coefficient level, chroma transform coefficient level, transform coefficient level scanning method, quantized level, quantized luma level, quantized chroma level, size of MV search range on the decoding apparatus side, shape of the MV search range on the decoding apparatus side, number of MV search iterations on the decoding apparatus side, picture type, slice identification information, slice type, slice partition information, tile group identification information, tile group type, tile group partition information, tile identification information, tile type, tile partition information, bit depth, input sample bit depth, reconstructed sample bit depth, residual sample bit depth, transform coefficient bit depth, quantized level bit depth, mapping availability information, luma signal information, chroma signal information, color space of the target block, color space of the residual block, and temporal layer information.

Further, the coding parameters may further include 1) the value of information that can be included in the coding parameters, 2) a combination of multiple pieces of information that can be included in the coding parameters, 3) the statistical value of information that can be included in the coding parameters, 4) information related to the coding parameters, 5) information used to calculate/derive the coding parameters, and 6) information calculated/derived using the coding parameters.

In embodiments, "X usage information" may be information indicating whether "X is used/applied/performed". Alternatively, "X usage information" may be information indicating whether "X is available". For example, "specific mode usage information" may be information indicating whether a specific mode is used. The mode information may indicate a mode used for a target block among the modes described in embodiments. In embodiments, the specific mode usage information may be replaced with mode information, and description of the specific mode usage information may also be applied to the mode information. "X usage information" and "X indicator" may be used interchangeably with each other.

In embodiments, coding parameters and syntax elements may correspond to each other. For example, a syntax element according to an embodiment may be used as a coding parameter, and the coding parameter may be signaled as a syntax element.

In embodiments, "X presence information" may be regarded as "information indicating whether "X is present", or "information indicating whether information indicative of X is present in a bitstream".

In embodiments, "X selection information" may be information indicating one of candidates or methods for X. "X selection information" may be regarded as "X index".

In embodiments, the partitioning form of a specific tree may indicate one of symmetric partitioning and asymmetric partitioning, and may indicate one of QT, BT, TT, and non-partitioning. The partitioning direction of the specific tree may indicate one of a horizontal direction and a vertical direction.

In embodiments, when a coding parameter has one of a plurality of values, the "coding parameter" may be replaced with "information indicating whether the coding parameter has a specific value among a plurality of values available for the coding parameter".

In embodiments, when the coding parameter has one of a plurality of values, the "coding parameter" may be replaced with "information indicating whether the coding parameter indicates a specific target among a plurality of targets".

In embodiments, the coding parameter may include at least one of a type of a target picture and a type of a target slice. The type of the target picture may be one of an I-picture, a B-picture, and a P-picture. The type of the target slice may be one of an I-slice, a B-slice, and a P-slice.
- When a target image to be encoded is an I-slice, the target image may be encoded without inter prediction that references other pictures, using data within the image itself. For example, the I-slice may be encoded using only intra prediction.
- When the target image is a P-slice, the target image may be encoded through inter prediction using only reference slices existing in one direction. Herein, the one direction may be a forward direction or a backward direction.

When the target image is a B-slice, the target image may be encoded through inter prediction using reference slices existing in both directions, or through inter prediction using reference slices existing in one of the forward direction and the backward direction. Herein, the both directions may include the forward and backward directions.

The P-slice and the B-slice, which are encoded and/or decoded using reference slices, may be regarded as images in which inter prediction is allowed.

### System for video coding

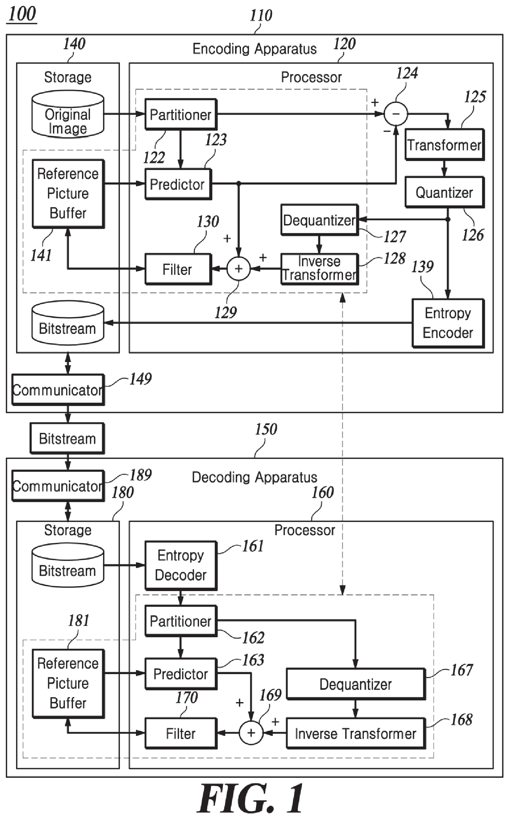

FIG. 1 illustrates a system for video coding according to an embodiment.

A system 100 may include at least one of an encoding apparatus 110 or a decoding apparatus 150, or a combination thereof.

Each of the encoding apparatus 110 and the decoding apparatus 150 may be a computer or an electronic apparatus.

### Structure of encoding apparatus

The encoding apparatus 110 may include a processor 120, storage 140, and a communicator 149.

The processor 120, the storage 140, and the communicator 149 may be connected to each other through a bus.

The processor 120 may be a semiconductor device, such as a Central Processing Unit (CPU), which executes instructions or computer-executable codes. The processor 120 may be at least one hardware processor.

In embodiments, the processor 120 may perform the generation and processing of information that is input to or output from the encoding apparatus 110 or that is used in the encoding apparatus 110, and may perform comparison, determination, etc. related to the information.

The processor 120 may include a plurality of components. The plurality of components may include a partitioner 122, a subtractor 124, a transformer 125, a quantizer 126, a dequantizer 127, an inverse transformer 128, an adder 129, a filter 130, and an entropy encoder 139.

At least some of the above-described components may be program modules. The program modules may be included in the encoding apparatus 110 in the form of an operating system, an application, and other program modules. The program modules may be instructions or computer-executable codes that are stored in the storage 140 and are executed by the processor 120.

The storage 140 may include various types of volatile storage media and nonvolatile storage media. For example, the storage 140 may include memory such as Read Only Memory (ROM) and Random Access Memory (RAM).

The storage 140 may store instructions and computer-executable codes that are used for the operation of the encoding apparatus 110, and may store the information and the bitstream, described in embodiments. The storage 140 may include a reference picture buffer 141.

The communicator 149 may perform functions related to the communication of information in the encoding apparatus 110. For example, the communicator 149 may transmit the bitstream to the decoding apparatus 150.

Among the names of the components of the encoding apparatus 110, "-er" or "-or" may be replaced with "- unit". The storage 140 may be designated as a storage unit.

### The operation of encoding apparatus

The encoding apparatus 110 may sequentially encode one or more images (pictures) of video.

The storage 140 may store an original image. The original image may be used as a target image in the encoding apparatus 110.

The processor 120 may generate a bitstream including encoded information by performing encoding on the target image, and may store the generated bitstream in the storage 140. The generated bitstream may be stored in a computer-readable storage medium, and may be transmitted to the communicator 189 of the decoding apparatus 150 by the communicator 149 through a wired and/or wireless transmission medium.

The partitioner 122 may determine a target block by partitioning the target image.

The predictor 123 may determine the prediction mode of the target block. The predictor 123 may generate a prediction block for the target block by performing prediction corresponding to the prediction mode.

The prediction mode of the target block may be one of available prediction modes. For example, the available prediction modes may include intra prediction, inter prediction, and IBC prediction.

For example, when the prediction mode corresponds to intra prediction, the predictor 123 may generate a prediction block for the target block by performing intra prediction for the target block.

For example, when the prediction mode corresponds to inter prediction, the predictor 123 may generate a prediction block for the target block by performing inter prediction for the target block.

For example, when the prediction mode corresponds to IBC, the predictor 123 may generate a prediction block for the target block by performing IBC for the target block.

The subtractor 124 may generate a residual block of the target block. The residual block may be the difference between an original block and the prediction block. The original block may be a region indicated by the target block in the original image. Alternatively, the residual block may refer to a block generated by applying one or more of a transform and quantization to the difference between the original block and the prediction block.

The transformer 125 may generate a transform coefficient by performing a transform on the residual block.

The transformer 125 may perform a transform using one of a plurality of transform methods.

For example, the plurality of transform methods may include a Discrete Cosine Transform (DCT), a Discrete Sine Transform (DST), a Karhunen-Loeve Transform (KLT), a transform based on each transform, etc.

A transform skip mode may be a mode in which a reconstructed block is generated using both a reconstructed residual block, on which a transform and an inverse transform are not performed, and a prediction block. When the transform skip mode is applied to the target block, a transform and an inverse transform on the target block may be skipped, and only quantization and inverse quantization (dequantization) on the target block may be performed.

The quantizer 126 may generate a quantized level by applying quantization that uses a quantization parameter to the transform coefficient. In embodiments, the quantized level may also be referred to as a 'transform coefficient'.

The entropy encoder 139 may generate encoded information by performing entropy encoding based on a probability distribution on information for image decoding. The bitstream may include the encoded information.

The information for image decoding may include the quantized level calculated by the quantizer 126, syntax elements, etc.

The probability distribution may be determined based on the quantized level and coding parameters.

The entropy encoder 139 may change quantized levels, having a 2D block form, to a 1D vector form using scanning so as to perform encoding on the quantized levels. In scanning, which one of a top-right diagonal scan, a vertical scan, and a horizontal scan is to be used may be determined based on coding parameters such as the size of a block and the intra prediction mode of the block.

When encoding is performed on the target image/block, the predictor 123 uses reference images/blocks to perform prediction. The encoded target image/block may be used as a reference image/block for another image/block that is subsequently processed. Therefore, the processor 120 may perform reconstruction on the encoded target block, and may store a reconstructed image including a reconstructed target block generated through reconstruction, as a reference image, in the reference picture buffer 141. Dequantization and an inverse transform may be performed on the encoded target block to perform reconstruction.

The dequantizer 127 may generate a dequantized transform coefficient by performing dequantization on the quantized levels.

The inverse transformer 128 may generate a dequantized and inversely transformed coefficient by performing an inverse transform on the dequantized transform coefficient. In embodiments, the dequantized and/or inversely transformed coefficient may refer to a coefficient to which at least one of dequantization or inverse transform, or a combination thereof is applied. The dequantized and inversely transformed coefficient may be a reconstructed residual block.

The adder 129 may generate a reconstructed block by adding the prediction block and the reconstructed residual block to each other.

The reconstructed block may be subjected to the filter 130. The filter 130 may be configured to apply one or more of a plurality of filters to the target. Each of the plurality of filters may be an in-loop filter. The target may be a reconstructed sample, a reconstructed block or a reconstructed image.

The reference picture buffer 141 may store the reconstructed block/image provided from the filter 130. The reconstructed image may be an image including the reconstructed block. Alternatively, the reconstructed image may be an image composed of reconstructed blocks.

The reference picture buffer 141 may provide the stored reconstructed image, as a reference image, to the predictor 123. From the standpoint of storage of the decoded (i.e., reconstructed) image (picture), the reference picture buffer 141 may also be referred to as a 'Decoded Picture Buffer (DPB)'.

### Structure of decoding apparatus

The decoding apparatus 150 may include a processor 160, storage 180, and a communicator 189.

Descriptions of the processor 120, the storage 140, and the communicator 149 related to the encoding apparatus 110 may also be applied to the processor 160, the storage 180, and the communicator 189 related to the decoding apparatus 150. Repetitive descriptions will be omitted here.

The processor 160 may include a plurality of components. The plurality of components may include an entropy decoder 161, a partitioner 162, a predictor 163, a dequantizer 167, an inverse transformer 168, an adder 169, and a filter 170.

The storage 180 may include a reference picture buffer 181.

The communicator 189 may perform functions related to the communication of information in the decoding apparatus 150. For example, the communicator 189 may receive a bitstream from the encoding apparatus 110.

Among the names of the components of the decoding apparatus 150, "-er" or "-or" may be replaced with "- unit". The storage 180 may be designated as a storage unit.

### The operation of decoding apparatus

The communicator 149 of the encoding apparatus 110 may transmit a bitstream generated by the encoding apparatus 110 to the decoding apparatus 150. Alternatively, a computer-readable storage medium which stores the bitstream may transmit the bitstream generated by the encoding apparatus 110 to the decoding apparatus 150.

The communicator 189 may receive the bitstream from the encoding apparatus 110 through a wired/wireless transmission medium. The received bitstream may be stored in the storage 180.

The processor 160 may acquire the bitstream from the storage 180 or the computer-readable storage medium.

The bitstream may include encoded information.

The entropy decoder 161 may generate information for image decoding by performing entropy decoding based on a probability distribution on the encoded information of the bitstream.

The information for image decoding may include quantized levels, syntax elements, etc.

The entropy decoder 161 may change quantized levels, having a 1D vector form, to a 2D block form using scanning so as to perform decoding on the quantized levels. In scanning, which one of a top-right diagonal scan, a vertical scan, and a horizontal scan is to be used may be determined based on coding parameters such as the size of a block and the intra prediction mode of the block.

The entropy decoder 161 may provide the syntax elements to other components of the processor 160 such as the partitioner 162.

### Common description based on relationships between components of encoding apparatus and components of decoding apparatus

The decoding apparatus 150 performs decoding using the bitstream generated by the encoding apparatus 110. The encoding apparatus 110 may perform encoding on a target block using a reconstructed image derived in the decoding apparatus 150, rather than an original image that is not provided to the decoding apparatus 150. Therefore, the encoding apparatus 110 and the decoding apparatus 150 need to be able to generate a reconstructed block/image using the same manner. In this regard, descriptions of the partitioner 122, the predictor 123, the dequantizer 127, the inverse transformer 128, the adder 129, the filter 130 and the reference picture buffer 141 of the encoding apparatus 110 disclosed in the embodiments may be respectively applied to the partitioner 162, the predictor 163, the dequantizer 167, the inverse transformer 168, the adder 169, the filter 170 and the reference picture buffer 181 of the decoding apparatus 150. Repetitive descriptions will be omitted here.

Furthermore, each of the partitioner 122, the predictor 123, the dequantizer 127, the inverse transformer 128, the adder 129, and the filter 130 of the encoding apparatus 110 may generate information about syntax elements for specifying the processing of the target. Furthermore, each of the partitioner 162, the predictor 163, the dequantizer 167, the inverse transformer 168, the adder 169, and the filter 170 of the decoding apparatus 150 may perform processing on the target (identical to that performed by the encoding apparatus 110) using the information about syntax elements.

As described above, the corresponding components of the encoding apparatus 110 and the decoding apparatus 150 may perform the same or corresponding functions. In embodiments, the processor may refer to the processor 120 of the encoding apparatus 110 and/or the processor 160 of the decoding apparatus 150. For example, in functions related to prediction, the processor may refer to the predictor 123, the subtractor 124, and the adder 129, and may refer to the predictor 163 and the adder 169. In functions related to a transform, the processor may refer to the transformer 125 and the inverse transformer 128, and may refer to the inverse transformer 168. In functions related to quantization, the processor may refer to the quantizer 126 and the dequantizer 127, and may refer to the dequantizer 167. In functions related to entropy encoding/decoding, the processor may refer to the entropy encoder 139 and/or the entropy decoder 161. In functions related to filtering, the processor may refer to the filter 130 and/or the filter 170. The storage may refer to the storage 140 of the encoding apparatus 110 and/or the storage 180 of the decoding apparatus 150. The reference picture buffer may refer to the reference picture buffer 141 of the encoding apparatus 110 and/or the reference picture buffer 181 of the decoding apparatus 150. The communicator may refer to the communicator 149 of the encoding apparatus 110 and/or the communicator 189 of the decoding apparatus 150.

### Partitioning of units constituting image

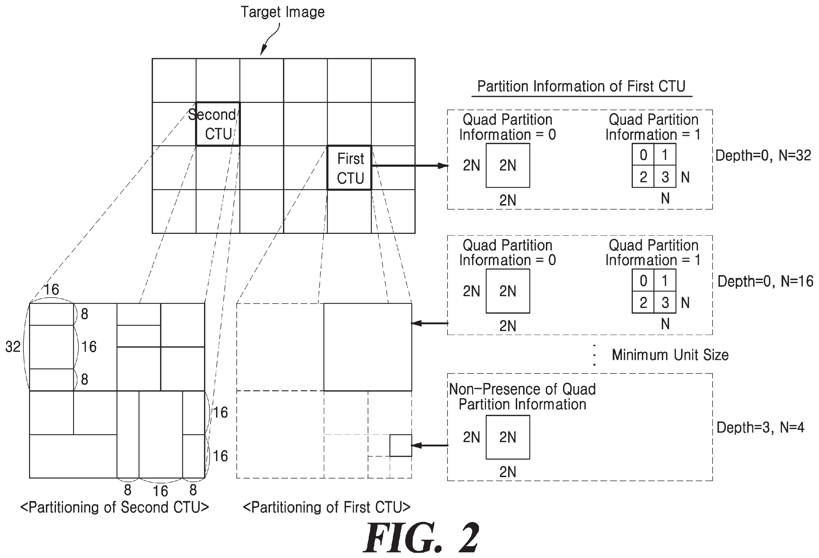

FIG. 2 illustrates an image partitioning structure according to an embodiment.

FIG. 2 may schematically illustrate an example in which one unit is partitioned into a plurality of sub-units.

A CU may be used as a base unit for image encoding and decoding. Also, a CU may be a base unit for prediction, transform, quantization, dequantization, inverse transform, entropy encoding, and entropy decoding.

A CU may be used as the unit to which a prediction mode is applied. In other word, which one of available prediction modes available for each CU is to be applied to coding may be determined. For example, the available prediction modes may include intra prediction, inter prediction, and intra-block copy (IBC) prediction.

A target image 200 may be sequentially partitioned into units of CTU. For each CTU, a partitioning structure may be determined. A CTU may be partitioned into CUs depending on the partitioning structure. Alternatively, one CTU may be used as a CU. The size of the CTU may be the maximum CU size.

Each CU may have depth information. Depth information may refer to the depth of CU, and may represent the size of CU. The depth of CTU may be 0. The depth of a CU generated by partitioning the CTU may be 1. When a parent CU is partitioned into child CUs, the depth of the child CU may be increased from the depth of the parent CU by 1. The number of CUs generated from partitioning may be a positive integer equal to or greater than 2, including 2, 4, 8, 16, etc. At least one of the horizontal size and the vertical size of child CUs generated by partitioning the parent CU may be less than at least one the horizontal size and the vertical size of the parent CU depending on the number of child CUs.

The partitioned CU may be recursively partitioned up to a predefined maximum depth or to a predefined minimum size in the same manner. The depth of a Smallest Coding Unit (SCU) may be the predefined maximum depth, and the size of the SCU may be the predefined minimum size. The size of the SCU may be the minimum CU size.

For example, the range of CU depth may correspond to values ranging from 0 to 3. Depending on the CU depth, the CU may have a size ranging from 64x64 to 8x8. A CTU having a depth of 0 may be a 64x64 block. 0 may be the minimum depth. An SCU having a depth of 3 may be an 8x8 block. 3 may be the maximum depth. Depth 0 may represent a CTU that is a 64x64 block. Depth 1 may represent a CU that is a 32x32 block. Depth 2 may represent a CU that is a 16x16 block. Depth 3 may represent an SCU that is an 8x8 block.

The partition information of a CU may indicate whether a CU is partitioned. The partition information may be a 1-bit flag. All CUs except the SCU may include partition information. For example, partition information of a CU that is not further partitioned may be '0', which is a first value, and partition information of a CU that is partitioned may be '1', which is a second value.

Quad Tree (QT) partitioning may refer to partitioning of one CU into four CUs. When a parent CU is partitioned into four child CUs, the horizontal size and the vertical size of each child CU may be half the horizontal size and the vertical size of the parent CU, respectively.

Binary Tree (BT) partitioning may refer to partitioning of one CU into two CUs. For example, when the parent CU is partitioned into two child CUs, the horizontal size or the vertical size of each child CU may be half the horizontal size or the vertical size of the parent CU.

Ternary Tree (TT) partitioning may refer to partitioning of one CU into three CUs. For example, when the parent CU is partitioned into three child CUs, the three child CUs may be generated by partitioning the horizontal size or the vertical size of the parent CU at a ratio of 1:2:1. The horizontal or vertical sizes of the child CUs may be 1/4, 1/2, and 1/4 of the horizontal or vertical size of the parent CU, respectively.

In FIG. 2, QT partitioning was applied to a first CTU. QT partitioning, BT partitioning, and TT partitioning were applied to a second CTU.

In order to partition the CTU, at least one of different types of partitioning such as QT partitioning, BT partitioning, and TT partitioning, may be applied to the CTU. The different types of partitioning may be applied based on specific priority.

For example, QT partitioning may be preferentially applied to the CTU. A CU to which QT partitioning cannot be further applied may correspond to the leaf node of QT. The CU, which is the leaf node of QT, may be the root node of BT and/or TT. The CU, which is the leaf node of QT, may be partitioned in a BT form or a TT form, or may not be further partitioned. In this case, QT partitioning may not be applied again to the CU generated by applying BT partitioning or TT partitioning to the CU that is the leaf node of QT.

The partitioning of a CU corresponding to each node of QT may be signaled using QT partition information. The QT partition information may be a flag. The QT partition information of a unit may be information indicating whether the unit is partitioned in a QT form. '0', which is the first value of QT partition information, may indicate that a CU is not partitioned in a QT form. The QT partition information having the first value may mean Multi-Type Tree (MTT) partitioning. MTT partitioning may include BT partitioning and TT partitioning. '1', which is the second value of the QT partition information, may indicate that a CU is partitioned in a QT form.

Priority may not be present between BT partitioning and TT partitioning. That is, a CU corresponding to the leaf node of QT may be partitioned in a BT form or a TT form. Further, the CU generated through BT partitioning or TT partitioning may be further partitioned in a BT form or a TT form, or may not be further partitioned.

A CU corresponding to the leaf node of QT may be the root node of MTT. For a CU corresponding to each node of MTT, the CU may further include partitioning direction information and partitioning form information of an MTT form.

The partitioning direction information may indicate the partitioning direction of MTT partition. '0', which is the first value of partitioning direction information, may indicate that a CU is partitioned in a horizontal direction. '1', which is the second value of the partitioning direction information, may indicate that a CU is partitioned in a vertical direction.

The partitioning form information may indicate a partitioning form used for multi-type tree (MTT) partitioning. '0', which is the first value of partitioning form information, may indicate that a CU is partitioned in a TT form. '1', which is the second value of the partitioning form information, may indicate that a CU is partitioned in a BT form.

Here, each of the above-described partitioning direction information and partitioning form information may be a flag having a specific length (e.g., 1 bit).
the partition information of a CU may also include QT partition information, partitioning direction information, and partitioning form information.

A CU, which is not further partitioned by QT partitioning, BT partitioning, or TT partitioning, may be used as the unit of specific processing, such as prediction, transform, quantization, dequantization, inverse transform, entropy encoding, and entropy decoding. That is, for specific processing, a CU may not be further partitioned. Therefore, partition information for partitioning the CU into PUs and/or TUs may not be present in a bitstream.

In contrast, when the size of the CU is greater than the maximum TU size, the CU may be recursively partitioned until the size of the CU becomes less than or equal to the maximum TU size. For example, when the size of the CU is 64x64 and the maximum TU size is 32x32, the CU may be partitioned into four 32x32 TUs to perform a transform. For example, when the size of the CU is 32x64 and the maximum TU size is 32x32, the CU may be partitioned into two 32x32 TUs to perform a transform.

In this case, information indicating whether the CU is partitioned to perform a transform may not be separately signaled. Whether the CU is partitioned may be determined through a comparison between the size of the CU (horizontal size/vertical size) and the maximum TU size (horizontal size/vertical size), without signaling. For example, when the horizontal size of the CU is greater than the horizontal size of the maximum TU size, the CU may be vertically bisected. Further, when the vertical size of CU is greater than the vertical size of the maximum TU size, the CU may be horizontally bisected.

For example, the minimum size of CU may be 4x4. For example, the maximum size of a transform block may be 64x64. For example, the minimum size of the transform block may be 4x4. The minimum size of QT may be the minimum size of a CU corresponding to the leaf node of QT. The maximum depth of MTT may be the maximum depth of a path from the root node to the leaf node of MTT.

The maximum size of BT may denote the maximum size of a CU corresponding to each node of BT, and the maximum size of TT may denote the maximum size of a CU corresponding to each node of TT. The minimum size of BT and/or the minimum size of TT may be set to the minimum size of the CU.

When the depth of the CU, corresponding to the node of MTT, in MTT is equal to the maximum depth of MTT, the CU may not be partitioned in a BT form and/or a TT form.

Based on the above-described various sizes and various depths of CU, each piece of information described in the embodiments may be or may not be present in the bitstream.

The information about the maximum size or minimum size described in embodiments may be signaled at a level higher than the CU. In embodiments, the level higher than the CU may include a video level, a sequence level, a picture level, a subpicture level, a tile group level, a tile level, a slice level, etc.

The information described in embodiments may be separately signaled for different types of slices. The different types of slices may include intra-slices and inter-slices.

### Processing of block depending on attributes of a block

Whether specific processing described in embodiments is applied/performed may be performed based on the attributes of a block related to the specific processing. Whether specific processing described in embodiments is applied/performed may be determined based on whether the attribute of the block related to specific processing satisfies a specific condition. For example, the block may include a target block, a neighbor block, and a reference block. The block may include other blocks described in embodiments. The block may be one of blocks and units described in embodiments.

The block to which specific processing, described in embodiments, is applied may have a square shape or a non-square shape.

In an embodiment, the attributes of the block may include the size of the block. Specific processing descried in embodiments may be applied/performed when the specific condition related to the block size is satisfied.

In an embodiment, the specific condition may include the condition of a minimum block size and the condition of a maximum block size. A block to which the condition of the minimum block size is applied and a block to which the condition of the maximum block size is applied may be different from each other.

In an embodiment, the minimum block size and/or the maximum block size for specific processing may be predefined.

In an embodiment, when the block size is equal to or greater than the minimum block size, and/or when the block size is less than or equal to the maximum block size, the processing according to an embodiment may be applied/performed. Alternatively, in an embodiment, when the block size is greater than the minimum block size and when the block size is less than the maximum block size, the processing according to an embodiment may be applied/performed.

In an embodiment, the processing according to the embodiment may be applied/performed only when the block size is equal to or greater than the minimum block size and is less than or equal to the maximum block size. Alternatively, the processing according to the embodiment may be applied/performed only when the block size is greater than the minimum block size and is less than or equal to the maximum block size. Alternatively, the processing according to the embodiment may be applied/performed only when the block size is equal to or greater than the minimum block size and is less than the maximum block size. The processing according to the embodiment may be applied/performed only when the block size is greater than the minimum block size and is less than the maximum block size.

In an embodiment, the processing according to the embodiment may be applied/performed only when the block size is a predefined block size.

In embodiments, the block size may be determined based on various methods. For example, the block size may denote the horizontal size or the vertical size of the block. The block size may denote both the horizontal size and the vertical size of the block. The block size may denote the area of the block. The block size may denote 1) the result value of a well-known equation, 2) the result value of an equation according to an embodiment, or 3) a statistical value, which uses the horizontal size and the vertical size of the block.

Further, for a first size, processing according to a first embodiment among the embodiments may be applied/performed, and for a second size, processing according to a second embodiment among the embodiments may be applied/performed.

In embodiments, the block size may be 2x2, 4x4, 8x8, 16x16, 32x32, 64x64 or 128x128. Alternatively, in embodiments, the block size may be (2*SIZE_{X})x(2*SIZE_{Y}) or the like. SIZE_{X} may be one of integers of 1 or more. SIZE_{Y} may be one of integers of 1 or more.

### Prediction information for prediction

In order to generate a prediction block for a target block, prediction information may be used.

The encoding apparatus 110 may generate prediction information required for prediction, and may generate a bitstream including the prediction information. The prediction information may be signaled from the encoding apparatus 110 to the decoding apparatus 150 through the bitstream. The decoding apparatus 150 may acquire the prediction information from the bitstream, and may generate a prediction block by performing prediction for the target block using the prediction information.

The prediction information may include intra prediction information, inter prediction information, and IBC prediction information. In embodiments, the prediction information may be replaced with the intra prediction information, inter prediction information, and/or IBC prediction information. The intra prediction may include information used for intra prediction described in embodiments. The inter prediction may include information used for inter prediction described in embodiments. The IBC information may include information used for IBC prediction, described in embodiments.

### Intra prediction

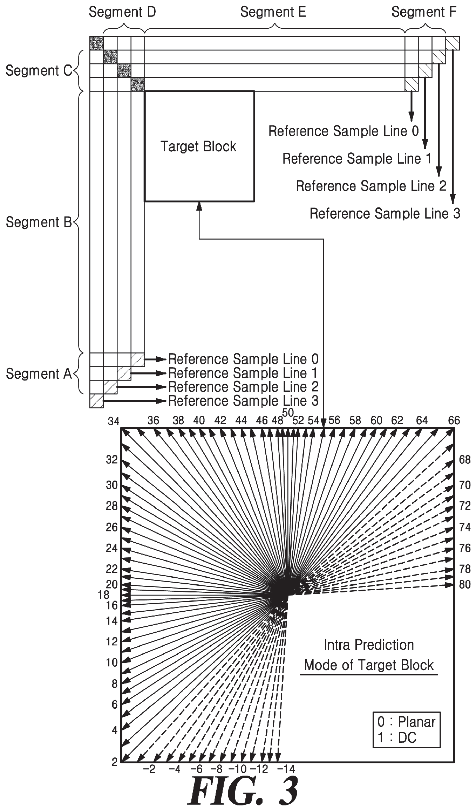

FIG. 3 illustrates the structure of intra prediction according to an embodiment.

Intra prediction may be performed using a reference sample and a coding parameter for a target block. The reference sample may be a (reconstructed) sample in a (reconstructed) reference block. Alternatively, an intermediate prediction sample may be generated using a sample described in an embodiment such as a reconstructed sample, and then a reference sample may be generated using the intermediate prediction sample. Processing described in the embodiment, such as filtering, may be applied in generating the reference sample.

The reference block may be the (spatial) neighbor block of the target block. The coding parameters may be a coding parameter for the target block and/or a coding parameter for a reference block. In intra prediction, the reference sample may be a neighbor sample.

A prediction block may be generated by performing intra prediction for the target block depending on the intra prediction mode based on the reference sample of the target image and information related to the reference sample. The size of the target block and the size of the prediction block may be equal to each other.

In embodiments, the prediction block may be a PU. Alternatively, the prediction block may correspond to a CU or a TU, described in embodiments. The prediction block may have a square or rectangular shape.

The intra prediction mode may be represented by at least one of a mode number, a mode value, a mode angle, and a mode direction. In the lower-right portion of FIG. 3, prediction directions of a plurality of intra prediction modes for the target block are illustrated. Among the plurality of intra prediction modes, the remaining intra prediction modes other than a DC mode and a planar mode may be directional modes. The directional modes may be intra prediction modes having a specific direction or a specific angle. The intra prediction mode for the target block may be selected from among directional modes and non-directional modes.

In a rectangle indicating the target block in the lower-right portion of the drawing, number '0' may indicate a planar mode that is a non-directional intra prediction mode. Number '1' may indicate a DC mode that is a non-directional intra prediction mode. In the rectangle indicating the target block in the lower right portion of the drawing, arrows from the center of the rectangle to the outside may indicate the prediction directions of the directional intra prediction modes. Further, numbers indicated near the arrows may represent examples of mode values allocated to the intra prediction modes or the prediction directions of the intra prediction modes.

Intra prediction may be performed depending on the intra prediction mode for the target block. One of the intra prediction modes available for the target block may be used as the intra prediction mode for the target block.

The number of intra prediction modes available for the target block may be a predefined value. Alternatively, the number of intra prediction modes available for the target block may be determined based on the attributes of the prediction block. For example, the attributes of the prediction block may include coding parameters such as the shape, size, and color components.

For example, in FIG. 3, directional modes indicated by dotted lines (i.e., directional modes having a number corresponding to any one of -14 to -1 or a number corresponding to any one of 67 to 80) may be applied only to prediction for a non-square block. Therefore, the number of intra prediction modes available for prediction for a square block may be 67 (planar mode, DC mode, and 65 directional modes).

For example, the number of available intra prediction modes may vary depending on which one of a luma signal and a chroma signal corresponds to the color component of the block. The number of available intra prediction modes of a luma component block may be greater than the number of available intra prediction modes of a chroma component block.

Intra prediction modes may include a horizontal-below mode, a horizontal mode, a vertical mode, and a vertical-right mode. The horizontal-below mode may be an intra prediction mode located below the horizontal mode. The vertical-right mode may be a mode located to the right of the vertical mode. For example, in FIG. 3, the mode value of the horizontal mode may be 18. The mode value of the vertical mode may be 50. Intra prediction modes, the mode value of each of which is one of 51, 52, 53, 54, 55, 56, 57, 58, 59, 60, 61, 62, 63, 64, 65, and 66 may be vertical-right modes. Intra prediction modes, the mode value of each of which is one of 2, 3, 4, 5, 6, 7, 8, 9, 10, 11, 12, 13, 14, 15, 16, and 17 may be horizontal-below modes.

The number of the above-described intra prediction modes and the mode numbers of respective intra prediction modes may be only examples. The number of the above-described intra prediction modes and the mode numbers of respective intra prediction modes may be defined differently depending on embodiments and implementation and/or necessity thereof.

When a prediction block for the target block is generated in the case where an intra prediction mode is a planar mode, the sample value of a prediction sample may be generated using the weighted sum of an above reference sample of a target sample, a left reference sample of the target sample, a right-above reference sample of the target block, and a left-below reference sample of the target block depending on the location of the prediction sample in the prediction block.

When the intra prediction mode is a DC mode, a prediction block may be generated based on the average of the sample values of a plurality of reference samples. The plurality of reference samples may include above reference samples and left reference samples of the target block. The value of the prediction sample in the prediction block may be determined based on the average of the sample values of the plurality of reference samples. Furthermore, filtering using the values of reference samples may be performed on specific rows and/or specific columns in the target block. Specific rows may be one or more above rows adjacent to above reference samples. Specific columns may be one or more left columns adjacent to left reference samples.

When the intra prediction mode is a directional mode, the prediction block may be generated using the above reference sample, the left reference sample, the right-above reference sample, and/or the left-below reference sample of the target block.

The intra prediction mode of the target block may be determined using the intra prediction mode of the neighbor block of the target block. Information for determining the intra prediction mode of the target block may be signaled.

For example, when the intra prediction modes of the target block and the neighbor block are identical to each other, an indicator indicating that the intra prediction modes of the target block and the neighbor block are identical to each other may be signaled.

For example, an indicator indicating an intra prediction mode identical to the intra prediction mode of the target block, among intra prediction modes of a plurality of neighbor blocks, may be signaled.

For example, when the intra prediction modes of the target block and the neighbor block are different from each other, an indicator indicating the intra prediction mode of the target block may be signaled. Alternatively, information used to derive the intra prediction mode of the target block based on the intra prediction mode of the neighbor block may be signaled.

The reference samples used for intra prediction of the target block may include left-below reference samples, left reference samples, a left-above reference sample, above reference samples, right-above reference samples, etc.

For example, the left reference samples may be reconstructed reference samples adjacent to the left of the target block. The above reference samples may be reconstructed reference samples adjacent to the top of the target block. The left-above reference sample may be reconstructed reference samples diagonally adjacent to the top-left of the target block. The left-below reference samples may be reference samples located below the left reference samples among samples located on the same line as a left sample line composed of left reference samples. The right-above reference samples may be reference samples located to the right of the above reference samples among samples located on the same line as an above sample line composed of the above reference samples.

The reference samples used for intra prediction of the target block may be determined based on the intra prediction mode of the target block. To determine the sample value of the prediction sample for the prediction block, one or more reference samples may be used. In FIG. 3, the directions of intra prediction modes indicated by arrows may indicate the directions from prediction samples to respective reference samples. The directions of intra prediction modes may represent dependency relationships between the reference samples and the prediction samples. For example, the sample value of a specific reference sample may be used as the sample value of at least sample of the prediction block depending on the intra prediction modes. Here, the specific reference sample and at least one sample of the prediction block may be samples designated as a straight line in the direction of the corresponding intra prediction mode. In other words, the sample value of the specific reference sample may be copied to the sample value of the prediction sample located in a direction opposite to the direction of the intra prediction mode. Alternatively, the sample value of the prediction sample in the prediction block may be the sample value of a reference sample located in the direction of the intra prediction mode based on the location of the prediction sample.

The reference samples used for intra prediction may not be limited to samples just adjacent to the target block. As illustrated in FIG. 3, for intra prediction of the target block, at least one of reference sample line 0 to reference sample line 3 or a combination thereof may be used.

Each reference sample line of FIG. 3 may include one or more reference samples. As the number of a reference sample line is smaller, a line of reference samples closer to the target block may be indicated. Reference sample line 0 may be a line of reference samples just adjacent to the target block. When the top-left coordinates of the target block are (X, Y), the horizontal length of the target block is W, and the vertical length thereof is H, the reference samples on reference sample line 0 may be samples, the x coordinate of which is X-1 or the y coordinate of which is Y-1. Here, the y coordinates of the reference samples, the x coordinate of which is X-1, may be Y-1 to Y+2H. The x coordinates of the reference samples, the y coordinate of which is Y-1, may be X-1 to X+2W. The reference samples in reference sample line A may be samples, the x coordinate of which is X-A-1 or the y coordinate of which is Y-A-1. Here, the y coordinates of the reference samples, the x coordinate of which is X-A-1 may be Y-A-1 to Y+2H+A. The x coordinates of the reference samples, the y coordinate of which is Y-A-1, may be X-A-1 to X+2W+A. 'A' may be 1, 2 or 3.

Samples in segment A and segment F may be derived through padding that uses samples closest to segment B and segment E, respectively, instead of being acquired from reconstructed neighbor blocks.

A reference sample line index may indicate a reference sample line used for intra prediction of the target block among the plurality of reference sample lines. For example, the reference sample line index may have a value corresponding to one of 0 to 3. The reference sample line index may be signaled.

When inter-color component intra prediction is used for the target block, a prediction block of a second color component may be generated based on the reconstructed block of a first color component for the target block. For example, the first color component may be a luma component, and the second color component may be a chroma component.

For inter-color component intra prediction between color components, the parameters between the first color component and the second color component may be derived based on a template. For example, the parameters may be parameters of a linear model.

For example, the template may include the above reference sample and/or the left reference sample of the target block, and may include the above reference sample and/or the left reference sample of the reconstructed block of the first color component corresponding to the reference samples.

When the parameters are derived, the prediction block of the second color component for the target block may be generated by applying the reconstructed block of the first color component to the linear model. According to the image format or the type of the inter-color component intra prediction, subsampling/downsampling may be performed on the neighbor sample of the reconstructed block of the first color component and the reconstructed block of the first color component. When subsampling is performed, derivation of parameters and inter-color component intra prediction may be performed using the corresponding samples derived through subsampling.

Intra Sub-Partition (ISP) prediction may refer to intra prediction sequentially performed on a plurality of subblocks generated by partitioning the target block. In ISP prediction, the target block may be partitioned into two or four subblocks in a horizontal direction and/or vertical direction. The subblocks generated from partitioning may be sequentially reconstructed. As intra prediction is performed on each subblock, a sub-prediction block for each subblock may be generated. Further, as dequantization and/or an inverse transform are performed on each subblock, a sub-residual block for the corresponding subblock may be generated. The corresponding reconstructed subblock may be generated by adding the sub-prediction block to the sub-residual block. The reconstructed subblock may be used as a reference sample for intra predictions for other subblocks to be subsequently processed.

When prediction is performed for the target block, whether samples included in a reconstructed neighbor block can be used as reference samples of the target block may be determined. When there are unavailable samples that cannot be used as reference samples of the target block among the samples in the neighbor block, a value generated by copy and/or interpolation which uses the sample value of at least one of the samples included in the reconstructed neighbor block may replace the sample value of each unavailable sample. When the value generated by copy and/or interpolation replaces the sample value of the sample, the corresponding sample may be used as the reference sample of the target block.

When intra prediction is performed, the sample value of the prediction sample in the prediction block may be determined based on the sample value of the reference sample. The location of the reference sample may be specified by the location of the prediction sample and the direction of the intra prediction mode. When the location specified by the location of the prediction sample and the direction of the intra prediction mode is an integer location, the sample value of one reference sample indicated by the integer location may be used to determine the sample value of the prediction sample in the prediction block. When the location specified by the location of the prediction sample and the direction of the intra prediction mode is not an integer location, an interpolated reference sample may be generated based on two reference samples closest to the specified location. The sample value of the interpolated reference sample may be used to determine the sample value of the prediction sample. In other words, when the location specified by the location of the prediction sample and the direction of the intra prediction mode indicates a location between the two reference samples, the interpolated sample value may be generated based on the sample values of two samples.

### Inter prediction

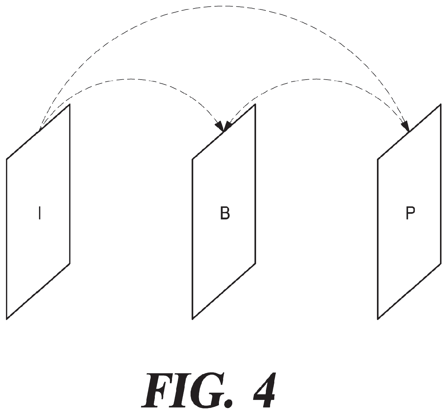

FIG. 4 illustrates the structure of inter prediction for explaining an inter prediction process according to an embodiment.

Rectangles illustrated in FIG. 4 may illustrate images (pictures). Further, in FIG. 4, arrows may designate prediction directions.

Individual images constituting video may be classified into an I-picture (i.e., intra picture), a P-picture (i.e., a uni-prediction picture) and a B-picture (i.e., a Bi-prediction picture) depending on the coding type. Coding of each picture may be performed depending on the coding type of each picture.

When the target picture is an I-picture, coding of the target picture may be performed using information in the target picture without inter prediction that refers to other images. For example, coding of the I-picture may be performed using intra prediction and/or IBC prediction.

Coding of the P-picture and the B-picture may be performed by at least one of intra prediction, IBC prediction, and inter prediction using a reference image.

When the target picture is a P-picture, coding of the target picture may be performed using unidirectional inter prediction that exploits one reference image list.

When the target picture is a B-picture, coding of the target picture may be performed using unidirectional inter prediction, or bidirectional inter prediction that exploits two reference image lists.

Hereinafter, inter prediction for a target block in an inter mode according to an embodiment will be described in detail.

When the prediction mode of the target block is an inter mode, inter prediction for the target block may be performed. The target block may be a prediction block or a partitioned prediction block.

Inter prediction may be performed using a reference image and motion information. In inter prediction, the reference image (reference picture) may be selected using a reference image index, and a reference block corresponding to the target block may be determined in the reference image using motion information. A prediction block for the target block may be generated using the determined reference block.

The motion information may be derived using coding parameters or the like. For example, the motion information may be derived using the motion information of a reconstructed neighbor block, the motion information of a COL block, and/or the motion information of a block adjacent to the COL block.

In embodiments, a candidate list may be used for inter prediction. The candidate list may include a plurality of candidates. An index indicating a candidate used for inter prediction for the target block, among candidates in the candidate list, may be signaled. The candidate list may be derived by the encoding apparatus 110 and the decoding apparatus 150 based on the same information in the same manner. Here, the same information may include a reconstructed image and a reconstructed block. Further, in order to specify a candidate with the index, the order of candidates in the candidate list need to be uniform.

In an embodiment, prediction for a target block may be performed by utilizing the motion information of a spatial candidate or a temporal candidate as the motion information of the target block. The motion information of the spatial candidate may be referred to as spatial motion information. The motion information of the temporal candidate may be referred to as temporal motion information.

The spatial candidate may be a reconstructed spatial neighbor block spatially adjacent to the target block.

The spatial candidate may be a block 1) which is present in a target image, 2) which is already reconstructed through decoding, and 3) which is adjacent to the target block.

The spatial candidate may include the left block, the above block, the left-below block, the right-above block, and the left-above block of the target block.

The temporal candidate may be a reconstructed temporal neighbor block that is present in a reconstructed COL image (picture) and corresponds to the target block.

In embodiments, the motion information of the spatial candidate may be the motion information of a block including the spatial candidate. The motion information of the temporal candidate may be the motion information of a block including the temporal candidate.

In inter prediction, a COL block for the target block may be identified. The area of the target block in the target image and the area of the COL block in the COL picture may be identical to each other. In other words, the COL block may be a block occupying a specific area in the COL picture. The specific area may be an area, corresponding to the area of the target block, in the COL picture.

The temporal candidate may indicate a location inside the COL block and/or a location outside the COL block within the COL picture.

For example, the COL block may include a first COL block and a second COL block. The top-left coordinates of the COL block are (xP, yP) and the size of the COL block is (nPSW, nPSH), the first COL block may be a block occupying coordinates (xP + nPSW, yP + nPSH). The second COL block may be a block occupying the coordinates (xP + (nPSW >> 1), yP + (nPSH >> 1)). The second COL block may be selectively used as a COL block when the first COL block is unavailable.

The MV of the target block may be determined based on the MV of the COL block. Scaling may be performed on the MV of the COL block. The scaled MV of the COL block may be used as the MV or the prediction MV of the target block. Alternatively, the MV of a temporal candidate listed in a candidate list related to inter prediction may be a scaled MV.

The ratio of the scaled MV to the MV of the COL block may be identical to the ratio of a first temporal distance to a second temporal distance. The first temporal distance may be the distance between the reference image of the target block and the target image. The second temporal distance may be the distance between the reference image of the COL block and the COL picture (COL image).

A scheme for deriving motion information may be determined depending on the inter prediction mode of the target block. For example, an AMVP mode, a merge mode, a skip mode, a merge mode having an MVD, a subblock merge mode, a GPM, a combined inter-intra prediction (CIIP) mode, or an affine inter mode may be used as the inter prediction mode. In the following embodiments, individual inter prediction modes will be described.

### AMVP mode

When the AMVP mode is used as a prediction mode, an MV candidate list including one or more MV candidates may be created using the MV of a spatial candidate, the MV of a temporal candidate, a history-based MV candidate, a zero vector, or the like. At least one of the MV of a spatial candidate, the MV of a temporal candidate, the zero vector, etc. may be determined and used as a MV candidate.

The spatial candidate may include a reconstructed spatial neighbor block. The MV of the reconstructed spatial neighbor block may be referred to as a spatial motion vector (MV) candidate. The temporal candidate may include a COL block and a block adjacent to the COL block. The MV of the COL block or the MV of the block adjacent to the COL block may be referred to as a temporal motion vector (MV) candidate. The history-based MV candidate may be a MV in a list including MVs of other blocks encoded/decoded before the target block is encoded/decoded.

The encoding apparatus 110 may determine the MV to be used for encoding the target block within a search range using the MV candidate list. The maximum number of MV candidates in the MV candidate list may be predefined. N may denote the predefined maximum number. For example, N may be 2. Alternatively, the maximum number of candidates may be signaled from the encoding apparatus to the decoding apparatus, or may be derived by the decoding apparatus. The encoding apparatus 110 may determine a MV candidate to be used as the prediction MV of the target block among the MV candidates in the MV candidate list. The MV to be used for encoding the target block may be a MV that can be encoded at minimum cost. The encoding apparatus 110 may determine whether an AMVP mode is to be used for encoding the target block, and may generate AMVP mode usage information indicating whether the AMVP mode is used.

The inter prediction information may include 1) AMVP mode usage information, 2) MV candidate index, 3) MVD, 4) MVD resolution information, 5) reference direction, and 6) reference image index, and may also include a residual block. The inter prediction information may be signaled from the encoding apparatus 110 to the decoding apparatus 150 through a bitstream.

The decoding apparatus 150 may acquire the AMVP mode usage information from the bitstream. When the AMVP mode usage information indicates that the AMVP mode is used, the decoding apparatus 150 may acquire the MV candidate index, MVD, MVD resolution information, the reference direction, and the reference image index from the bitstream. Among the MV candidates in included in the MV candidate list, an MV candidate indicated by the MV candidate index may be selected as the prediction MV of the target block.

The MVD may denote a difference between the MV to be actually used for inter prediction of the target block and the prediction MV. The encoding apparatus 110 may derive a prediction MV closer to the MV to be actually used for inter prediction of the target block so as to use an MVD having a magnitude that is as small as possible. The decoding apparatus 150 may derive the MV of the target block by adding the MVD to the prediction MV. In other words, the MV of the target block derived by the decoding apparatus 150 may be the sum of MVD and the prediction MV candidate.

Furthermore, the encoding apparatus 110 may generate the MVD resolution information. The MVD resolution information may be used to adjust the resolution of the MVD. The decoding apparatus 150 may adjust the resolution of the MVD using the MVD resolution information.

Meanwhile, the encoding apparatus 110 may calculate an MVD based on an affine model. The affine control point MV of the target block may be derived based on the sum of an affine control point MV candidate and the MVD. The MV of each subblock in the target block may be derived using the affine control point MV.

### Merge mode

When the merge mode is used, a merge candidate list including a plurality of merge candidates may be created using the motion information of spatial candidates, the motion information of temporal candidates, etc. The motion information may include 1) a motion vector (MV), 2) a reference image index, 3) a reference direction, etc. Each merge candidate may be motion information.

Merge candidates may include 1) a spatial merge candidate generated based on a spatial candidate, 2) a temporal merge candidate generated based on a temporal candidate, 3) a history-based merge candidate, 4) an average merge candidate, 5) a zero merge candidate, etc.

The history-based merge candidate may be information including the pieces of motion information of other blocks encoded/decoded before the target block is encoded/decoded.

The average merge candidate may be a merge candidate generated based on the average of two merge candidates in the merge candidate list.

The zero merge candidate may be zero vector motion information. The zero vector motion information may be motion information, the MV of which is a zero vector.

The merge candidates may be added to the merge candidate list depending on a predefined method and a predefined order so that the merge candidate list has a preset number of merge candidates. By means of the predefined method and the predefined order, the same merge candidate list may be constructed by the encoding apparatus 110 and the decoding apparatus 150.

The encoding apparatus 110 may select a merge candidate to be used for encoding of the target block from among the merge candidates in the merge candidate list. The encoding apparatus 110 may determine whether a merge mode is to be used for encoding the target block, and may generate merge mode usage information indicating whether the merge mode is used.

The inter prediction information may include 1) merge mode usage information, 2) merge index, and 3) correction information, etc., and may include a residual block. The inter prediction information may be signaled from the encoding apparatus 110 to the decoding apparatus 150 in the form of a bitstream.

The decoding apparatus 150 may acquire the merge mode usage information from the bitstream. When the merge mode usage information indicates that the merge mode is used, the decoding apparatus 150 may acquire information related to the merge mode, such as a merge index, from the bitstream.

The encoding apparatus 110 may select an optimal merge candidate from among the merge candidates included in the merge candidate list, and may set the value of the merge index to indicate the selected merge candidate.

The correction information may be information used to correct the MV. The encoding apparatus 110 may generate the correction information. The decoding apparatus 150 may derive a corrected MV by correcting the MV of the merge candidate selected by the merge index based on the correction information. The corrected MV may be used as the MV of the target block.

In an embodiment, the correction information may include an MVD. The correction information may include one or more of correction usage information, correction direction information, and correction size information. The correction usage information may indicate whether correction of the MV is used. The merge mode in which correction of the MV is performed based on the correction information may be referred to as a merge mode having the MVD.

In the merge mode, prediction for the target block may be performed using a merge candidate indicated by the merge index among the merge candidates included in the merge candidate list.

The motion information of the target block may be derived using 1) the MV, 2) the reference image index, 3) the reference direction, etc. of the merge candidate indicated by the merge index.

In an embodiment, the merge candidates in the merge candidate list may be specific modes in which inter prediction information is derived. Each merge candidate may be information indicating a specific mode in which inter prediction information is derived. The inter prediction information of the target block may be derived depending on the specific mode indicated by the merge candidate. In this regard, the specific mode may be regarded as a specific inter prediction information derivation mode or a specific motion information derivation mode. The specific mode may include a series of processes for deriving inter prediction information.

The inter prediction information of the target block may be derived depending on the specific mode indicated by the merge candidate selected by the merge index, among the merge candidates in the merge candidate list. For example, specific modes may include a subblock-wise motion information derivation mode and an affine motion information derivation mode, and may include other modes in which the motion information described in embodiments are derived.

A skip mode may be a mode in which no residual block is used. In other words, when the skip mode is used, a reconstructed block may be identical to a prediction block. Description of the merge mode in embodiments may also be applied to the skip mode. The difference between the merge mode and the skip mode lies in whether the residual block is signaled and used. In other words, the skip mode may be similar to the merge mode except that the residual block is not transmitted/used, and description of the merge mode may also be applied to the skip mode.

The subblock merge mode may be a mode in which, for a target subblock in a target block, the motion information of the target subblock is derived. When the subblock merge mode is applied, a subblock merge candidate list may be created using an affine control point motion vector merge candidate and/or a subblock-based temporal merge candidate. The subblock-based temporal merge candidate may be the motion information of the COL subblock of the target subblock.

In GPM, a first prediction block and a second prediction block may be generated using two pieces of motion information of the target block. For respective coordinates of the target block, the final prediction block of the final prediction block may be generated using the weighted sum of the first prediction sample of the first prediction block and the second prediction sample of the second prediction block.

Here, a first weight for the first prediction sample and a second weight for the second prediction sample of the weighted sum may be determined based on the boundary of GPM. The boundary may indicate the partitioning line for partitioning the target block. Depending on the boundary, the target block may be divided into a first partition region and a second partition region.

When the distance between the final prediction sample and the boundary is less than or equal to a reference value, the value of the final prediction sample of the final prediction block may be determined using the weighted sum of the first prediction sample in the first prediction block and the second prediction sample of the second prediction block. When the distance between the final prediction sample and the boundary is greater than the reference value, one of the first weight and the second weight may be 1, and the other may be 0.

The Combined Inter-Intra Prediction (CIIP) mode may be a mode in which the prediction sample of the target block is derived using the weighted sum of a prediction sample generated through inter prediction and a prediction sample generated through intra prediction.

In the above-described modes, the improvement of the derived motion information itself may be performed, and the improved motion information may be used as the motion information of the target block. For example, blocks in a specific region determined based on the derived motion information may be searched for, and the motion information of a block having the smallest Sum of Absolute Differences (SAD) of the found blocks may be used as the improved motion information of the target block. The specific region may be a square region within a reference image specified by the motion information. A point indicated by the motion information may be the center of the specific region.

In the foregoing modes, compensation for the prediction sample derived through inter prediction may be performed using an optical flow.

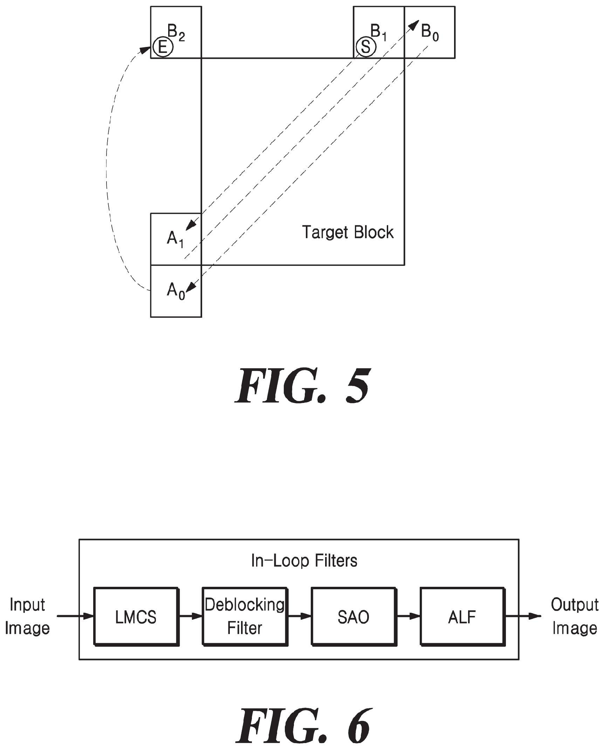

FIG. 5 illustrates the order of addition of spatial candidates to a candidate list according to an embodiment.

In FIG. 5, the locations of spatial candidates are depicted.

A large block at the center of the drawing may indicate a target block. Five small blocks adjacent to the target block may represent spatial candidates.

The coordinates of the target block may be (xP, yP), and the size of the target block may be (nPSW, nPSH).

Spatial candidate A₀ may be a block adjacent to the bottom-left of the target block. A₀ may be a block occupying samples corresponding to coordinates (xP - 1, yP + nPSH).

Spatial candidate A₁ may be a block adjacent to the left of the target block. A₁ may be the lowermost block among the blocks adjacent to the left of the target block. Alternatively, A₁ may be a block adjacent to the top of A₀. A₁ may be a block occupying samples corresponding to coordinates (xP - 1, yP + nPSH).

Spatial candidate B₀ may be a block adjacent to the top-right of the target block. B₀ may be a block occupying samples corresponding to coordinates (xP + nPSW, yP - 1).

Spatial candidate B₁ may be a block adjacent to the top of the target block. B₁ may be the rightmost block among blocks adjacent to the top of the target block. Alternatively, B₁ may be a block adjacent to the left of B₀. B₁ may be a block occupying samples corresponding to coordinates (xP + nPSW - 1, yP - 1).

Spatial candidate B₂ may be a block adjacent to the top-left of the target block. B₂ may be a block occupying samples corresponding to coordinates (xP - 1, yP - 1).

As illustrated in FIG. 5, the order of B₁, A₁, B₀, A₀ and B₂ may be used when the spatial candidates are added to the candidate list. That is, in the order of B₁, A₁, B₀, A₀ and B₂, available spatial candidates may be added to the candidate list. In FIG. 5, the order in which the spatial candidates illustrated in FIG. 5 are added to the merge candidate list is only an example.

The candidate list may include a motion information candidate list, a merge candidate list, a MV candidate list, a BV candidate list, an MPM list, etc.

In order to add spatial candidates or temporal candidates to the candidate list, whether the spatial candidates or the temporal candidates are available may be determined. When a candidate block is present outside the boundary of an image, a slice, a tile, or the like, the availability of the corresponding candidate block may be set to 'false'. The description "availability of the corresponding candidate block may be set to false" may mean that the corresponding candidate block is designated to be "unavailable."

The maximum number of candidates in the candidate list may be set. N may denote the preset maximum number of candidates. The preset maximum number of candidates may be signaled through a parameter set, a header, or the like. For example, the maximum number of candidates in a candidate list for a target block in a slice may be set through a slice header. For example, N may basically be 5.

### IBC mode

An IBC mode may be an intra block copy prediction mode in which a prediction block for a target block is generated with reference to a previously reconstructed region in a target image. In this regard, the IBC mode may be referred to as a current image reference mode. A Block Vector (BV) for specifying the previously reconstructed region may be used.

Whether the target block is encoded/decoded in the IBC mode may be determined using IBC mode usage information. The encoding apparatus 110 may determine whether an IBC mode is to be used for encoding the target block, and may generate IBC mode usage information indicating whether the IBC mode is used. The decoding apparatus 150 may acquire the IBC mode usage information from the bitstream.

In the IBC mode, the prediction block for the target block may be generated based on the BV. The BV may specify a reference block. The BV may refer to displacement between the target block and the reference block. The reference block may be a block in a target image (picture). Description of the MV in embodiments may also be applied to the BV.

The IBC mode may include a skip mode, a merge mode, an AMVP mode, etc. Descriptions of the AMVP mode, the merge mode, and the skip mode in embodiments may be similarly applied to the AMVP mode, the merge mode, and the skip mode of the IBC mode, respectively.

In the skip mode or the merge mode, a merge candidate list may be constructed, and a merge index may specify one of merge candidates in the merge candidate list. The BV of the specified merge candidate may be used as the BV of the target block.

In the AMVP mode, a BVD may be used. Description of the MVD in embodiments may also be applied to the BVD.

The reference block in the IBC mode may be limited to a block in a previously reconstructed region in the target image. Alternatively, the reference block may be included in a target CTU or at least one of left CTUs. For example, the value of the BV may be limited so that the reference block is located in a specific region. The specific region may be a region corresponding to three blocks of a specific size, which are encoded/decoded before a block of the specific size, including the target block, is encoded/decoded. The specific size may be 64x64.

### Transform and quantization

A quantized level may be generated by performing transform/quantization on a residual block. The residual block may refer to the difference between an original block and a prediction block. A reconstructed residual block may be generated by performing dequantization and/or an inverse transform on the quantized level. The reconstructed residual block may refer to the difference between a reconstructed block and the prediction block.

When a transform or an inverse transform is performed, a separable transform or a two-dimensional (2D) non-separable transform may be performed on the residual block. The separable transform may be a transform which performs 1D transforms on the residual block in each of a horizontal direction and a vertical direction.

A transform kernel used for a transform may include 1) various DCT kernels such as DCT type 2 (DCT-II), 2) DST kernels, and 3) kernels derived through training. For the 1D transforms, a DCT type and a DST type may include DCT-V, DCT-VIII, DST-I, and DST-VII in addition to DCT-II.

A transform set may be used in the determining the DCT type, the DST type, or the kernel derived by learning to be used for the transform. Each transform set may include a plurality of transform candidates. Each transform candidate may be a kernel derived through a DCT type, a DST type or training.

The encoding apparatus 110 may perform a transform and an inverse transform using transform candidates included in each transform set. The decoding apparatus 150 may perform an inverse transform using transform candidates included in each transform set. Transform selection information indicating which one of a plurality of transform candidates included in the transform set applied to the residual block is to be used may be signaled. The transform selection information may include vertical transform selection information and horizontal transform selection information. The vertical transform selection information may indicate which one of transforms belonging to the transform set is to be used for a vertical transform. The horizontal transform selection information may indicate which one of transforms belonging to the transform set is to be used for a horizontal transform.

A transform may include at least one of a primary transform and a secondary transform. A primary transform coefficient may be generated by performing the primary transform on the residual block, and a secondary transform coefficient may be generated by performing the secondary transform on the transform coefficient. Here, the transform coefficient may include the primary transform coefficient and the second transform coefficient.

The primary transform may refer to multiple transform selection (MTS) which applies different transforms to respective 1D directions (i.e., a vertical direction and a horizontal direction).

The secondary transform may be a transform for improving energy concentration of the transform coefficient generated by the primary transform. The secondary transform may be 1) a separable transform such as the primary transform, and 2) a 2D non-separable transform. The 2D non-separable transform may refer to a Low Frequency Non-Separable Transform (LFNST) or a Non-Separable Primary Transform (NSPT).

The NSPT can be applied to specific block sizes such as 4x4, 4x8, 8x4, 4x16, 16x4, 8x8, 8x16 and 16x8 for intra coding.

The primary transform may be performed using at least one of a plurality of predefined transform methods. In an example, the plurality of predefined transform methods may include DCT, DST, KLT, etc. Also, the primary transform may be a transform having various transform types depending on a transform kernel function defining DCT and DST. For example, the primary transform may include a plurality of transforms such as DCT-2, DCT-4, DCT-5, DCT-7, DCT-8, DST-1, DST-2, DST-4, DST-7, and DST-8 depending on the plurality of transform kernels.

In an embodiment, the transform type may be determined based on coding parameters related to the target block. For example, the transform type may be determined based on one or more of 1) the prediction mode of a target block (e.g., one of intra prediction and inter prediction), 2) the size of the target block, 3) the shape of the target block, 4) the intra prediction mode of the target block, 5) the component of the target block (e.g., one of a luma component and a chroma component), and 6) a partitioning type applied to the target block (e.g., one of QT, BT, TT, and non-separable type).

As in the case of the primary transform, transform sets may be defined even in the secondary transform. Methods for deriving and/or determining transform sets according to embodiments may also be applied to the secondary transform as well as the primary transform.

In an embodiment, the primary transform and/or the secondary transform may be determined for the specific target. The transform selection information may include transform target information. The transform target information may refer to the target to which the primary transform and/or the secondary transform are applied.

For example, the primary transform and/or the secondary transform may be applied to one or more signal components of a luma component and a chroma component.

In an embodiment, the transform selection information may include primary transform usage information and secondary transform usage information. The primary transform usage information may indicate whether the primary transform is applied to the residual block of the target block. The secondary transform usage information may indicate whether the secondary transform is applied to the residual block of the target block.

In an embodiment, whether the primary transform and/or the secondary transform are applied may be determined based on the coding parameters of the target/neighbor blocks such as the sizes and shapes of a target/neighbor block.

In an embodiment, the transform selection information may include primary transform selection information and secondary transform selection information. The primary transform selection information may indicate a transform method to be applied to the residual block among a plurality of transform methods that can be used in the primary transform. The primary transform selection information may be a primary transform index. The secondary transform selection information may indicate a transform method to be applied to the transform coefficient among a plurality of transform methods that can be used in the secondary transform. The secondary transform selection information may be a secondary transform index.

In an embodiment, the transform methods of the primary transform and the secondary transform may be individually derived based on specific information such as coding parameters. For example, the coding parameters may include coding parameters for target/neighbor blocks.

In embodiments, information related to the transform, such as transform selection information, and sub-information of the transform selection information may be signaled for a specific target. For example, the specific target may be a CU.

The information related to the transform, such as transform selection information, and the sub-information of the transform selection information may be derived for the specific target. For example, the specific target may be a CU.

A quantized level may be generated by performing quantization on the result, generated by performing the primary transform and/or the secondary transform, or on the residual block.

Description of the above-described transform may also be applied to an inverse transform. In this application, reverse processing of the processing described in relation to the transform may be performed in the inverse transform. The term "transform" in the names of components related to the transform may be changed to the term "inverse transform". Further, the input of the transform may be regarded as the output of the inverse transform. The output of the transform may be regarded as the input of the inverse transform. The decoding apparatus 150 may acquire the information related to the transform, such as the transform selection information, and may perform reverse processing of the transform-related processing, indicated by the information related to the transform, through the use of the information related to the transform.

The target block may include a plurality of subblocks. Each subblock may be defined depending on a minimum block size or a minimum block shape. The target block may be partitioned into a plurality of subblocks, each of which may include coefficients such as 4x4, 2x8, and 8x2. The target block may be a transform block. A transform coefficient or a quantized level may be represented in the shape of a block. The transform coefficient may be a quantized transform coefficient.

The transform coefficients or quantized levels may be scanned depending on at least one scanning type selected from among diagonal scanning, vertical scanning, and horizontal scanning. The diagonal scanning may be top-right diagonal scanning or bottom-left diagonal scanning.

For example, the coefficients may be changed or arranged in a 1D vector form by scanning the coefficients of the block using diagonal scanning. Vertical scanning may be an operation of scanning the coefficients having a 2D block shape in a column direction. Horizontal scanning may be an operation of scanning the coefficients having a 2D block shape in a row direction.

The scanning type of coefficients may be determined based on coding parameters, such as an intra prediction mode, a block size, and a block shape. For example, which one of diagonal scanning, vertical scanning, and horizontal scanning is to be used may be determined based on coding parameters such as the intra prediction mode, the block size, and the block shape. The block may be a transform unit.

Scanning depending on each scanning type may start at a specific starting point, and may be terminated at a specific end point.

In scanning, a scanning order corresponding to the scanning type may be applied first to subblocks. Next, the scanning order corresponding to the scanning type may be applied to transform coefficients or quantized levels in each subblock.

The encoding apparatus 110 may generate a bitstream including entropy-encoded transform coefficients or entropy-encoded quantized levels by performing entropy encoding on the transform coefficients or the quantized levels.

The decoding apparatus 150 may acquire the entropy-encoded transform coefficients or entropy-encoded quantized levels from the bitstream, and may generate the transform coefficients or quantized levels by performing entropy decoding on the entropy-encoded transform coefficients or entropy-encoded quantized levels. The coefficients may be arranged in a 2D block form through inverse scanning. The arrangement of inverse scanning may be rearrangement reverse to the arrangement of scanning.

Inversely scanned transform coefficients or inversely scanned quantized levels may be generated through inverse scanning on the coefficients. Here, the inverse scanning types may include diagonal scanning, vertical scanning, and horizontal scanning, and an inverse scanning type of an inverse transform corresponding to the scanning type of the transform may be selected.

The decoding apparatus 150 may perform dequantization on (inversely scanned) coefficients. Depending on whether a secondary inverse transform is to be performed, the secondary inverse transform may be performed on the result of performing dequantization. Further, depending on whether a primary inverse transform is to be performed, the primary inverse transform may be performed on the result of performing the secondary inverse transform. A reconstructed residual block may be generated by selectively performing the secondary inverse transform and the primary inverse transform on the coefficients.

### Filtering

In order to improve the image quality of images, filtering may be performed on a block. The value of a target sample may be determined or updated by filtering.

The target sample may be one of the samples described in the embodiments. For example, the target sample may be one or more of the samples described in embodiments, such as a prediction sample, a reference sample, a residual sample, a reconstructed sample, and a filtered reconstructed sample.

The target sample may be a sample within one or more of a target picture, a target slice, a target CTB, a target block, a reference sample line, and a template. The target block may be one of the above-described blocks. For example, the target block may be one or more of the blocks described in embodiments, such as a transform block, a prediction block, a reference block, a residual block, and a reconstructed block.

In embodiments, a filtering process described as applying to one object may also be applied to another object. For example, the filtering process described in specific in-loop filtering may also be applied to a transform block, a prediction block, a reference block, a residual block, etc.

A specific type of filtering may be used for filtering processes according to embodiments. A filtering type may include the filter tap (or filter tap length), filter shape, filter strength, filter coefficients (or weights), and offset of each filter.

The filter tap may represent the number of input samples used for the filter. The input samples may include a target sample. Alternatively, the input samples may include a specific value determined for the target sample. The input samples may include one or more reference samples. The one or more reference samples may be determined based on the attributes of the target block described in embodiments. The attributes may include coding parameters. For example, the attributes of the target sample may include the location of the target sample. One or more reference samples may be specified depending on the location relative to the location of the target sample.

The filter shape may denote a shape formed by input samples. The specific value determined for the target sample may be regarded as the target sample. In other words, when the specific value determined for the target sample is used as the input sample of the filter, the target sample may also be considered to form a filter shape.

The sample, the value of which is determined by filtering, may include multiple samples. The filter strength may denote the range of samples, the values of which are determined by filtering. The filter strength may be one of strong filtering strength and weak filtering strength. The number of samples, the values of which are determined by the strong filtering strength may be greater than the number of samples, the values of which are determined by the weak filtering strength. Alternatively, the filter strength may denote the range of values changed by filtering. The range of sample values changed by the strong filtering strength may be wider than the range of sample values changed by the weak filtering strength.

The filter coefficients may be the coefficients or weights of input samples.

The offset may be a specific value to be added to the result of calculation performed using the values of input samples and the coefficients, such as a weighted sum.

Filtering, interpolation, and sampling may be common in that the values of samples are updated. Therefore, description of any one of filtering, interpolation, and sampling in embodiments may also be applied to another one of filtering, interpolation, and sampling. Here, sampling may include at least one of upsampling, downsampling, and sub-sampling.

Filtering may include filtering performed by the predictor 123, the predictor 163, etc.

In encoding of the target block, a prediction error may be present between the original sample in the original block and a prediction sample in the prediction block. In order to reduce the prediction error, filtering may be performed on at least one of the prediction sample in the prediction block and a reference sample referenced for prediction.

For example, in intra prediction, the reference sample may include one or more of a left-above reference sample, an above reference sample, a right-above reference sample, a left reference sample, and a left-below reference sample. Filtering of the prediction sample may be performed by applying specific weights to the prediction sample, the left reference sample, the above reference sample and/or the left-above reference sample, respectively.

Filtering of at least one of the prediction sample and the reference sample may be performed based on the attributes of the target block and the attributes of the prediction sample. For example, whether filtering is performed, the type of filter, a region to which filtering is applied, filtering weights, reference samples, the range of reference samples, and the locations of reference samples may be determined based on the attributes of the target block and the attributes of the prediction sample.

For example, the attributes of the target block may include information related to the target block described in embodiments, such as 1) size, 2) prediction mode, 3) intra prediction mode, 4) reference sample line, 5) sample value, and 6) coding parameters of the target block.

For example, the attributes of the prediction sample may include information related to the prediction sample described in embodiments, such as 1) the sample value of the prediction sample and 2) the location of the prediction sample in the target block, and may include coding parameters related to the prediction sample.

Filtering may include in-loop filtering performed by the filter 130, the filter 170, etc.

FIG. 6 illustrates multiple in-loop filters according to an example.

A plurality of in-loop filters for in-loop filtering may include one or more of Luma Mapping with Chroma Scaling (LMCS), a deblocking filter, a Sample Adaptive Offset (SAO), and an Adaptive Loop Filter (ALF).

The plurality of in-loop filters may be sequentially connected to each other. For example, the plurality of in-loop filters may be connected in the order of the LMCS, the deblocking filter, the SAO, and the ALF. Further, the plurality of in-loop filters may be connected in one sequence of all available permutations of the plurality of in-loop filters. The output of one of the plurality of in-loop filters may be used as the input of a next filter.

As illustrated in FIG. 6, an input image may be input to a first filter. The input image may be a block described in embodiments. For example, the input image may be a reconstructed block generated by the adder 129 or the adder 169. The output of one filter may be the input of the next filter. An output image may be generated by a last filter. The output image may be a filtered block described in embodiments. For example, the output image may be a filtered reconstructed image generated by the filter 130 or the filter 170.

The target block may denote an image input to the filter. The filtered target block may denote an image output from the filter.

LMCS may include luma signal mapping on the luma signal of the target block and chroma signal scaling on the chroma signal of the target block.

Luma signal mapping may perform codeword reallocation for the luma signal.

Luma signal mapping may include forward mapping and reverse mapping. In forward mapping, an existing dynamic range may be partitioned into a plurality of intervals. The mapped dynamic range may be determined by performing codeword reallocation on the input image using linear models for respective intervals. In reverse mapping, reverse mapping from the mapped dynamic range to the existing dynamic range is performed.

Chroma scaling may correct a chroma signal depending on the mutual relationship between the luma signal and the chroma signal corresponding thereto.

Forward mapping may be performed between inter prediction for the luma signal and reconstruction of the luma signal, and may be performed between inter prediction for the luma signal and chroma scaling Reverse mapping may be performed between reconstruction of the luma signal and in-loop filtering for the luma signal. Chroma scaling may be performed between an inverse transform and reconstruction of the chroma signal.

By means of this structure, dequantization for the luma signal and the chroma signal, inverse transforms for the luma signal and the chroma signal, prediction for the luma signal, and reconstruction for the luma signal may be performed in the mapped dynamic range. In-loop filtering on the luma signal and the chroma signal, inter predictions for the luma signal and the chroma signal, intra prediction for the chroma signal, and reconstruction for the chroma signal may be performed in the existing dynamic range.

The deblocking filter may remove block distortion occurring at the boundary between blocks in the reconstructed image. For example, the blocks may be transform blocks. Further, the blocks may be subblocks of a specific block described in embodiments. Here, the boundary between blocks may refer to samples adjacent to the boundary between blocks.

The deblocking filter may be applied to a vertical boundary and a horizontal boundary between blocks. After filtering is performed on the vertical boundary between the blocks, filtering may be performed again on the horizontal boundary between the filtered blocks.

The deblocking filter may be selectively applied. Whether the deblocking filter is to be applied to the target block may be determined based on at least one of sample(s) included in a specific number of columns or rows in the target block and sample(s) included in a specific number of columns or rows in a neighbor block adjacent to the specific boundary.

When the deblocking filter is to be applied to the target block, the filter to be applied may be determined depending on the required strength of deblocking filtering. In other words, the filter determined depending on the strength of deblocking filtering, among a plurality of other filters, may be applied to the target block. The plurality of filters may include one of a long-tap filter, a strong filter, a weak filter, a Gaussian filter.

The maximum length of the deblocking filter may be determined based on the attributes of the target block, such as the size of the target block, the component of the target block, and the coding parameter of the target block.

The SAO may perform compensation for distortion between the original image and the reconstructed image on a sample basis. For compensation, the SAO may apply a suitable offset to the sample value of the sample. That is, the offset may be added to the sample value.

The offset may be determined for the target block. For example, the offset may be determined for each component of a CTB. The determined offset may be applied to samples in a specific component of the CTB.

SAO may include an SAO including an edge offset (EO) and an SAO using a band offset (BO). Depending on the characteristics of samples in a specific block such as a CTU, whether SAO using EO is to be performed and whether SAO using BO is to be performed may be respectively determined.

In SAO using EO, correction for distortion in samples may be performed based on the direction of an edge in the target block. The pattern classes of EO may include a horizontal pattern, a vertical pattern, a 135-degree diagonal pattern, and a 45-degree diagonal pattern. For the target block, information indicating the pattern class applied to the target block and a plurality of offsets of the pattern class may be signaled. The number of offsets may be 4. For the target sample in the target block, samples adjacent to the target sample may be determined depending on the direction of the pattern class. The offset to be applied to the target sample may be determined by the pattern of the adjacent samples.

In offset using BO, brightness values in the target block may be classified into specific bands, and thus distortion in the samples may be corrected. The bit depth of the input image may be divided into m intervals. For example, m may be 32. Specific bands may be n consecutive intervals among m intervals. For example, n may be 4. n offsets for the n intervals may be signaled. Further, information indicating a first interval of n intervals, selected from among the m intervals, may be signaled. The offset of the interval to which the target sample corresponds may be added to the sample value of the target sample in the target unit.

ALF may perform compensation for distortion between the reconstructed image and the original image.

The filter coefficient of ALF may be signaled through a bitstream.

The filter shape of ALF may be decided by the component of the target block. For example, a diamond shaped-filter having a 7x7 size may be used for a luma component. A diamond shaped-filter having a 5x5 size may be used for a chroma component.

In ALF, the characteristics of the specific block may be determined for the specific block, and the class of the specific block may be decided by the characteristics. In other words, the determination of ALF and the decision of the class may be performed on a 4x4 block basis. The filter coefficients may be calculated according to the class. The specific block may be a block having a 4x4 size.

One of 25 classes may be decided as the class of a specific block depending on the direction and activity determined using the gradient of the specific block. Depending on the gradient of the specific block, the rotational transformation, vertical symmetric transform and/or the diagonal symmetric transform of the filter may be applied.

Information related to whether the ALF is applied may be signaled for a specific unit such as a CTB.

An index indicating a filter to be applied to the specific unit, among available filters, may be signaled. Here, the available filters may include fixed filters and filters configured using a parameter set. For example, the parameter set may be an Adaptive Parameter Set (APS). The fixed filters may be equally defined by the encoding apparatus 110 and the decoding apparatus 150. The filter coefficients of the filters configured using the parameter set may be determined based on the coding parameters.

### Entropy encoding and entropy decoding

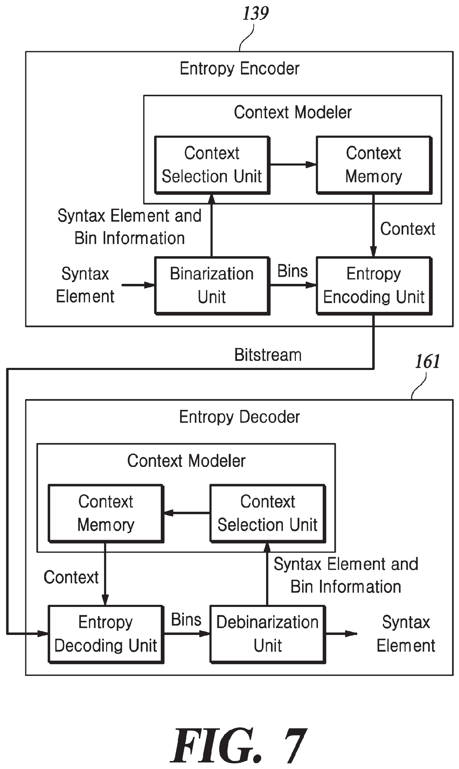

FIG. 7 illustrates entropy encoding and entropy decoding according to an example.

In the upper portion of FIG. 7, the processes of entropy encoding by the entropy encoder 139 are illustrated.

The entropy encoder 139 may include a context modeler, a binarization unit, and an entropy encoding unit. The context modeler may include a context selection unit and context memory.

The binarization unit may generate bins for syntax elements by performing binarization on the syntax elements of the target block. Binarization may be a process of converting the syntax elements into the form of bins.

Information about the syntax elements and the bins may be provided from the binarization unit to the context selection unit.

The context modeler may perform the update of context.

The context may denote occurrence probability information of each bin for the syntax elements which have been encoded.

The context modeler may perform the update of context so as to apply the current probability information to encoding of the bins of the syntax elements of the target block. The updated context may be stored in the context memory. Here, the updated context corresponding to the syntax elements of the target block (bins in the syntax elements of the target block) may be derived by the context modeler.

The context selection unit may select context corresponding to the bin of the syntax element of the target block. The selected context may be loaded from the context memory, and may be used, as the updated context, for entropy encoding of the bins of the syntax elements of the target block.

The updated context may be used for entropy encoding of the syntax elements of the target block.

The entropy encoder may generate encoded information of the syntax element of the target block by performing entropy encoding that uses the generated bins and the updated context, and may generate a bitstream including the encoded information. The entropy encoder may use at least one of an arithmetic encoding method and a bypass encoding method.

In the lower portion of FIG. 7, the processes of entropy decoding by the entropy decoder 161 are illustrated.

The entropy decoder 161 may include a context modeler, an entropy decoding unit, and a debinarization unit. The context modeler may include a context selection unit and context memory.

The context modeler may perform the update of context.

The context may denote occurrence probability information of each bin for the syntax elements which have been decoded.

The context modeler may perform the update of context so as to apply current decoded probability information to entropy decoding for the bins of the syntax elements of the target block. The updated context may be stored in the context memory. Here, the updated context corresponding to the syntax elements of the target block (bins in the syntax elements of the target block) may be derived by the context modeler.

The context selection unit may select context corresponding to the bin of the syntax element of the target block. The selected context may be loaded from the context memory, and may be used, as the updated context, for entropy decoding of the bins of the syntax elements of the target block.

The updated context may be used for entropy decoding of the syntax elements of the target block.

The entropy decoder may generate bins for the syntax elements of the target block by performing entropy decoding on the encoded information of the bitstream based on the updated context. The entropy decoder may use at least one of an arithmetic decoding method and a bypass decoding method.

The debinarization unit may acquire the syntax elements of the target block by performing debinarization on at least one of the generated bins. The debinarization may be a process of converting at least one of the bins into the form of a syntax element.

Information about the syntax elements and the bins may be provided from the debinarization unit to the context selection unit.

Each syntax element may be one of the coding parameters described in embodiments.

### Methods for binarization, debinarization, entropy encoding, and entropy decoding

In embodiments, in order to perform signaling on specific information, one or more of a binarization method, an inverse-binarization method, an entropy encoding method, and an entropy decoding method, which will be enumerated below, may be used.
- Signed 0-th order Exponential Golomb (Exp_Golomb) binarization/debinarization method (abbreviated as se(v))
- Signed k-th order Exp_Golomb binarization/debinarization method (abbreviated as sek(v))
- 0-th order Exp_Golomb binarization/debinarization method for an unsigned positive integer (abbreviated as ue(v))
- k-th order Exp_Golomb binarization/debinarization method for an unsigned positive integer (abbreviated as uek(v))
- Fixed-length binarization/debinarization method (abbreviated as f(n))
- Truncated Rice binarization/debinarization method or truncated unary binarization/debinarization method (abbreviated as tu(v))
- Truncated binary binarization/debinarization method (abbreviated as tb(v))
- Context-adaptive arithmetic encoding/decoding method (abbreviated as ae(v))
- Bit string in bytes (abbreviated as b(8))
- Signed integer binarization/debinarization method (abbreviated as i(n))
- Unsigned positive integer binarization/debinarization method (abbreviated as u(n)) (where 'u(n)' may denote a fixed-length binarization/debinarization method).
- Unary binarization/debinarization method

### Adaptive performance of processes in embodiments

The above-described processes may be performed using the same method and/or corresponding methods in the encoding apparatus 110 and the decoding apparatus 150. Further, in image encoding and/or decoding, a combination of one or more of the foregoing embodiments may be used.

The order of application of the embodiments may differ in the encoding apparatus 110 and the decoding apparatus 150. The order of application of the embodiments may be (at least partially) identical in the encoding apparatus 110 and the decoding apparatus 150.

The processes according to embodiments may be performed on each of the processing targets. The processes according to embodiments may be equally performed on specific targets. For example, such a specific target may be a luma signal and/or a chroma signal.

The processes according to embodiments may be selectively applied/performed based on a specific condition or a specific target.

In an embodiment, the processes according to embodiments may be selectively applied/performed depending on a temporal layer. Temporal layer information for specific processing may be information indicating a temporal layer to/on which processing can be applied/performed. Temporal layer information may be signaled for specific processing. The temporal layer information may denote the lowest layer and/or the uppermost layer to which specific processing can be applied, and may indicate a specific layer to/on which specific processing can be applied/performed. Alternatively, a fixed temporal layer on/to which processing according to embodiments is applied/performed may be defined.

In an embodiment, a type to/on which processing according to embodiments is applied/performed may be defined, and whether processing according to embodiments is applied/performed based on the defined type may be determined. The type may include a picture type, a slice type, a tile group type, etc.

In accordance with description of the embodiments, when specific processing is applied/performed to/on a specific target, a specific condition may be required, and the specific processing may be performed under a specific determination. Whether the specific condition is satisfied based on a specific coding parameter is determined, or when specific determination is made based on a specific coding parameter, the specific coding parameter may be construed as being replaced with another coding parameter. In other words, the specific condition described in embodiments or the coding parameter influencing a specific decision may be regarded as being exemplary, and it may be understood that one or more other coding parameters or combinations of one or more other coding parameters perform the functions of the specified coding parameters in addition to the specified coding parameter.

Processes in embodiments may be applied/performed based on the size of at least one of the blocks described in the embodiments. For example, the blocks may include a coding block, a prediction block, a transform block, a reference block, a current block, and a target block. Alternatively, the blocks may include adjacent blocks in embodiments. Here, the size may be defined as a minimum size and/or a maximum size so that the embodiments are applied, and may be defined as a fixed size for processing in the embodiments. Furthermore, for processing of the case of the embodiments, a first embodiment may be applied to a first size, and a second embodiment may be applied to a second size. That is, the processing of embodiments may be compositely applied according to the size. Also, processing in embodiments may be applied only to the case where the size of the target is equal to or greater than the minimum size and is less than or equal to the maximum size. That is, the processing in embodiments may be applied only to the case where a block size falls within a specific range.

Meanwhile, the encoding apparatus and the decoding apparatus may be implemented based on a neural network.

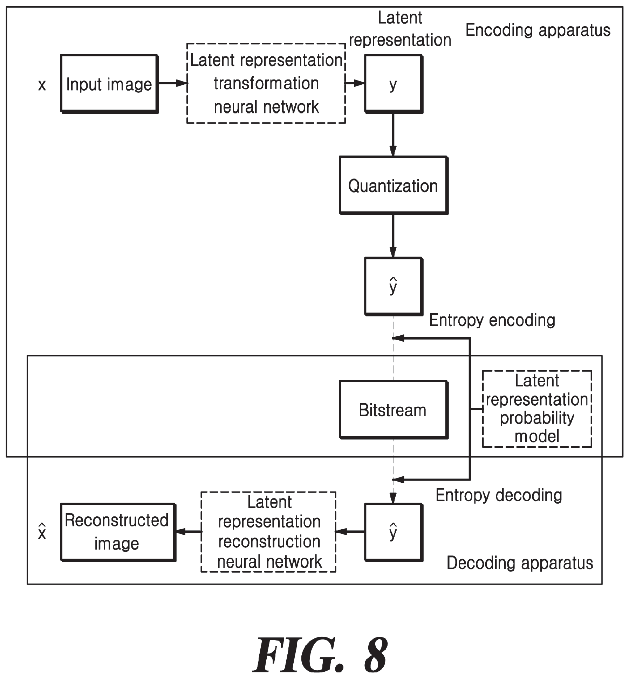

FIG. 8 illustrates a still image encoding apparatus and decoding apparatus implemented based on a neural network.

Referring to FIG. 8, the encoding apparatus transforms an input image *x* to be encoded into a latent representation *y* through a latent representation transformation neural network. The latent representation may also be referred to as a hidden (or latent) vector or a hidden feature map.

The encoding apparatus performs entropy encoding based on a latent representation probability model ***p**_{y}*(***y***) on the latent representation *y* generated through the latent representation transformation neural network to generate a bitstream and transmits the bitstream to a decoding apparatus. Each component *yᵢ* of the latent representation *y* may be quantized prior to the entropy encoding.

The decoding apparatus receives the bitstream from the encoding apparatus and reconstructs the latent representation or the quantized latent representation through entropy decoding based on the latent representation probability model. The latent representation probability model is shared between the image encoding apparatus and the image decoding apparatus.

Thereafter, the decoding apparatus inputs the reconstructed latent representation into a latent representation reconstruction neural network to output a reconstructed image ***X̂***.

In FIG. 8, the blocks indicated by dashed lines may represent modules or neural networks that include trainable parameters. The neural networks or the parameters constituting the neural networks may be trained using a loss function and a backpropagation algorithm.

The loss function includes both the Mean Square Error (MSE) between the input image and the reconstructed image, and the entropy *E*_{*x*~*pxx*}(-log *p_{ŷ}*(*ŷ*)) calculated through the latent representation probability model *p_{ŷ}*(*ŷ*). The MSE may represent the quality of the reconstructed image, while the entropy may represent the number of bits. An optimization method that considers both image quality and the number of bits of the reconstructed image is referred to as rate-distortion optimization. Here, *E* denotes the expectation.

Hereinafter, each constituting element illustrated in FIG. 8 will be described in detail.

### Transformation neural network and reconstruction neural network

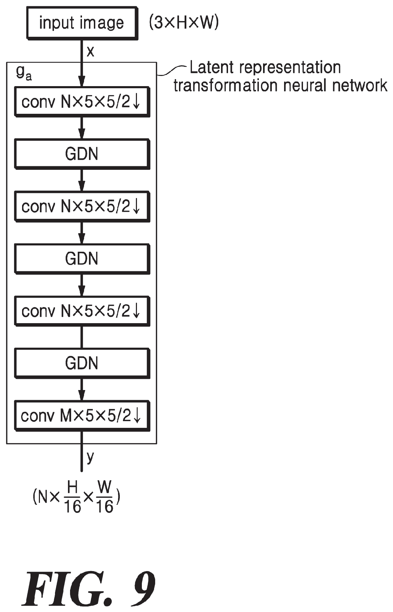

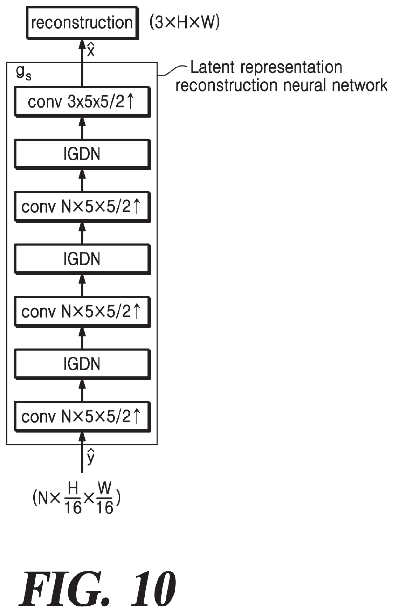

FIG. 9 illustrates one example of a latent representation transformation neural network, and FIG. 10 illustrates one example of a latent representation reconstruction neural network.

A latent representation transformation neural network is a neural network that receives an image as input and outputs a latent representation, and a latent representation reconstruction neural network is a neural network that receives a quantized latent representation as input and outputs a reconstructed image.

In general, the input image is three-dimensional image data composed of three channels, such as RGB or YCbCr, along with height and width, whereas the latent representation may be a feature map with a greater number of channels (e.g., N = 128 or 192) but reduced height and width compared to the input image.

Referring to FIG. 9, the transformation neural network *gₐ* may include four convolution layers and three Generalized Divisive Normalization (GDN) layers.

Each convolution layer may use a 5×5 kernel with a stride of 2. The GDN layer performs normalization that approximates a Gaussian distribution on the components of the latent representation output from the convolution layer. The GDN layer is a nonlinear layer that demonstrates high efficiency in shallow neural networks.

Referring to FIG. 10, the reconstruction neural network *gₛ* may be configured by replacing the convolution layers in the transformation neural network with transposed convolution layers and replacing the nonlinear GDN layer with Inverse Generalized Divisive Normalization layer.

The transformation neural network and the reconstruction neural network illustrated in FIGS. 9 and 10 may also be configured using neural network structures such as fully connected layers or vision transformers, as well as convolution layers.

The kernel size and stride of the convolution layers used in the transformation and reconstruction neural networks, and the number of convolution and GDN layers may be variously configured in consideration of rate-distortion optimization and/or hardware resources.

Also, in a structure using a plurality of convolution layers, different kernel sizes and/or different strides may be used for each convolution layer, or at least one of the convolution layers may use a different kernel size and/or stride compared to other convolution layers.

### Quantization of Latent Representation

Quantization refers to mapping a value within a specific range to a specific value and may be used to limit the number of representable values.

Quantization may generally be classified into uniform quantization and non-uniform quantization. Uniform quantization refers to a method of dividing the value range into a plurality of equal intervals and mapping the values within each equally divided interval to a representative value for that interval. Non-uniform quantization refers to a method of dividing the value range into a plurality of unequal intervals and mapping the values within each interval to a representative value for that interval.

Neural network-based image encoding/decoding may also include a process of quantizing the values of the components of the latent representation. In the present example, since the transformation neural network guarantees nonlinear transformation, uniform quantization may be used as the quantization method.

To enable the use of the backpropagation algorithm, quantization during training time may be replaced with a process of adding uniform noise between -0.5 and 0.5, as shown in Eq. 1. Quantization during inference time may be implemented using a rounding function, as shown in Eq. 2. [Eq. 1] ${y}^{˜} = y \pm U \left(-\frac{1}{2},\frac{1}{2}\right)$ [Eq. 2] $\hat{y} = Round \left(y\right)$

In Eqs. 1 and 2, ***ỹ*** denotes the latent representation with added uniform noise, ***ŷ*** denotes the quantized latent representation, *u*(*a, b*) represents a uniform distribution over the interval between *a* and *b*, and Round( ) denotes the rounding operation.

### Entropy encoding and decoding of latent representation

Entropy encoding is an coding method based on the probability distribution of a random variable, and arithmetic coding may be an example thereof.

The encoding apparatus and the decoding apparatus respectively perform entropy encoding and entropy decoding on the quantized latent representation.

Entropy encoding and decoding of the latent representation may be performed based on a latent representation probability model (i.e., an entropy model) ***p_{y}***(***y***)*,* and ***p_{y}***(***y***) may be designed as a module that includes trainable parameters or a probability distribution estimated through a neural network.

The latent representation probability model may be designed, under the assumption that each component *yᵢ* of the latent representation is independent, as the product of the probability distributions of the individual components, as expressed in Eq. 3. [Eq. 3] ${p}_{y} \left(y\right) = {\prod }_{i} {p}_{{y}_{i}} \left({y}_{i}\right)$

The probability model of the latent representation to which uniform noise in the range of (-1/2, 1/2) is added may be expressed, as shown in Eq. 4, by a convolution operation between the probability distribution of each component and a uniform distribution $U \left(-\frac{1}{2},\frac{1}{2}\right)$. Similarly, the probability model of the quantized latent representation may also be expressed, as shown in Eq. 5, by a convolution operation between the probability distribution of each component and the uniform distribution $U \left(-\frac{1}{2},\frac{1}{2}\right)$. [Eq. 4] $\begin{matrix}{p}_{{y}^{˜}} \left({y}^{˜}\right) = {\prod }_{i} \left({p}_{{y}_{i}}∗U\left(-\frac{1}{2},\frac{1}{2}\right)\right) \left({{y}^{˜}}_{i}\right) \\ = {\prod }_{i} {\int }_{- ∞}^{∞} {p}_{{y}_{i}} \left(y\right) U \left({{y}^{˜}}_{i}-y\left|-\frac{1}{2},\frac{1}{2}\right.\right) dy \\ = {\prod }_{i} {\int }_{{{y}^{˜}}_{i} - \frac{1}{2}}^{{{y}^{˜}}_{i} + \frac{1}{2}} p \left(y\right) dy\end{matrix}$ [Eq. 5] $\begin{matrix}{p}_{\hat{y}} \left(\hat{y}\right) = {\prod }_{i} \left({p}_{{y}_{i}}∗U\left(-\frac{1}{2},\frac{1}{2}\right)\right) \left({\hat{y}}_{i}\right) \\ = {\prod }_{i} {\int }_{- ∞}^{∞} {p}_{{y}_{i}} \left(y\right) U \left({\hat{y}}_{i}-y\left|-\frac{1}{2},\frac{1}{2}\right.\right) dy \\ = {\prod }_{i} {\int }_{{\hat{y}}_{i} - \frac{1}{2}}^{{\hat{y}}_{i} + \frac{1}{2}} {p}_{{y}_{i}} \left(y\right) dy\end{matrix}$

In Eqs. 4 and 5, * represents a convolution operation.

In what follows, unless specifically stated, the latent representation probability model is assumed to indicate the probability model of the quantized latent representation.

### Probability model of latent representation

The probability model of the latent representation may be classified into a probability model independent of input images and a probability model dependent on input images.

The probability model independent on input images refers to a probability model that is applied uniformly to all input images. In other words, the same probability model is used for all input images.

The probability model dependent on input images refers to a probability model that is estimated differently depending on the input image. In other words, different probability models are used depending on the characteristics of the input image. The probability model dependent on the input image may be adaptively estimated from the input image using an additional neural network architecture.

The probability model of the latent representation may be designed as either a parametric model or a non-parametric model. In the case of a parametric model, distributions such as Gaussian distribution or Laplacian distribution may be used; in the case of a non-parametric model, the probability model of the latent representation may be implemented by an appropriate use of a nonlinear function and the result of arithmetic operations on trainable parameters.

FIG. 8 may be regarded as an example in which the probability model of the latent representation is independent of input images.

Eq. 6 illustrates an example of a probability model for the latent representation, which is designed as a Laplacian distribution using trainable parameters µ and σ. [Eq. 6] $\begin{matrix}{p}_{\hat{y}} \left(\hat{y}; μ; σ\right) = {\prod }_{i} {p}_{{\hat{y}}_{i}} \left({\hat{y}}_{i}; μ; {σ}_{i}\right) \\ = {\prod }_{i} \left({\int }_{{\hat{y}}_{i} - \frac{1}{2}}^{{\hat{y}}_{i} + \frac{1}{2}} Lap \left(y; {μ}_{i}; {e}^{{σ}_{i}}\right) dy\right)\end{matrix}$

In Eq. 6, *Lap* denotes a Laplacian distribution, and *µ* and σ represent the mean and scale parameters of the Laplacian distribution, respectively, and may have the same dimensionality as the latent representation. *ŷᵢ, µᵢ, σᵢ* denote the components of ŷ, *µ*, *σ*.

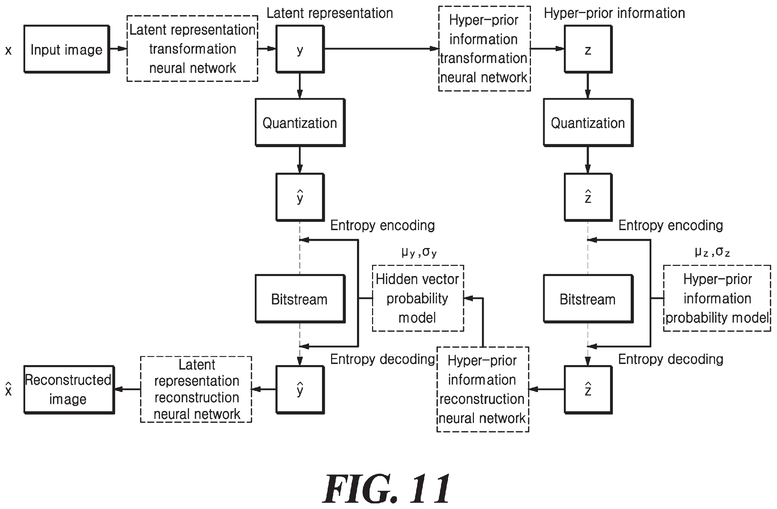

FIG. 11 illustrates a encoding/decoding structure based on a neural network that employs a hidden vector probability model dependent on the input image.

The structure illustrated in FIG. 11 may further include a hyper-prior information transformation neural network, a hyper-prior information probability model, and a hyper-prior information reconstruction neural network in addition to the structure illustrated in FIG. 8.

When the latent representation probability model is dependent on the input image, additional information for estimating the latent representation probability model for the current input image should be generated and transmitted to the decoder; this additional information is referred to as hyper-prior information.

The hyper-prior information transformation neural network is a neural network that receives a latent representation as input and outputs hyper-prior information ***z***, and the hyper-prior information reconstruction neural network is a neural network that receives the quantized hyper-prior information ***ẑ*** as input and outputs parameters of the latent representation probability model. The parameters of the latent representation probability model may include, for example, the mean ***µ_{y}*** and the standard deviation ***σ_{y}***.

The hyper-prior information may be quantized and entropy-coded by the encoder and transmitted to the decoder. For entropy coding, the encoder may use a hyper-prior information probability model. The hyper-prior information probability model may employ the latent representation probability model independent of the input image described above.

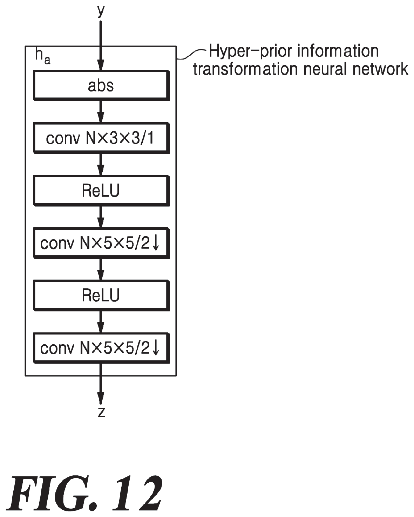

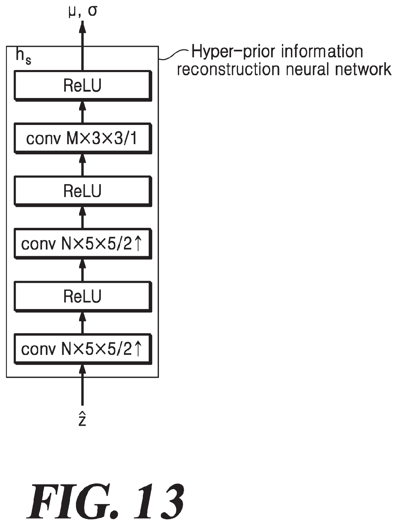

FIGS. 12 and 13 illustrate a hyper-prior information transformation neural network and a hyper-prior information reconstruction neural network according to one embodiment of the present disclosure, respectively.

Referring to FIG. 12, the hyper-prior information transformation neural network may include an absolute value function that performs an absolute value operation on the input latent vector, one convolution layer with a 3×3 kernel and a stride of 1, two convolution layers with a 5×5 kernel and a stride of 2, and nonlinear layers (e.g., Rectified Linear Unit (ReLU)) connecting the convolution layers.

Referring to FIG. 13, the hyper-prior information reconstruction neural network may include two transposed convolution layers with a 5×5 kernel and a stride of 2, one transposed convolution layer with a 3×3 kernel and a stride of 1, and nonlinear layers (e.g., ReLU) connecting the transposed convolution layers. The hyper-prior information reconstruction neural network may be implemented by excluding the absolute value operation from the hyper-prior information transformation neural network and instead adding a ReLU layer thereto.

The number of convolution layers constituting the hyper-prior information transformation and reconstruction neural networks, the size of the kernel used for the convolution layers, and stride values used in the convolution layers may be adjusted as needed; also, one or more of nonlinear activation functions may be selected and used for the nonlinear layers.

In the neural network-based encoding or decoding described above, at least one neural network is used. For example, at least one neural network includes a latent representation transformation neural network for converting a target signal related to an image into a latent representation and a reconstruction neural network for reconstructing the target signal from the latent representation. Also, the at least one neural network may include a latent representation probability model for entropy encoding or decoding the latent representation, a hyper-prior information transformation neural network, and a hyper-prior information reconstruction neural network.

These neural networks may be trained using a backpropagation algorithm that updates the parameters or weights of the neural networks in a direction that minimizes a specific loss function calculated from training data.

In particular, the neural network for image encoding may be trained in an end-to-end manner to simultaneously minimize the distortion between the input image and the reconstructed image and the bit rate of the bitstream transmitted from the encoder to the decoder; this optimization approach is referred to as rate-distortion optimization.

In general, the distortion may be measured using Mean Square Error (MSE) or Multi-Scale Structural Similarity Index Measure (MS-SSIM) between the input image and the reconstructed image, and the bit rate may be measured using entropy (i.e., average information content) *E*_{*x*~*px*}(-*logp_{ŷ}*(*ŷ*)) calculated by the latent representation probability model.

Also, a constant λ may be used to determine the ratio between distortion and bit rate; by using λ as in Eq. 7, the desired level of image quality may be determined. In general, a larger λ indicates a higher image quality level. [Eq. 7] $L = R + λ ⋅ D = {E}_{x ∼ {p}_{x}} \left(-log {p}_{\hat{y}}\left(\hat{y}\right)\right) + λ ⋅ d \left(x, \hat{x}\right)$

Here, L represents the loss function, *x̂* represents the reconstructed image, and d represents the distortion function such as MSE or MS-SSIM.

In particular, when the probability model of the latent representation is dependent on the input image, an additional entropy term for transmitting the hyper-prior information may be included in the loss function, as shown in Eq. 8. [Eq. 8] $\begin{matrix}L = {R}_{\hat{y}} + {R}_{\hat{z}} + λ ⋅ D \\ = {E}_{x ∼ {p}_{x}} \left(-log {p}_{\hat{y}}\left(\hat{y}\right)\right) + {E}_{x ∼ {p}_{x}} \left(-log {p}_{\hat{z}}\left(\hat{z}\right)\right) + λ ⋅ d \left(x, \hat{x}\right)\end{matrix}$

The neural network-based still image encoding/decoding method may be applied to video encoding/decoding together with a method for removing temporal redundancy.

Temporal redundancy may be removed using previously reconstructed reference images, and in particular, an image encoded using the reference images is referred to as a P-frame or a B-frame. A P-frame refers to an image encoded using a single reference image, and a B-frame may refer to an image encoded using two reference images. Meanwhile, an image encoded without using any reference image is referred to as an I-frame, and the encoding of the I-frame may be performed in the same way as applied for encoding still images.

The neural network-based video encoding method may be classified into a method for reducing temporal redundancy in the image space (i.e., the image domain) and a method for reducing temporal redundancy in the latent representation space.

The former follows a structure similar to that of conventional video encoding methods. The latter is a novel method that may be used in neural network-based video encoding, which may address the issue of error propagation in video encoding. Here, error propagation refers to the accumulation of quality degradation within a reconstructed image is repeatedly used as a reference image.

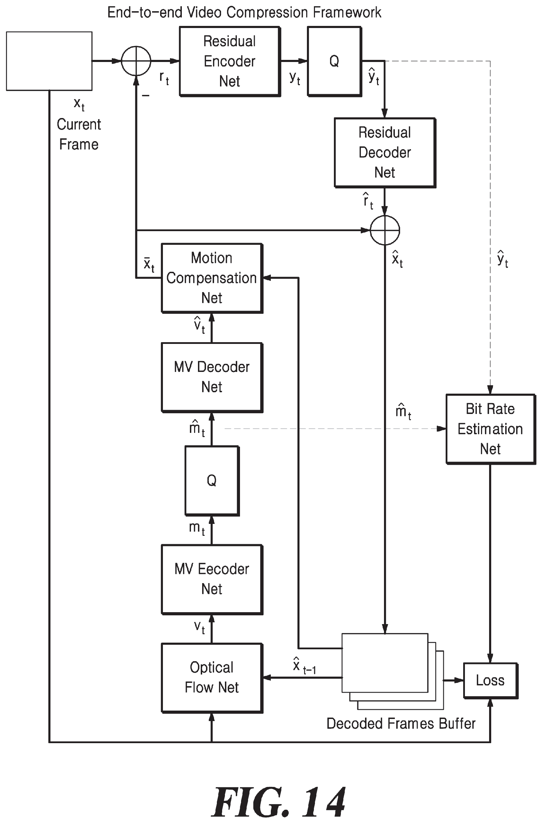

FIG. 14 illustrates a video encoding apparatus based on a neural network that uses a method for reducing temporal redundancy in the image space.

The neural network-based video encoding apparatus illustrated in FIG. 14 may include a neural network for estimating optical flow, a neural network for encoding and decoding a motion vector, a neural network for motion compensation, and a neural network for encoding and decoding a residual image.

The encoding apparatus may input the current image ***xₜ*** and a previously reconstructed reference image ***x̂*_{*t*-1}** into the optical flow neural network (Optical Flow Net in FIG. 14) and obtain a motion vector ***vₜ*** as the output of the neural network.

The motion vector ***vₜ*** may be input to the motion vector encoding neural network (MV Encoder Net in FIG. 14), and a transformed motion vector ***mₜ***, i.e., a latent representation of the motion vector, may be generated accordingly. The latent representation for the motion vector may be quantized and then entropy encoded. To this end, the latent representation transformation neural network, quantization, and latent representation entropy encoding described in the still image encoding may be used.

Meanwhile, the encoding apparatus may reconstruct the motion vector *v̂ₜ* from the latent representation of the motion vector using a motion vector decoding neural network (MV Decoder Net in FIG. 14). The motion vector decoding neural network may be implemented with the same structure as the latent representation reconstruction neural network described above.

The encoding apparatus may input the reconstructed motion vector into a motion compensation neural network (Motion Compensation Net in FIG. 14). The motion compensation neural network may generate a predicted image ***x̅ₜ*** by using the previously reconstructed reference image and the reconstructed motion vector.

The encoding apparatus may input a residual image ***rₜ***, which is the difference between the current image ***xₜ*** and the predicted image ***x̅ₜ***, into a residual encoder neural network and accordingly obtain a latent representation ***yₜ*** of the residual image. The latent representation for the residual image is quantized and then entropy encoded. To this end, the latent representation transformation neural network, quantization, and latent representation probability model described in the still image encoding may be used.

Meanwhile, the encoding apparatus may perform the following decoding process.

As described above, the encoding apparatus may reconstruct a motion vector *v̂ₜ* from the latent representation of the motion vector through the motion vector decoding neural network, and may generate a predicted image ***x̅ₜ*** by using the motion vector reconstructed by the motion compensation neural network and the previously reconstructed reference image.

Meanwhile, the latent representation of the residual image may be reconstructed to a residual image *r̂ₜ* through the residual decoding neural network (Residual Decoder Net in FIG. 14). The residual decoding neural network may be implemented with the same structure as the latent representation reconstruction neural network described above.

The encoding apparatus may reconstruct the current image by adding the reconstructed residual image to the predicted image. In other words, the reconstructed image may be finally generated according to the equation ***x̂ₜ* = *x̅ₜ* + *r̂ₜ*.**

Meanwhile, the decoding apparatus may obtain the quantized latent representation *ŷₜ* and motion vector *m̂ₜ* through entropy decoding from the bitstream received from the encoding apparatus and may reconstruct the current image through the same decoding process as performed by the encoding apparatus.

Hereinafter, an improved image encoding and decoding method implemented using the encoding and decoding apparatuses will be described.

Conventional block-based image compression techniques perform predictive encoding of a target block to be encoded based on previously reconstructed neighbor samples. However, when it is difficult to predict the interior of a block using only neighbor samples, encoding performance degrades due to a large residual between the prediction result and the target block.

To address the problem above, a method of recursively partitioning the interior of a target block to reduce the residual between the previously reconstructed neighbor samples and the partitioned block may be used. However, the method has a drawback of requiring additional bits to transmit block partitioning information.

The present disclosure provides a method of first performing encoding and decoding on partial information inside a target block and then encoding the remaining information inside the target block, excluding the partial information based on the decoded partial information. According to the present disclosure, it is possible to improve encoding efficiency even when it is difficult to predict the interior of a block using only neighbor samples.

Here, the partial information inside the target block may refer to partial samples or a partial region within the target block. Encoding partial information may refer to encoding partial samples or samples within a partial region.

Also, the remaining information within the target block may refer to a region excluding the partial region within the target block. Encoding the remaining information may refer to encoding the samples within the remaining region excluding the partial region in the target block.

The method according to the present disclosure may be applied both when encoding is directly performed in the image domain (i.e., image space) and when encoding is performed after converting the image into a latent representation space.

In the present disclosure, for the sake of convenience, the two cases are described separately; however, the essential characteristics remain the same in that partial information is first encoded, and then the remaining information of the target block is encoded based on the partial information encoded.

Hereinafter, for the convenience of description, it is assumed that encoding and decoding are performed in block units. Here, the block may be the CTU, CU, PU, or TU. However, the present disclosure is not limited thereto, and the unit of encoding and decoding may also be a tile, slice, or picture.

The constituting elements or "units" included in the apparatuses illustrated in the following drawings may be implemented in hardware, software, or a combination of hardware and software. Also, the functions of each component may be implemented in software, and a microprocessor may be configured to execute the functions of the software corresponding to each constituting element. At least some of the constituting elements or units may be implemented based on neural networks.

### 1. Encoding/decoding in the image space

### (1) Encoding in the image space

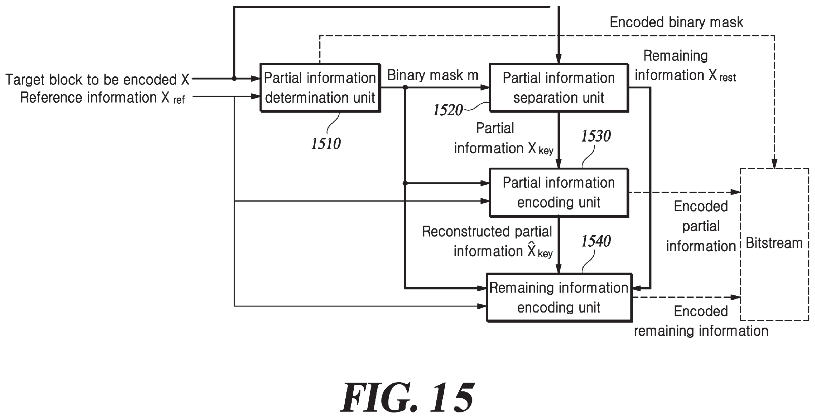

FIG. 15 is a block diagram of an encoding apparatus for encoding a target block in the image space according to one embodiment of the present disclosure.

The partial information determination unit 1510 selects the position of partial information within the target block X to be encoded first. Position information indicating the selected partial information is encoded and transmitted to the decoding apparatus.

For example, the partial information determination unit 1510 may output a binary mask *m* in which the position corresponding to the partial information is set to true and the position corresponding to the remaining information is set to false. The binary mask may be a two-dimensional map in which different first and second values are assigned to the positions corresponding to the partial information and the remaining information, respectively.

Additionally, the partial information determination unit 1510 may use a reconstructed region as reference information *X_{ref}* to determine the partial information within the target block.

In the embodiments of the present disclosure, the reconstructed region may be a region that belongs to a current picture including the target block or a previously reconstructed reference picture. For example, the reconstructed region may include at least one previously reconstructed block neighboring the target block within the current picture. The at least one reconstructed block may be located above and/or to the left of the target block.

The partial information separation unit 1520 receives the target block and the binary mask as inputs, separates partial information *X_{ref}* and remaining information *Xᵣₑₛₜ* within the target block, and delivers the partial information and remaining information to the partial information encoding unit 1530 and the remaining information encoding unit 1540, respectively.

The partial information encoding unit 1530 performs encoding on the partial information and outputs encoded partial information. The partial information may be encoded directly without involving prediction or may be encoded through prediction using reference information.

Additionally, the partial information encoding unit 1530 reconstructs the partial information and outputs the reconstructed partial information *X̂_{key}.*

The remaining information encoding unit 1540 may encode the remaining information using the decoded partial information. Also, to encode the remaining information, reference information *X_{ref}* may additionally be used.

The information on the binary mask, the encoded partial information, and the encoded remaining information may be delivered to the decoding apparatus in the form of a bitstream.

Hereinafter, exemplary embodiments of operations performed by each constituting element shown in FIG. 15 will be described in detail.

### ■ Partial information determination unit

The partial information determination unit 1510 may determine the position of the partial information within the target block in the form of a binary mask and encode the information representing the binary mask.

The partial information may refer to one or more sub-blocks selected from among the non-overlapping sub-blocks obtained by partitioning the target block. The remaining information may refer to the sub-blocks that are not selected.

For example, the target block may be partitioned into sub-blocks in a grid pattern with predetermined fixed intervals.

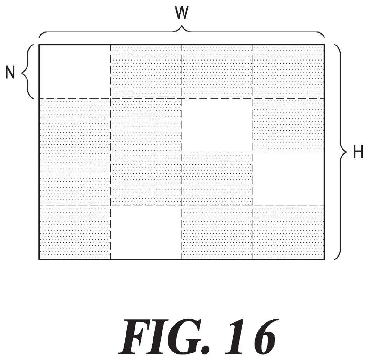

FIG. 16 illustrates an example in which a target block is divided at predetermined intervals and four partial pieces of information are selected.

Each region partitioned by the grid becomes a sub-block of the target block.

The sub-blocks indicated in white represent the selected partial information, while the hatched sub-blocks represent the remaining information.

The binary mask is the information indicating the positions of the partial information and refers to the information that distinguish between the partial information and the remaining information.

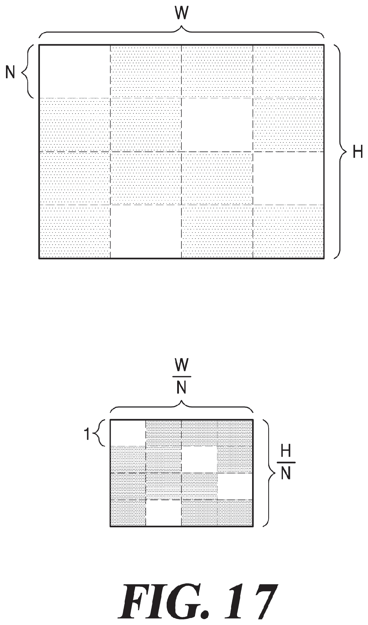

FIG. 17 illustrates a method of expressing a binary mask.

As illustrated in FIG. 17(A), the binary mask may represent, for each sample within the target block having a height H and a width W, whether each sample corresponds to partial information, using a value of true (e.g., 1) or false (e.g., 0). Alternatively, as shown in FIG. 17(B), the binary mask may be represented in a simplified manner by assigning true and false values to the sub-blocks constituting the target block.

In some embodiments, the partial information determination unit 1510 may define a plurality of patterns for the binary mask and select a binary mask to be applied to the target block from among the predefined plurality of patterns. In this case, index information indicating one of the plurality of predefined patterns may be encoded as the information for the binary mask.

The method of determining the pattern with optimal coding efficiency from among a predefined set of patterns and encoding the information may reduce the computational complexity required for binary mask determination and the number of bits needed to express the binary mask.

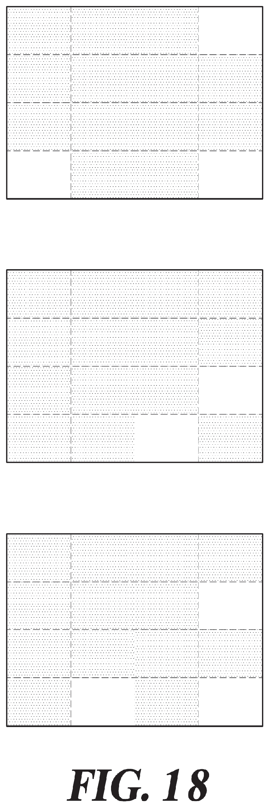

For example, when the target block to be encoded is partitioned into 16 sub-blocks as shown in FIG. 18, the number of possible cases for selecting a binary mask is 2¹⁶. However, a few (e.g., three) patterns may be predefined. By determining one pattern to be applied to the target block from among the predefined patterns and encoding index information indicating the determined pattern from among the predefined patterns, the number of bits required to express the binary mask may be reduced.

An example of a method for determining one of the predefined patterns is as follows.

For each binary mask of the predefined patterns, encoding and decoding processes for the target block are performed using the respective binary mask as described below, and the number of bits and the distortion (i.e., distortion between the target block and the reconstructed block) generated when using the respective binary masks are measured.

The number of bits and distortion measured are used as inputs to a rate-distortion loss function to compute the cost for each binary mask of the patterns. Here, the distortion may be calculated using, for example, a Hadamard difference (SATD).

As a result of the cost measurement based on the rate-distortion loss function, the binary mask of the pattern with the smallest cost may be determined as the binary mask used for encoding the target block.

In another embodiment, the binary mask for the target block may be determined using a neural network trained to predict a binary mask suitable for the input block.

For example, the partial information determination unit 1510 may determine the binary mask using a transformer-based neural network.

In what follows, the present disclosure will be described with reference to an example in which a transformer-based neural network is used for generating a binary mask. However, the present disclosure is not limited to the specific description; a neural network trained to predict a binary mask for an input block as described above may be used.

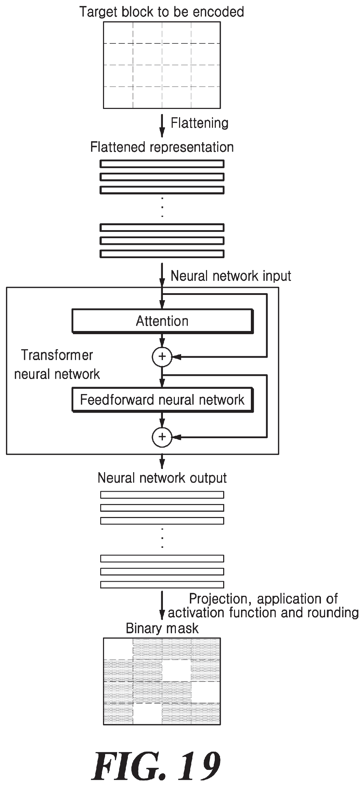

FIG. 19 illustrates a process of generating a binary mask based on a transformer neural network.

Referring to FIG. 19, the sub-blocks of the target block to be encoded are each flattened into one-dimensional space. The flattened vectors are input into a transformer neural network having a structure in which an attention module and a feedforward neural network (FNN) are connected to each other. Also, a vector obtained by flattening reference information may also be used as an input to the transformer neural network.

The attention module calculates weights representing correlations between the sub-blocks using a self-attention mechanism. The weighted sub-blocks (i.e., one-dimensional vectors) are input into the feedforward neural network, which outputs features for the one-dimensional vectors.

The partial information determination unit 1510 projects the neural network output for the one-dimensional vectors into one-dimensional space and applies a sigmoid activation function and rounding operation to the projected values to generate a binary representation for each sub-block.

The binary representations for the sub-blocks may be determined as a simplified binary mask in which each sub-block is assigned a value of true (e.g., 1) or false (e.g., 0).

The simplified binary mask may be encoded using lossless encoding, such as Huffman coding.

### ■ Partial information separation unit

The partial information separation unit 1520 receives the target block and the position of the partial information in the form of a binary mask as inputs and outputs the selected partial information and the unselected remaining information for the target block.

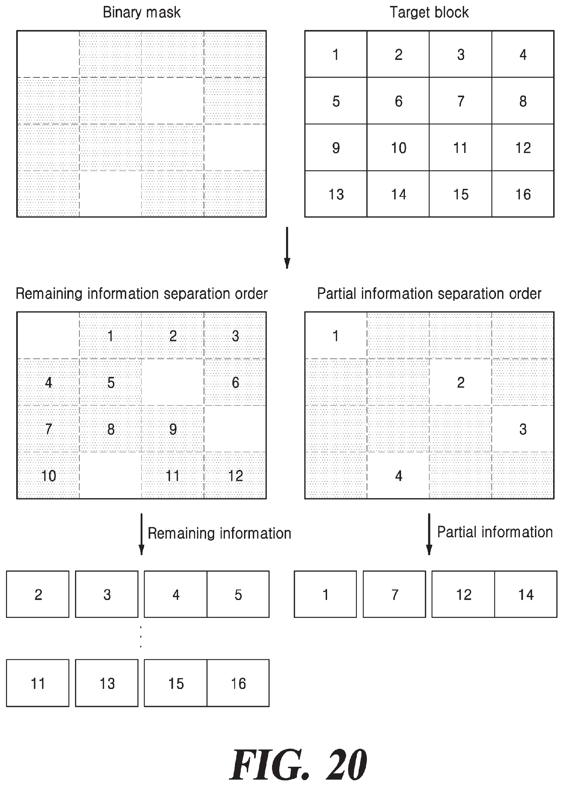

FIG. 20 illustrates a process of classifying selected partial information and unselected remaining information for a target block.

The partial information separation unit 1520 selects, among the sub-blocks within the target block, the sub-blocks corresponding to "true" in the binary mask (indicated in white color in the binary mask of FIG. 20) as partial information and selects the sub-blocks corresponding to "false" in the binary mask (indicated with hatching in the binary mask of FIG. 20) as remaining information.

The sub-blocks selected as partial information and the sub-blocks selected as remaining information may be output in the raster scan order, respectively.

### ■ Partial information encoding unit

The partial information encoding unit 1530 may encode the partial information selected within the target block.

The partial information may be encoded directly without involving prediction.

Alternatively, the partial information may be prediction-encoded using reference information of the target block.

When prediction encoding is performed, the partial information encoding unit 1530 may generate prediction information for the partial information using the reference information for the target block, generate residual information, which is the difference between the prediction information and the partial information, and encode the residual information.

The partial information itself or the residual information may be encoded using the entropy encoder of the conventional encoding apparatus illustrated in FIG. 1. Alternatively, it may be transformed into a latent representation and encoded by the neural network-based encoding apparatus illustrated in FIG. 8 or FIG. 14.

Prediction of the partial information may involve a prediction neural network trained to predict the image at masked locations using as input an image with some portions masked.

For example, prediction of the partial information may be performed using a prediction neural network that takes the position of the partial information and reference information within the target block as inputs. In other words, prediction information for the partial information may be generated using a neural network trained to minimize the error between the output and the partial information, with the position of the partial information and the reference information as inputs.

To this end, the partial information encoding unit 1530 may include a neural network-based partial information prediction unit.

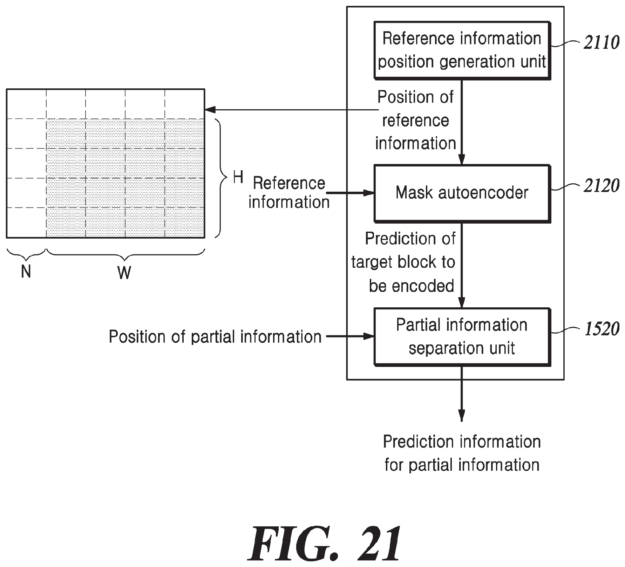

FIG. 21 illustrates a partial information prediction unit according to one embodiment of the present disclosure.

The partial information prediction unit may include a reference information position generation unit 2110, a masked autoencoder 2120, and a partial information separation unit 1520.

In the embodiments of the present disclosure, a masked autoencoder is used as the prediction neural network; however, the present disclosure is not limited thereto. In other words, in addition to the structure of the masked autoencoder, a neural network with a different structure trained to predict an image at the masked locations using a partially masked image may also be used.

The reference information position generation unit 2110 may generate an extended block by expanding the W x H-sized target block to include reference information and may generate a binary mask that expresses the positions of the reference information within the extended block as true (e.g., 1) and the positions corresponding to the target block (i.e., the positions of sub-blocks within the target block) as false (e.g., 0). In FIG. 21, the positions of the reference information are illustrated in white, and the positions corresponding to the target block are illustrated with hatching. The binary mask may be used as information representing the position of the reference information.

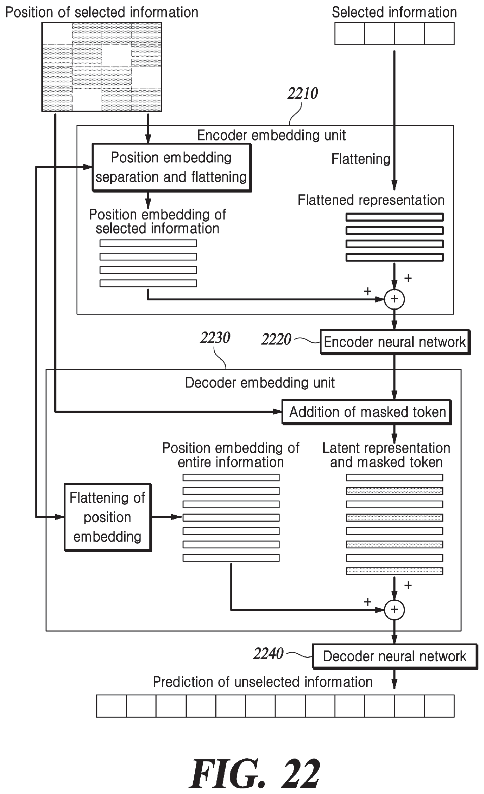

The masked autoencoder 2120 receives reference information and its position and outputs a prediction block for the target block. The operation of the masked autoencoder 2120 will be described later with reference to FIG. 22.

The partial information separation unit 1520 outputs prediction information for the partial information by extracting sub-blocks corresponding to the position of the partial information within the prediction block.

FIG. 22 illustrates the operation of a masked autoencoder according to one embodiment of the present disclosure.

The masked autoencoder is a transformer-based neural network that receives a portion of the overall image information along with its position as input and outputs predictions for the unselected information.

Referring to FIG. 22, the masked autoencoder may have a structure in which an encoder embedding unit 2210, an encoder neural network 2220, a decoder embedding unit 2230, and a decoder neural network 2240 are sequentially connected.

The encoder embedding unit 2210 receives a selected portion of the overall information and the position of the selected information as input. Each selected piece of information is flattened into one-dimensional space, and a positional embedding corresponding to the selected position is added to the flattened one-dimensional vector, which is then passed to the encoder neural network 2220.

The encoder neural network 2220 receives the flattened vectors combined with positional embeddings of the selected information as input data and outputs latent representations corresponding to the input data.

The decoder embedding unit 2230 receives the latent representations output from the encoder neural network and the positions of the selected information. The latent representations are placed at the positions corresponding to the selected information, while mask tokens are placed at the positions corresponding to the unselected information. The latent representations with added mask tokens are summed with positional embeddings for the entire information and then passed to the decoder neural network 2240.

The decoder neural network 2240 predicts the information at the unselected positions based on the output from the decoder embedding unit 2230.

The partial information prediction unit illustrated in FIG. 21 may construct input data using the reference information as the "selected information" of FIG. 22 and the location of the reference information as the "position of the selected information" and generate a prediction block for the target block by inputting the constructed input data into the masked autoencoder.

Meanwhile, the partial information encoding unit 1530 may reconstruct the partial information. When predictive encoding is performed, the partial information encoding unit may reconstruct the residual information for the partial information and output the reconstructed partial information using the reconstructed residual information and the prediction information for the partial information.

### ■ Remaining information encoding unit

The remaining information encoding unit 1540 may encode the remaining information within the target block using the reconstructed partial information and the location of the partial information output from the partial information encoding unit 1530 and accordingly output the encoded remaining information. Also, the remaining information may be decoded for encoding of blocks to be encoded subsequently.

The encoding/decoding of the remaining information may be performed using the conventional encoding/decoding apparatus illustrated in FIG. 1 or using the neural network-based encoding/decoding apparatus illustrated in FIG. 8 or FIG. 14.

Also, reference information for the target block may be additionally used to encode the remaining information.

The remaining information encoding unit 1540 may generate prediction information for the remaining information using the partial information and the location of the partial information and may encode residual information representing the difference between the remaining information and the prediction information. The prediction may be performed based on a neural network. To this end, the remaining information encoding unit may include a neural network-based remaining information prediction unit.

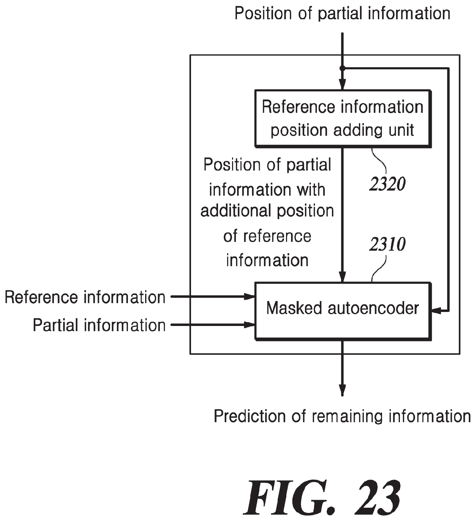

FIG. 23 illustrates a remaining information prediction unit according to one embodiment of the present disclosure.

As illustrated in FIG. 23, the remaining information prediction unit may include a masked autoencoder 2310. The masked autoencoder 2310 of FIG. 23 may have the same structure as the masked autoencoder of FIG. 22.

In some embodiments, to predict the remaining information using the masked autoencoder, the partial information of the target block and the location of the partial information may be used respectively as the "selected information" and the "location of the selected information" input to the masked autoencoder in FIG. 22. The masked autoencoder may receive the partial information and the location of the selected partial information as inputs and may generate prediction information for the remaining information within the target block.

In other embodiments, reference information for the target block may additionally be used. In this case, the partial information of the target block and the reference information may be used as the "selected information" in FIG. 22, and the location of the partial information and the location of the reference information may be used as the "location of the selected information."

When the reference information is additionally used, the remaining information prediction unit may include a reference information position adding unit 2320.

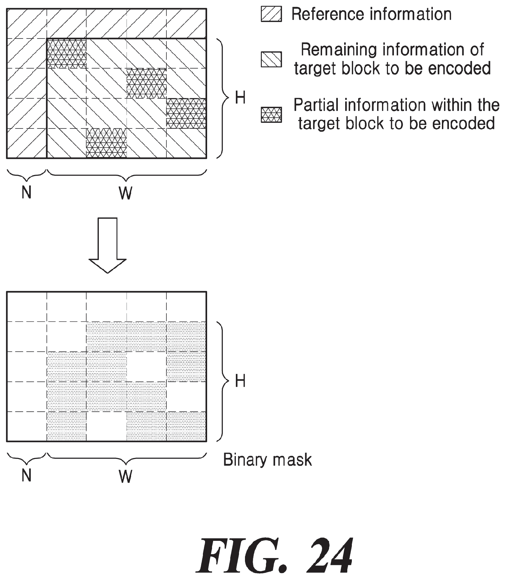

Referring to FIG. 24, the reference information position adding unit 2320 may generate an extended block by expanding the target block to include reference information and may generate a binary mask in which the positions of the reference information within the extended block and the position of partial information within the target block are represented as true (e.g., 1), and the position of the remaining information is represented as false (e.g., 0).

The generated binary mask may be used to identify the position of partial information and the position of the reference information within the target block.

The mask autoencoder 2310 may receive the reference information, partial information within the target block, the position of the reference information, and the position of partial information and may generate prediction information for the remaining information.

### (2) Decoding in the image space

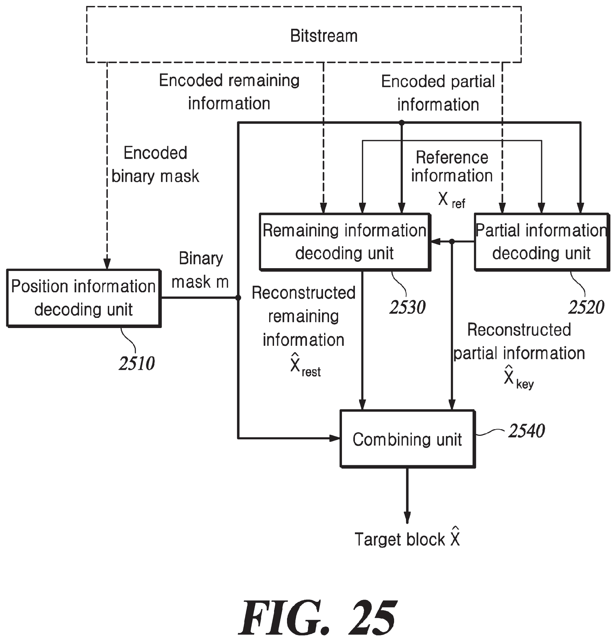

FIG. 25 illustrates a decoding apparatus for decoding a target block in the image space according to one embodiment of the present disclosure.

The position information decoding unit 2510 decodes position information indicating the position of partial information that is decoded first within the target block.

The position information may be the information on a binary mask. The position information decoding unit 2510 may decode the information on the encoded binary mask and output a binary mask *m* in which the position corresponding to the partial information is set to true, and the position of the remaining information is set to false.

The partial information decoding unit 2520 reconstructs the partial information by decoding the encoded partial information.

The encoded partial information may be encoded data of the partial information itself or encoded data of a residual for the partial information. The decoding of the encoded partial information may be performed by an entropy decoder of a conventional decoding apparatus illustrated in FIG. 1 or by a neural network-based decoding apparatus illustrated in FIG. 8 or FIG. 14.

When the partial information is prediction-encoded using reference information, the encoded partial information may be a residual. In this case, the partial information decoding unit 2520 may generate prediction information for the partial information using the reference information and the positions of the partial information output by the position information decoding unit 2510 and may generate reconstructed partial information *X̂_{key}* by adding the prediction information and the residual.

For the prediction of the partial information, the partial information decoding unit 2520 may include a partial information prediction unit based on the neural network identical to that of the encoding apparatus. Since the partial information prediction unit has already been described with reference to FIG. 21, further description will be omitted to avoid redundancy.

The remaining information decoding unit 2530 may generate reconstructed remaining information *X̂ᵣₑₛₜ* using the encoded remaining information. The encoded remaining information may be the information representing a residual of the remaining information.

To reconstruct the remaining information, a conventional decoding apparatus illustrated in FIG. 1 or a neural network-based decoding apparatus illustrated in FIG. 8 or FIG. 14 may be used.

The remaining information decoding unit 2530 may include a remaining information prediction unit based on the neural network identical to that of the encoding apparatus for predictive decoding of the remaining information. The remaining information prediction unit may generate prediction information for the remaining information using the partial information and the position of the partial information. The prediction information is added to the residual information to generate the reconstructed remaining information.

Meanwhile, to generate prediction information for the remaining information, the remaining information prediction unit may additionally use the reference information for the target block.

Since the remaining information prediction unit has already been described with reference to FIG. 23, further descriptions will be omitted.

The combining unit 2540 generates a reconstructed block *X̂* for the target block by combining the reconstructed partial information and the reconstructed remaining information. In other words, the combining unit generates a reconstructed block by arranging the reconstructed partial information and the remaining information at their corresponding positions.

### 2. Encoding and decoding in the latent representation space

### (1) Encoding in the latent representation space

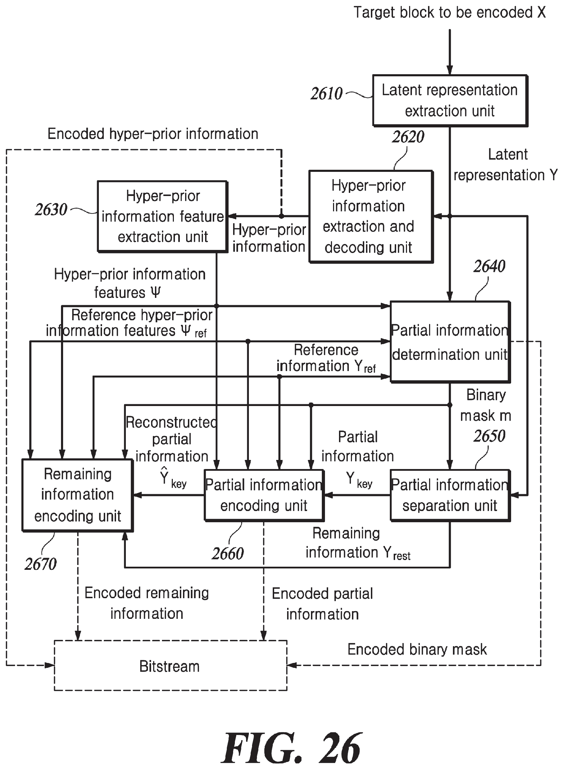

FIG. 26 illustrates an encoding apparatus for encoding a target block in the latent representation space according to one embodiment of the present disclosure.

The image data of the target block may be transformed into a latent representation and then encoded. To this end, the encoding apparatus may include a latent representation extraction unit 2610. Also, the encoding apparatus may include a partial information determination unit 2640, a partial information separation unit 2650, a partial information encoding unit 2660, and a remaining information encoding unit 2670 to encode the latent representation.

Also, to more accurately estimate the probability model for the latent representation, hyper-prior information may be used. When hyper-prior information is used, the encoding apparatus may further include a hyper-prior information extraction and encoding unit 2620 and a hyper-prior information feature extraction unit 2630.

In what follows, exemplary embodiments for each constituting element of the encoding apparatus illustrated in FIG. 26 will be described in detail.

### ■ Latent representation extraction unit

The latent representation extraction unit 2610 transforms the image data of the target block into a latent representation. To this end, the latent representation extraction unit 2610 may be implemented as a latent representation transformation neural network illustrated in FIG. 9.

### ■ Hyper-prior information extraction and encoding unit

The hyper-prior information extraction and encoding unit 2620 receives a latent representation for the target block and extracts and encodes the hyper-prior information that assists in estimating the probability distribution of the latent representation.

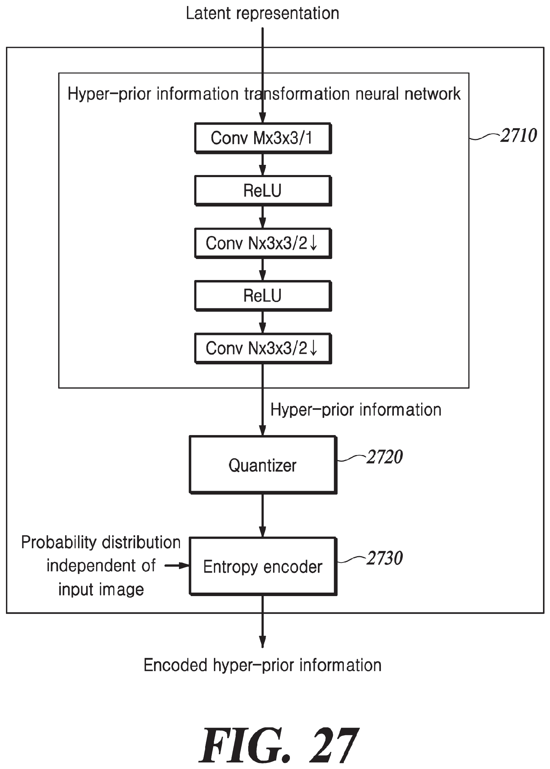

FIG. 27 illustrates a hyper-prior information extraction and encoding unit according to one embodiment of the present disclosure.

The hyper-prior information extraction and encoding unit 2620 may include a hyper-prior information transformation neural network 2710, a quantizer 2720, and an entropy encoder 2730.

The hyper-prior information transformation neural network 2710 receives the latent representation for the target block and outputs hyper-prior information for the latent representation. For example, the hyper-prior information transformation neural network 2710 may output hyper-prior information whose width and height are each reduced to one-fourth compared to the latent representation.

As illustrated in FIG. 27, the hyper-prior information transformation neural network 2710 may include three convolutional layers and ReLU layers arranged between the convolutional layers. Alternatively, the hyper-prior information transformation neural network 2710 may be implemented using the structure illustrated in FIG. 12.

The quantizer 2720 quantizes the hyper-prior information output from the hyper-prior information transformation neural network 2710. For example, the quantizer 2720 may output quantized hyper-prior information by rounding the hyper-prior information at the decimal point.

The entropy encoder 2730 may encode the quantized hyper-prior information using a probability model for the hyper-prior information. A probability model independent of the input image may be used as the probability model for the hyper-prior information. For example, range encoding that uses a probability distribution independent of the input image may be used.

### ■ Hyper-prior information feature extraction unit

The hyper-prior information feature extraction unit 2630 generates hyper-prior information features, which are parameters of the latent representation probability model, using the hyper-prior information output from the hyper-prior information transformation neural network 2720.

The hyper-prior information feature extraction unit 2630 may be implemented as a hyper-prior information reconstruction neural network. The hyper-prior information reconstruction neural network may have a structure in which convolutional layers and ReLU activation functions are sequentially connected.

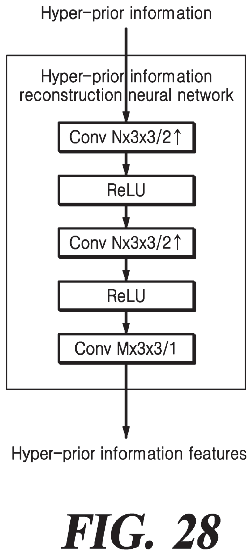

For example, as illustrated in FIG. 28, the hyper-prior information reconstruction neural network may include one convolutional layer with a kernel size of 3×3 and a stride of 1, two convolutional layers with a kernel size of 3×3 and a stride of 2, and ReLU function connecting the convolutional layers.

Alternatively, a hyper-prior information reconstruction neural network having the structure illustrated in FIG. 13 may be used.

### ■ Partial information determination unit

The partial information determination unit 2640 selects the position of partial information to be encoded first among the latent representation for the target block. The information indicating the position of the selected partial information is encoded and transmitted to the decoding apparatus.

For example, the partial information determination unit 2640 may output a binary mask *m* in which the position corresponding to the partial information is set to true, and the position of the remaining information is set to false.

In addition to determining the position of the partial information in the latent representation space, the partial information determination unit 2640 may perform the same operation as that performed by the partial information determination unit 1510 of FIG. 15.

For example, the partial information determination unit 2640 may generate a binary mask for the latent representation of the binary target block using a neural network trained to predict a binary mask for the input latent representation.

In some embodiments, the neural network for generating the binary mask may be implemented as a transformer neural network.

For example, as illustrated in FIG. 19, the partial information determination unit 2640 may flatten sub-blocks partitioned from the latent representation of the target block, and input the flattened representation (or vector) into a transformer neural network to generate a binary mask. Also, a flattened vector of the reference information may be additionally input into the transformer neural network.

In another example, the partial information determination unit 2640 may additionally use hyper-prior information features to generate the binary mask. In this case, the hyper-prior information features output from the hyper-prior information feature extraction unit 2630 may be input into the transformer neural network of FIG. 19 together with the flattened representation of the latent representation.

In yet another example, in addition to the hyper-prior information features for the latent representation of the target block, hyper-prior information features for the reference information (hereinafter referred to as "reference hyper-prior information features") may be further input into the transformer neural network.

Here, the reference information refers to the latent representation of a previously reconstructed region, and the reference hyper-prior information features refer to the features of the hyper-prior information for the reference information. As already described in the context of encoding in the image space, the previously reconstructed region may be a region belonging to the current picture to which the target block belongs or a reference picture reconstructed prior to the current picture. For example, the previously reconstructed region may be at least one previously reconstructed block adjacent to the target block. The at least one previously reconstructed block may be located above and/or to the left of the target block.

### ■ Partial information separation unit

The partial information separation unit 2650 separates partial information *Y_{key}* within the latent representation of the target block and the remaining information *Yᵣₑₛₜ* excluding the partial information based on the binary mask output from the partial information determination unit 2640 and delivers the partial information and the remaining information to the partial information encoding unit 2660 and the remaining information encoding unit 2670, respectively.

The partial information separation unit 2650 may output the sub-blocks corresponding to the partial information among the sub-blocks of the latent representation in the raster scan order and may output the sub-blocks corresponding to the remaining information among the sub-blocks of the latent representation in the raster scan order.

### ■ Partial Information Encoding Unit

The partial information encoding unit 2660 estimates a probability model for encoding the partial information using hyper-prior information features corresponding to the partial information among the hyper-prior information features corresponding to the latent representation of the target block. The partial information is entropy-encoded using the estimated probability model. Before entropy encoding, the partial information may be quantized.

To more accurately estimate the probability model, the partial information encoding unit 2660 may additionally use at least one of prediction information for the partial information or hyper-prior information features of the reference information.

Also, the partial information encoding unit may reconstruct the partial information and output the reconstructed partial information to the remaining information encoding unit 2670.

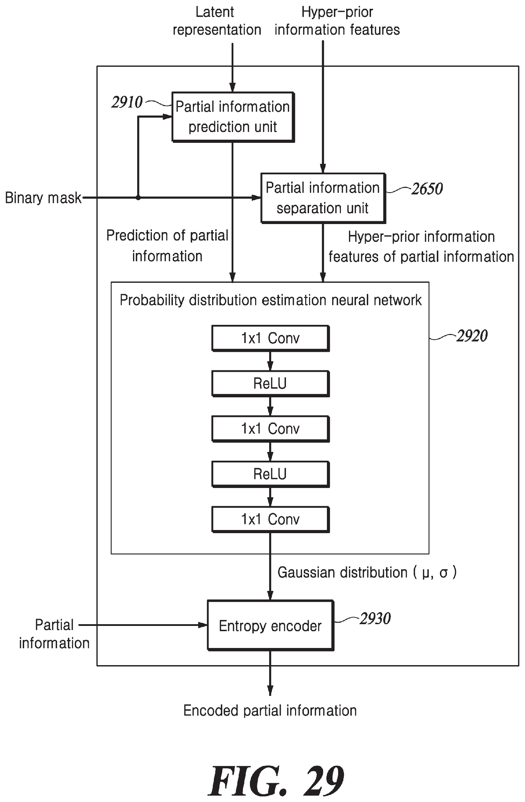

FIG. 29 illustrates a partial information encoding unit according to one embodiment of the present disclosure.

In some embodiments, the partial information encoding unit 2660 may include an entropy encoder 2930 that encodes the partial information using hyper-prior information features for the partial information output from the partial information separation unit 2650.

The partial information separation unit 2650 receives the hyper-prior information features corresponding to the latent representation and the binary mask and extracts the hyper-prior information features corresponding to the partial information. The entropy encoder 2930 performs entropy encoding on the partial information using a probability model based on the hyper-prior information features of the partial information.

In another embodiment, the partial information encoding unit 2660 may further include a probability distribution estimation neural network 2920 to improve the accuracy of probability model estimation.

The probability distribution estimation neural network may receive, along with the hyper-prior information features for the partial information, at least one of prediction information for the partial information or hyper-prior information features of the reference information and may estimate a probability model for the partial information. For example, the probability distribution estimation neural network may estimate parameters of a Gaussian distribution.

The probability distribution estimation neural network 2920 may include, for example, three convolutional layers with a kernel size of 1×1 and ReLU functions connecting the convolutional layers. To use the probability distribution estimation neural network 2920, the corresponding neural network may be trained to estimate the probability model of the latent representation by taking prediction signals for the latent representation and hyper-prior information as inputs.

Meanwhile, to generate prediction information for the partial information, the partial information encoding unit 2660 may include a partial information prediction unit 2910.

The partial information prediction unit 2910 generates prediction information for the partial information using reference information. The prediction process performed by the partial information prediction unit 2910 may be the same as the prediction process of the partial information prediction unit illustrated in FIG. 21.

The entropy encoder 2930 performs encoding for the partial information using the estimated probability model.

### ■ Remaining information encoding unit

The remaining information encoding unit 2670 estimates a probability model for encoding the remaining information using hyper-prior information features corresponding to the remaining information, excluding the partial information, among the hyper-prior information features corresponding to the latent representation of the target block. The remaining information is encoded using the estimated probability model.

To more accurately estimate the probability model, the remaining information encoding unit 2670 may additionally use at least one of prediction information for the remaining information or hyper-prior information features of the reference information.

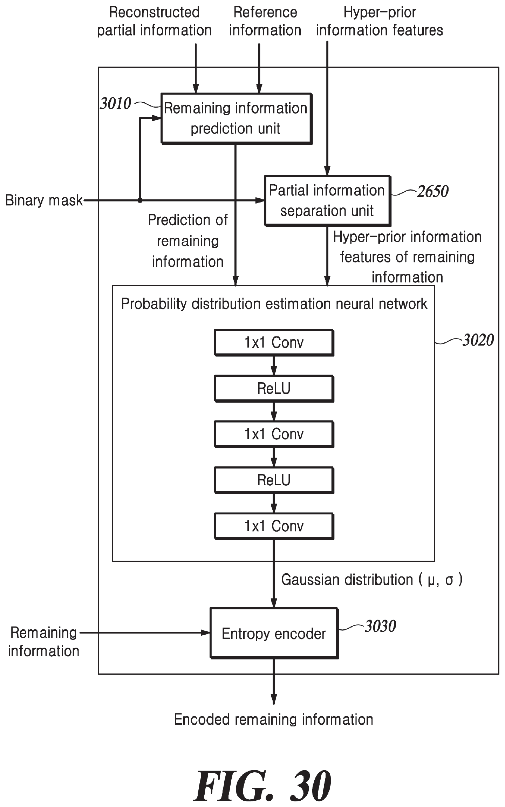

FIG. 30 illustrates a remaining information encoding unit according to one embodiment of the present disclosure.

In some embodiments, the remaining information encoding unit 2670 may include an entropy encoder 3030 that encodes the remaining information using hyper-prior information features for the remaining information output from the partial information separation unit 2650.

The partial information separation unit 2650 receives the hyper-prior information features corresponding to the latent representation and the binary mask and extracts the hyper-prior information features corresponding to the remaining information. The entropy encoder 3030 performs entropy encoding on the remaining information using a probability model based on the hyper-prior information features for the remaining information.

In another embodiment, the remaining information encoding unit 2670 may further include a probability distribution estimation neural network 3020 to improve the accuracy of probability model estimation.

The probability distribution estimation neural network 3020 may receive, along with the hyper-prior information features for the remaining information, at least one of prediction information for the remaining information or hyper-prior information features of the reference information and may estimate a probability model for the remaining information. The probability distribution estimation neural network 3020 may estimate parameters of a Gaussian distribution.

For example, in the same way as the probability distribution estimation neural network 2920 of FIG. 29, the probability distribution estimation neural network 3020 may be composed of three convolutional layers having a kernel size of 1×1 and ReLU functions connecting the convolutional layers.

For prediction of the remaining information, the remaining information encoding unit 2670 may include a remaining information prediction unit 3010. The remaining information prediction unit 3010 generates prediction information for the remaining information based on the reconstructed partial information. Reference information may additionally be used to generate the prediction information for the remaining information. The prediction process of the remaining information prediction unit 3010 may be the same as the prediction process of the remaining information prediction unit illustrated in FIG. 23.

The entropy encoder 3030 performs encoding for the remaining information using the estimated probability model.

### (2) Decoding in the latent representation space

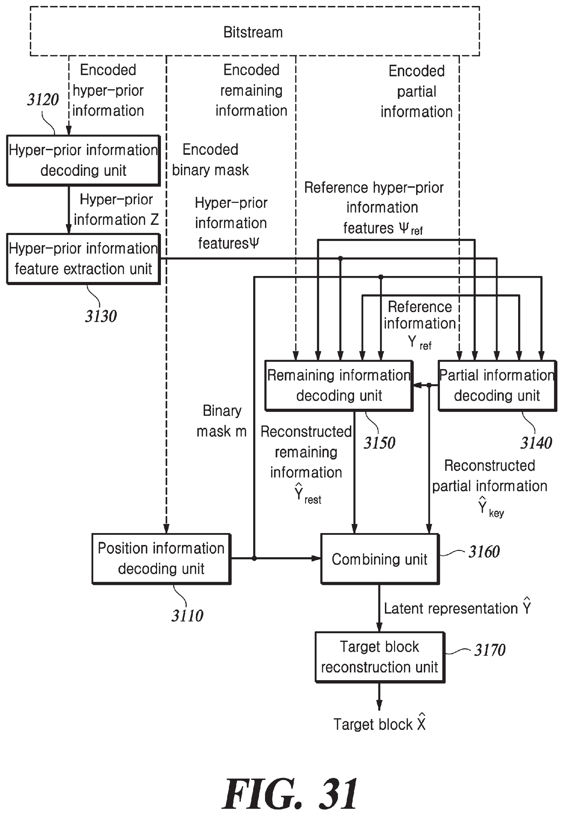

FIG. 31 illustrates a decoding apparatus for decoding a target block in the latent representation space according to one embodiment of the present disclosure.

The decoding apparatus may include a position information decoding unit 3110, a partial information decoding unit 3140, a remaining information decoding unit 3150, a combining unit 3160, and a target block reconstruction unit 3170.

The position information decoding unit 3110 decodes position information indicating the positions of partial information to be decoded first within the latent representation of the target block.

The position information may be information on a binary mask. The position information decoding unit 3110 decodes information on the encoded binary mask and outputs a binary mask mmm in which the positions corresponding to the partial information are set to true, and the positions of the remaining information are set to false.

The partial information decoding unit 3140 generates reconstructed partial information *Ŷ_{key}* by decoding the encoded partial information.

The remaining information decoding unit 3150 may generate reconstructed remaining information *Ŷᵣₑₛₜ* by decoding the encoded remaining information.

The combining unit 3160 generates a latent representation *Ŷ* for the target block by combining the reconstructed partial information and the reconstructed remaining information. In other words, the combining unit generates the reconstructed latent representation for the target block by arranging the reconstructed partial information and the remaining information at their corresponding positions.

The target block reconstruction unit 3170 generates a reconstructed block *X̂* for the target block from the reconstructed latent representation. The target block reconstruction unit 3170 may be implemented as a latent representation reconstruction neural network illustrated in FIG. 10.

Meanwhile, when hyper-prior information is used, the decoding apparatus may further include a hyper-prior information decoding unit 3120 and a hyper-prior information feature extraction unit 3130.

The hyper-prior information decoding unit 3120 decodes the encoded hyper-prior information using a probability model for the hyper-prior information and outputs hyper-prior information *Z*. A probability model independent of the input image may be used as the probability model for the hyper-prior information. For example, range encoding that uses a probability distribution independent of the input image may be used.

The hyper-prior information feature extraction unit 3130 generates hyper-prior information features, which are parameters of the latent representation probability model, using the hyper-prior information output from the hyper-prior information decoding unit 3120. The hyper-prior information feature extraction unit 3130 may be implemented as the hyper-prior information reconstruction neural network illustrated in FIG. 13 or FIG. 28.

In what follows, embodiments of the partial information decoding unit 3140 and the remaining information decoding unit 3150 will be described in detail.

### ■ Partial information decoding unit

The partial information decoding unit 3140 estimates a probability model for decoding the encoded partial information using hyper-prior information features corresponding to the partial information among the hyper-prior information features corresponding to the latent representation of the target block. The partial information is reconstructed by decoding the encoded partial information using the estimated probability model.

Additionally, to more accurately estimate the probability model, at least one of prediction information for the partial information or hyper-prior information features of the reference information may be used.

The partial information decoding unit 3140 may estimate the probability model for the partial information of the latent representation in the same way as the partial information encoding unit 2660 of the encoding apparatus.

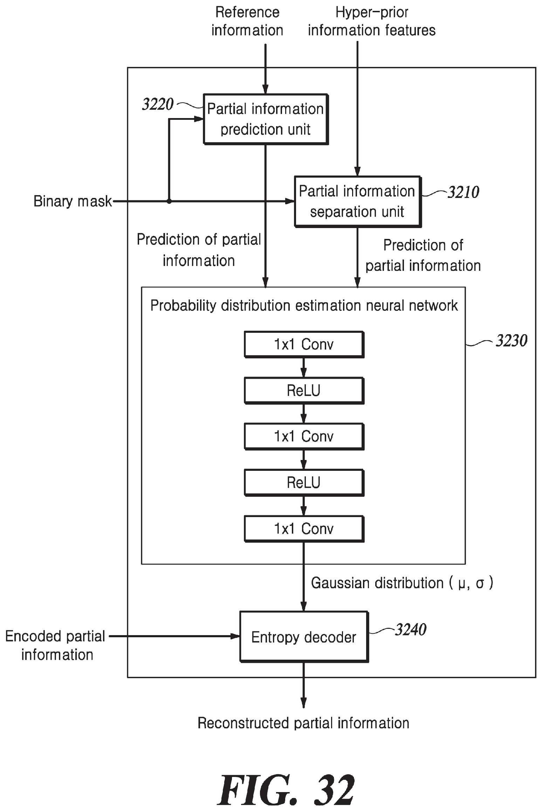

FIG. 32 illustrates a partial information decoding unit according to one embodiment of the present disclosure.

In some embodiments, the partial information decoding unit 3140 may include a partial information separation unit 3210 and an entropy decoder 3240.

The partial information separation unit 3210 extracts hyper-prior information features corresponding to the partial information from among the hyper-prior information features for the latent representation of the target block using the binary mask output from the position information decoding unit 3110.

The entropy decoder 3240 performs entropy decoding on the encoded partial information using a probability model based on the hyper-prior information features for the partial information and generates reconstructed partial information.

In another embodiment, the partial information decoding unit 3140 may additionally use at least one of prediction information for the partial information or hyper-prior information features of the reference information to improve the accuracy of probability model estimation. To this end, the partial information decoding unit 3140 may further include a partial information prediction unit 3220 and a probability distribution estimation neural network 3230.

Since the partial information prediction unit 3220 and the probability distribution estimation neural network 3230 are identical to the partial information prediction unit 2910 and the probability distribution estimation neural network 2920 of the encoding apparatus, further description is omitted to avoid redundancy.

The entropy decoder 3240 performs entropy decoding of the encoded partial information using the probability model estimated by the probability distribution estimation neural network 3230.

### ■ Remaining information decoding unit

The remaining information decoding unit 3150 estimates a probability model for decoding the remaining information using hyper-prior information features corresponding to the remaining information among the hyper-prior information features corresponding to the latent representation of the target block. The remaining information is decoded using the probability model.

Additionally, to more accurately estimate the probability model, at least one of prediction information for the remaining information or hyper-prior information features of the reference information may be used.

The remaining information decoding unit 3150 may estimate the probability model for the remaining information in the same manner as the remaining information encoding unit 2670 of the encoding apparatus.

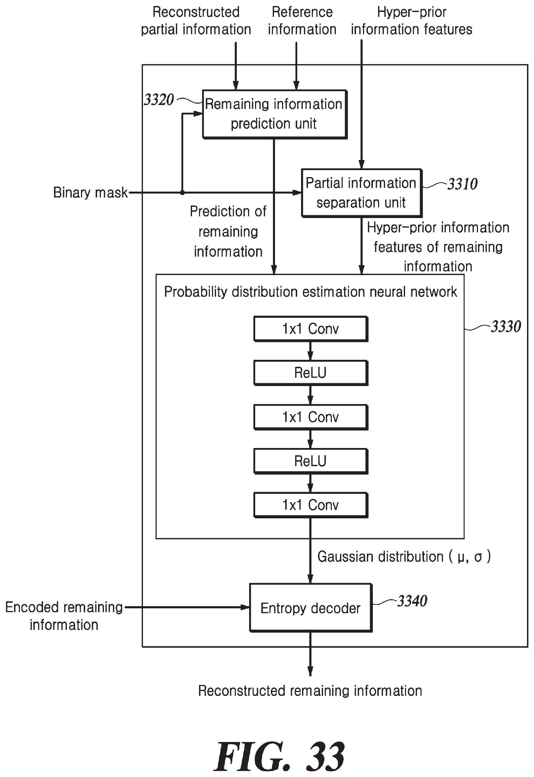

FIG. 33 illustrates a remaining information decoding unit according to one embodiment of the present disclosure.

In some embodiments, the remaining information decoding unit 3150 may include a partial information separation unit 3310 and an entropy decoder 3340.

The partial information separation unit 3310 extracts hyper-prior information features corresponding to the remaining information from among the hyper-prior information features for the latent representation of the target block using the binary mask output from the position information decoding unit 3110.

The entropy decoder 3340 performs entropy decoding on the encoded remaining information using a probability model based on the hyper-prior information features for the remaining information and generates the reconstructed remaining information accordingly.

In another embodiment, the remaining information decoding unit 3150 may additionally use at least one of prediction information for the partial information or hyper-prior information features of the reference information to improve the accuracy of probability model estimation. To this end, the remaining information decoding unit 3150 may further include a remaining information prediction unit 3320 and a probability distribution estimation neural network 3330.

Since the remaining information prediction unit 3320 and the probability distribution estimation neural network 3330 are identical to the remaining information prediction unit 3010 and the probability distribution estimation neural network 3020 of the encoding apparatus, further description is omitted to avoid redundancy.

The entropy decoder 3340 performs entropy decoding of the encoded remaining information using the probability model estimated by the probability distribution estimation neural network 3330.

In what follows, as one embodiment, an image encoding method and an image decoding method are disclosed.

In the following embodiment, the "partial information" and the "remaining information" of the target block or latent representation of the target block described above are referred to as the "partial region" and the "remaining region," respectively.

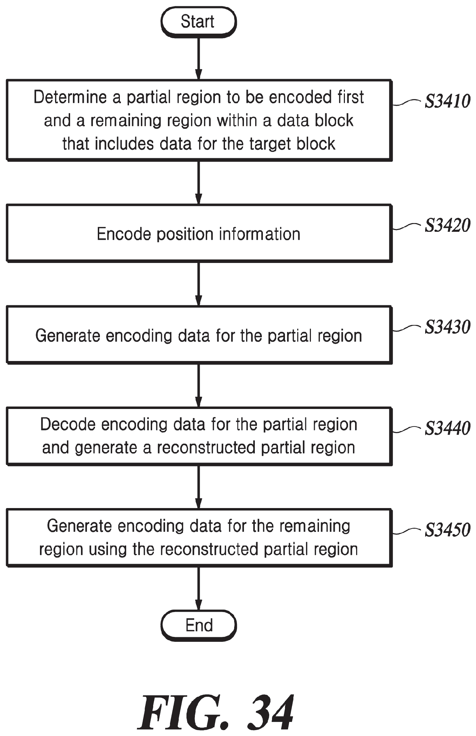

FIG. 34 is a flowchart illustrating an image encoding method performed by the encoding apparatus according to one embodiment of the present disclosure.

The encoding apparatus determines a partial region to be encoded first within a data block that includes data for the target block and generates position information for identifying the partial region and the remaining region S3410. The position information may be encoded and signaled to the decoding apparatus S3420.

The data block may be a block composed of samples that constitute the target block in the image space. Alternatively, the data block may be a block that defines the latent representation of the target block generated through a latent representation transformation neural network.

The encoding apparatus may partition the data block into a plurality of sub-blocks and determine sub-blocks belonging to the partial region and sub-blocks belonging to the remaining region among the sub-blocks of the data block.

As described above, the position information may be represented as a binary mask in which the partial region and the remaining region are expressed with different values.

The encoding apparatus may predefine patterns of binary masks and determine a binary mask to be applied to the data block from among the predefined patterns. In this case, the position information may be index information indicating one of the predefined patterns.

Alternatively, the encoding apparatus may flatten the sub-blocks of the data block to generate a flattened vector and input the flattened vector into a transformer neural network to generate the binary mask. Since the generation of the binary mask using the transformer neural network has been described in detail with reference to FIG. 19, further description will be omitted.

The encoding apparatus encodes the partial region to generate encoded data for the partial region S3430. The partial region may be quantized before encoding.

In addition, the encoding apparatus reconstructs the partial region S3440 and encodes the remaining region using the reconstructed partial region S3450.

As one embodiment, when the data block is a block in the image space, the partial region and the remaining region may be encoded using the processes performed by the partial information encoding unit 1530 and the remaining information encoding unit 1540 of FIG. 15, respectively.

For example, the encoding apparatus may encode the partial region itself without involving prediction.

In another example, the encoding apparatus may perform predictive encoding of the partial region. As already described with reference to FIG. 21, the encoding apparatus may input a previously reconstructed region around the data block into a mask autoencoder to generate prediction signals for the data block and extract prediction signals corresponding to the partial region from the prediction signals of the data block based on the position information.

The encoding apparatus may generate residual signals for the partial region based on prediction signals for the partial region and encode the residual signals.

The encoding apparatus may reconstruct the encoded residual signals and add the reconstructed residual signals to the prediction signals to reconstruct the partial region.

Once the partial region is reconstructed, the encoding apparatus may input the reconstructed partial region into a mask autoencoder to generate prediction signals for the remaining region. Then, the encoding apparatus may generate and encode residual signals for the remaining region based on the prediction signals for the remaining region.

In another embodiment, when the data block is a block in the latent representation space, the partial region and the remaining region may be encoded using the processes performed by the partial information encoding unit 2660 and the remaining information encoding unit 2670 of FIG. 26, respectively.

For example, as described with reference to FIG. 29, the encoding apparatus may estimate a probability model for the partial region based on hyper-prior information features for the partial region, which are extracted from the hyper-prior information features of the data block. Then, the encoding apparatus may generate encoded data for the partial region by encoding the partial region using the estimated probability model. The partial region may be quantized prior to encoding.

Prediction signals for the partial region may be used to estimate the probability model for the partial region. For example, the encoding apparatus may input a previously reconstructed region around the data block into a mask autoencoder to generate prediction signals for the partial region. Then, the encoding apparatus may input the generated prediction signals and the hyper-prior information features for the partial region into a probability distribution estimation neural network to estimate the probability model for the partial region.

Also, as described with reference to FIG. 30, the encoding apparatus may estimate a probability model for the remaining region based on hyper-prior information features for the remaining region, which are extracted from the hyper-prior information features of the data block. Then, the encoding apparatus may generate encoded data for the remaining region by encoding the remaining region using the estimated probability model. The remaining region may be quantized prior to encoding.

Prediction signals for the remaining region may be used to estimate the probability model for the remaining region.

For example, the encoding apparatus may input the reconstructed partial region into a mask autoencoder to generate prediction signals for the remaining region. Reference information may additionally be input into the mask autoencoder to generate prediction signals for the remaining region.

The encoding apparatus may input the prediction signals for the remaining region and the hyper-prior information features for the remaining region into a probability distribution estimation neural network to estimate a probability model for the remaining region.

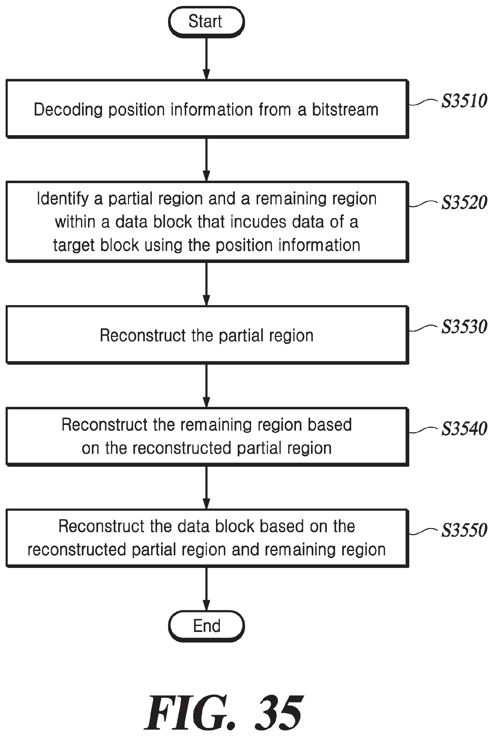

FIG. 35 is a flowchart illustrating an image decoding method performed by the decoding apparatus according to one embodiment of the present disclosure.

The decoding apparatus decodes position information from a bitstream received from the encoding apparatus S3510 and may identify partial information and remaining information within the data block using the position information S3520.

Similar to the encoding apparatus, the decoding apparatus may partition the data block into a plurality of sub-blocks and determine sub-blocks belonging to the partial region and sub-blocks belonging to the remaining region among the sub-blocks of the data block using the position information.

The decoding apparatus reconstructs the partial region identified by the position information S3530. Then, the remaining region is reconstructed using the reconstructed partial region S3540.

The decoding apparatus may reconstruct the data block using the reconstructed partial region and the reconstructed remaining region.

When the data block is a block in the image space, the partial region and the remaining region may be reconstructed using the processes performed by the partial information decoding unit 2520 and the remaining information decoding unit 2530 of FIG. 25, respectively.

When the data block is a block in the latent representation space, the partial region and the remaining region may be reconstructed using the processes performed by the partial information decoding unit 3140 and the remaining information decoding unit 3150 of FIG. 31, respectively.

Since the processes performed by the partial information decoding unit 3140 and the remaining information decoding unit 3150 have been described with reference to FIGS. 32 and 33, further description is omitted.

In embodiments, the methods may be described based on a flowchart including a series of steps or units. The method is not limited to the order in which the steps are described, and some steps may be performed in an order different from that of description or may be performed simultaneously with other steps. Further, the steps described in the flowchart or the like may not be exclusive. Additional steps may be interposed between the steps described in the flowchart or the like. One or more of the steps described in the flowchart or the like may be deleted or skipped.

Embodiments may include examples in various aspects. Although not all possible combinations for indicating various aspects can be described, those skilled in the art will recognize that additional combinations other than the explicitly described combinations are possible. Therefore, it may be appreciated that the present disclosure includes all other replacements, changes, and modifications belonging to the accompanying claims.

The above-described embodiments according to the present disclosure may be implemented as a program instruction that can be executed through various computer components and may be recorded on a computer-readable storage medium.

The computer-readable storage medium may include a non-transitory computer-readable recording medium. Examples of the computer-readable storage medium include all types of hardware devices specially configured to record and execute program instructions, such as magnetic media, such as a hard disk, a floppy disk, and magnetic tape, optical media, such as compact disk (CD)-ROM and a digital versatile disk (DVD), magneto-optical media, such as a floptical disk, ROM, RAM, and flash memory. The hardware devices may be configured to operate as one or more software modules in order to perform the operation of the present disclosure, and vice versa.

The computer-readable storage medium may include program instructions, data files, and data structures, either solely or in combination. The program instructions recorded on the computer-readable storage medium may be specifically designed and configured for embodiments, or may be disclosed and available to those skilled in computer software fields.

Program instructions may include machine code, such as that generated by a compiler, and may include high-level language code that can be executed by a computer using interpreters or the like. The program instructions may be designated as computer-executable code or program. In embodiments, the program instructions, computer-executable code, and the program may be used interchangeably with each other.

The computer-readable storage medium may include information used in embodiments. For example, the computer-readable storage medium may include a bitstream, and the bitstream may include the information described in the embodiments. The Information described in embodiments may include syntax elements. The information such as the syntax elements, described in embodiments, may be understood to be computer-executable code from the aspect that the encoding apparatus and the decoding apparatus run the code to perform specific processing.

The bitstream may include the computer-executable code. The computer-executable code may include pieces of information described in embodiments, such as syntax elements. In other words, the pieces of information such as syntax elements, described in embodiments, may be regarded as computer-executable code in the bitstream or part of the computer-executable code.

As described above, although the present disclosure has been described based on specific details such as detailed components and a limited number of embodiments and drawings, those are merely provided for easy understanding of the entire disclosure, the present disclosure is not limited to those embodiments, and those skilled in the art will practice various changes and modifications from the above description.

Accordingly, it should be noted that the spirit of the present embodiments is not limited to the above-described embodiments, and the accompanying claims and equivalents and modifications thereof fall within the scope of the present disclosure.

### CROSS-REFERENCE TO RELATED APPLICATION

This application claims the benefit of Korean Patent Application No. 10-2024-0003869 filed on January 9, 2024, which is hereby incorporated by reference in their entireties into this application.

## Claims

1. An image decoding method comprising:
decoding position information from a bitstream to identify a partial region to be decoded first within a data block that includes data for a target block and a remaining region excluding the partial region;
reconstructing the partial region identified by the position information;
reconstructing the remaining region using the reconstructed partial region; and
generating a reconstructed block for the data block using the reconstructed partial region and the reconstructed remaining region.

2. The method of claim 1, wherein the identifying of the partial region and the remaining region includes:
partitioning the data block into sub-blocks of a predefined size; and
classifying the sub-blocks of the data block into sub-blocks belonging to the partial region and sub-blocks belonging to the remaining region using the position information,
wherein the position information is information defining a binary mask in which different values are assigned to the sub-blocks belonging to the partial region and the sub-blocks belonging to the remaining region.

3. The method of claim 1, wherein the data block is a block composed of samples in the image space for the target block.

4. The method of claim 3, wherein the reconstructing the partial region includes:
reconstructing residual signals for the partial region from the bitstream;
generating prediction signals for the partial region by inputting previously reconstructed regions around the data block into a prediction neural network, wherein the prediction neural network is a neural network trained to predict an image at masked locations using a partially masked image as input; and
reconstructing the partial region using the residual signals for the partial region and the prediction signals for the partial region.

5. The method of claim 4, wherein the reconstructing the remaining region includes:
reconstructing residual signals for the remaining region from the bitstream;
generating prediction signals for the remaining region by inputting the reconstructed partial region into the prediction neural network; and
reconstructing the remaining region based on the residual signals for the remaining region and prediction signals for the remaining region.

6. The method of claim 5, wherein the prediction signals for the remaining region are generated by inputting the reconstructed partial region and a previously reconstructed region around the data block into the prediction neural network.

7. The method of claim 1, wherein the data block is a block defining latent representation of the target block.

8. The method of claim 7, further including:
decoding hyper-prior information for the data block from the bitstream; and
obtaining hyper-prior information features for the data block by inputting the hyper-prior information into a hyper-prior information reconstruction neural network, wherein the hyper-prior information features are information related to probability parameters of a probability model for the data block.

9. The method of claim 8, wherein the reconstructing the partial region includes:
extracting hyper-prior information features corresponding to the partial region from hyper-prior information features for latent representation of the target block using the position information;
estimating a probability model for the partial region based on the hyper-prior information features corresponding to the partial region; and
reconstructing latent representation for the partial region by decoding encoding data for the partial region included in the bitstream based on the probability model for the partial region.

10. The method of claim 9, wherein the estimating of the probability model for the partial region includes:
generating prediction signals for the partial region by inputting a previously reconstructed region around the data block into a prediction neural network, wherein the prediction neural network is a neural network trained to predict an image at masked locations using a partially masked image as input; and
estimating a probability model for the partial region by inputting the prediction signals for the partial region and the hyper-prior information features corresponding to the partial region into a probability distribution estimation neural network.

11. The method of claim 9, wherein the reconstructing the remaining region includes:
extracting hyper-prior information features corresponding to the remaining region from hyper-prior information features for the data block using the position information;
generating prediction signals for the remaining region by inputting the reconstructed partial region into a prediction neural network, wherein the prediction neural network is a neural network trained to predict an image at masked locations using a partially masked image as input;
estimating a probability model for the remaining region by inputting the prediction signals for the remaining region and the hyper-prior information features corresponding to the remaining region into a probability distribution estimation neural network; and
reconstructing the remaining region by decoding encoded data for the remaining region included in the bitstream based on the probability model for the remaining region.

12. The method of claim 11, wherein the prediction signals for the remaining region are generated by inputting the reconstructed partial region and a previously reconstructed region around the data block into the prediction neural network.

13. An image encoding method comprising:
determining a partial region to be encoded first within a data block that includes data for a target block and a remaining region excluding the partial region;
encoding position information indicating positions of the partial region and the remaining region;
encoding the partial region to generate encoded data for the partial region; and
reconstructing the partial region and encoding the remaining region using the reconstructed partial region.

14. A method for providing image data to an image decoding apparatus, the method comprising:
generating a bitstream by encoding a target block; and
transmitting the bitstream to the image decoding apparatus,
wherein the generating of the bitstream comprises:
determining a partial region to be encoded first within a data block that includes data for the target block and a remaining region excluding the partial region;
encoding position information for representing positions of the partial region and the remaining region;
encoding the partial region to generate encoding data for the partial region; and
reconstructing a partial region and encoding the remaining region using the reconstructed partial region.
